# EUROPEAN PATENT SPECIFICATION

(11) **EP 0 699 390 B1**
(45) Date of publication and mention of the grant of the patent: **07.10.1998**
(21) Application number: 95305972.2
(22) Date of filing: 25.08.1995
(51) Int. Cl.: A01N 57/02, A01N 43/90, A01N 43/84, A01N 43/80, A01N 43/76, A01N 37/18, A01N 57/18

(54) **Compositions containing phosphosulfonate herbicides and dichloroacetamide safeners, and method of use**
Zusammensetzungen aus Phosphosulphonat-Herbizide und Dichloracetamide-Safener und Verwendungsmethoden
Compositions des herbicides de phosphosulfonate et dichloracétamides comme agents de protection; méthode d'utilisation

(30) Priority: 30.08.1994 US 298529; 20.07.1995 US 504621
(43) Date of publication of application: 06.03.1996
(73) Proprietor: ROHM AND HAAS COMPANY, Philadelphia, Pennsylvania 19106-2399 (US)
(72) Inventor: Fisher, James Delbert, Lansdale, Pennsylvania 19446 (US); Burdge, Ernest Leroy, Pennsburg, Pennsylvania 18073 (US); Musco, Vincent Angelo, Jr., Southampton, Pennsylvania 18966 (US); Spangler, Lori Ann, Churchville, Pennsylvania 18966 (US)
(74) Representative: Tanner, James Percival

(56) References cited:
- EP-A- 0 304 409
- EP-A- 0 524 394
- US-A- 4 137 070
- US-A- 5 272 128

## Description

The present invention is concerned with herbicidal compositions comprising herbicidal phosphosulfonates and dichloroacetamide safeners and the use of these compositions as herbicides.

Typical compositions containing chemical weed control agents enable more efficient crop production by minimization of competing plant growth. New chemical means of controlling such unwanted vegetation are desirable to obtain better control of various agronomically important weeds, for better crop safety and to overcome herbicide resistance.

The herbicidal compounds of the compositions of this invention provide control of many weed species, particularly grassy weeds. Although they may be used before or after the plant has emerged from the soil, they are especially effective when used to control growth of unwanted plants before the plants emerge from the soil.

The herbicidal phosphosulfonate compounds of these compositions primarily interfere with critical life processes in the germinating seed or seedling either causing plant death before growth above the soil or severely retarding growth of the plant so that the weed seedling does not compete with the growing crop. However, a common problem with highly active herbicidal compounds is one of selectivity to certain crops. Selectivity refers to the ability of a herbicide to retard the growth of or kill weed species without damaging crop plants. Retardation of weed growth may only be necessary for a time sufficiently long for the desired crop to become dominant. Effective control of weeds, especially monocot weeds such as Green Foxtail (*Setaria viridis*), Barnyardgrass (*Echinochloa crus-galli*), Blackgrass (*Alopecurus myosuroides*), Canarygrass (*Phalaris minor*), Bermudagrass (*Cynodon dactylon*), Johnsongrass (*Sorghum halepense*), Ryegrass (*Lolium multiflorum*), Signalgrass (*Brachiaria platyphylla*), Sprangletop (*Leptochloa dubia*) and Crabgrass (*Digitaria sanguinalis*), and dicot weeds such as Velvetleaf (*Abutilon theophrasti*), Beggarweed (*Desmodium tortuosom*), Hairy Beggarticks (*Bidens pilosa*), Curly Dock (*Rumex crispus*), Pineappleweed (*Matricaria matricarioides*), Pigweed (*Amaranthus retroflexus*), Teaweed (*Sida spinosa*) and Speedwell (*Veronica officinalis*) can be difficult to accomplish without injury to the desired crop, especially a monocot crop such as corn (*Zea mays*), sorghum (*Sorghum* spp.), rice (*Oryza sativa*), wheat (*Triticum* spp.), barley (*Hardeum sativum*) and the like and dicot crops such as soybean (*Glycine max*), cotton (*Gossypium* spp.) and the like.

It has been found that the herbicidal compositions of this invention comprising one or more phosphosulfonate herbicides, a dichloroacetamide safener and an agronomically acceptable carrier avoid this problem of providing effective weed control while simultaneously providing complete safety to the desired crop. The herbicidal compositions may be applied to the desired crop or to the locus where the desired crop is to be grown either after the emergence of the undesired weed vegetation or, preferably, before the emergence of the undesired weed vegetation. Thus, the compositions of this invention control the growth of weeds while generally not injuring crops. The herbicidal compositions of this invention also may be applied to the desired crop seed as an alternate treatment utility whereby the safener is first applied to the seed followed by preemergence application of the herbicide.

According to the present invention there is provided a herbicidal composition, which comprises:-
(i) one or more phosphosulfonate herbicides having the general formula 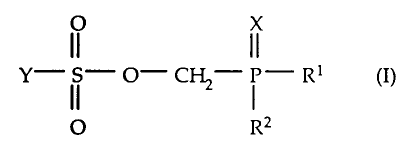 wherein
   (1) Y is selected from phenyl; naphthyl; benzyl; (C₅-C₈)cycloalkyl; a 5-membered heteroaromatic ring having 1,2,3, or 4 heteroatoms independently selected from the group consisting of nitrogen, oxygen and sulfur atoms provided no more than one heteroatom is oxygen or sulfur; a 6-membered heteroaromatic ring having 1,2 or 3 nitrogen atoms; a fused 5,6-membered heteroaromatic ring having 1-4 heteroatoms independently selected from the group consisting of nitrogen, oxygen and sulfur atoms provided no more than one heteroatom is oxygen or sulfur; or a fused 6,6-membered heteroaromatic ring having 1-4 heteroatoms independently selected from the group consisting of nitrogen, oxygen and sulfur atoms provided no more than one heteroatom is oxygen or sulfur;
      wherein each of said Y may be substituted with up to three substituents each independently selected from halo, cyano, nitro, alkoxy, haloalkoxy, alkyl, haloalkyl, phenyl, alkylcarbonyloxy, dialkylcarbamoyl, alkylthio, haloalkylthio, arylthio, aryloxy, formyl, alkylcarbonyl, arylcarbonyl, dialkylamino, methoxymethyl, methylthiomethyl and alkoxycarbonyl, provided
      (a) there is at most one of said substituents on said Y when Y is a thiadiazolyl ring or a tetrazolyl ring,
      (b) there is at most two of said substituents when Y is a triazolyl ring, a thiazolyl ring, or an isothiazolyl ring, and
      (c) when Y is phenyl, naphthyl or benzyl, there can be one to five of said previously described substituents;
   (2) X is an oxygen or a sulfur atom; and
   (3) R¹ and R² are each independently selected from alkyl, alkoxy, alkylthio, alkenyloxy, alkynyloxy, haloalkoxy, cyanoalkoxy, alkoxyalkoxy, cycloalkyloxy, cycloalkylalkoxy, alkylideneiminooxy, chloro and amino with one or two substituents selected from the group consisting of alkyl, alkenyl and phenyl; provided that there is no more than one phenyl group on the amino group; and provided that R¹ may be selected additionally from phenyl or phenoxy; and provided when R¹ and R² are both alkoxy, R¹ and R² can together with the phosphorus atom form a 6-membered oxygen-containing ring; and provided that when R¹ and R² are both alkoxy, Y is not phenyl, 4-methylphenyl, 4-chlorophenyl, 4-bromophenyl or 3-nitrophenyl;
(ii) a dichloroacetamide safener having the general formula 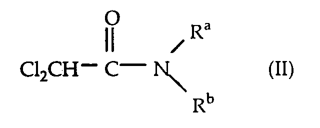 wherein
   R^{a} and R^{b} are each independently selected from alkyl, alkenyl, or alkyl or alkenyl substituted with halo, or R^{a} and R^{b} together with the nitrogen atom to which they are attached form a 5- or 6-membered substituted heterocyclic ring selected from the group consisting of 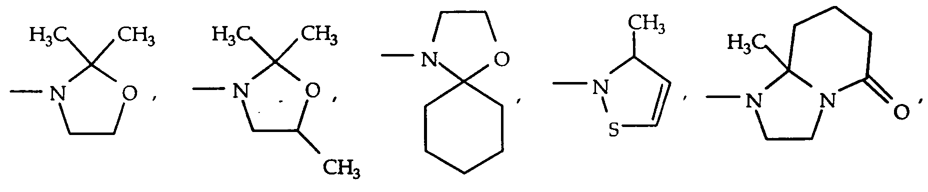 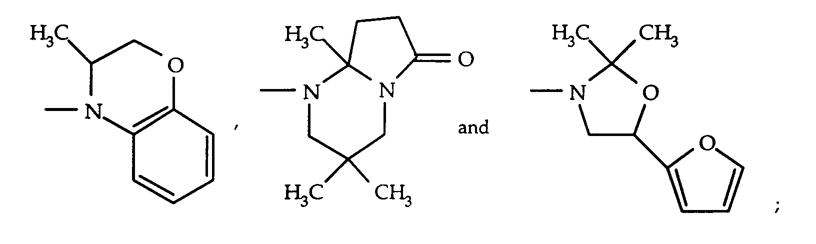
   and (iii) an agronomically acceptable carrier.

In the compositions of the present invention, the phosphosulfonate herbicide(s) may, for example, be present in an amount of from 10 to 40% by wt, the safener may, for example, be present in an amount of from 5 to 10% by wt, and the carrier may, for example, be present in an amount of from 50 to 85% by wt.

The present invention also provides a method of controlling unwanted plants, which comprises: applying to the seed, plant or growth medium therefor a composition according to the invention.

The present invention further provides a method for controlling unwanted plants, which comprises: applying to the seed particles a composition comprising a safener as defined herein and an agronomically acceptable carrier; and pre-emergence application to the growth medium for the plants a composition comprising one or more phosphosulfonate herbicides as defined herein and an agronomically acceptable carrier.

As used to describe the present invention, the term "alkyl", whether alone or as part of another group, refers to a straight or branched chain alkyl. Examples of alkyl include (without limiting) methyl, ethyl, *n*-propyl, isopropyl, *n*-butyl, *sec*-butyl, isobutyl, *tert*-butyl, *n*-pentyl, isopentyl, neopentyl, hexyl, isohexyl, *sec*-hexyl, 2,2-dimethylbutyl and 2,3-dimethylbutyl; and, as further illustration, examples of alkoxy include methoxy, ethoxy, *n*-propoxy, isopropoxy, *n*-butoxy, *sec*-butoxy, isobutoxy, *tert*-butoxy, isopentoxy, *n*-pentoxy, neopentoxy, hexyloxy, isohexyloxy, *sec*-hexyloxy, 2,2-dimethylbutoxy and 2,3-dimethylbutoxy. "Haloalkyl" and "haloalkoxy" refer to an alkyl and alkoxy group, respectively, substituted with from one to five halogen atoms, preferably from one to three halogen atoms, preferably fluorine or chlorine atoms. Examples of haloalkyl and haloalkoxy include (without limiting) trifluoromethyl, difluoromethoxy, 2,2,2-trifluoroethoxy, 2-chloroethoxy, difluoromethyl, 2,2,2-trifluoroethyl, 3,3,3-trifluoropropyl, pentafluoroethyl and trifluoromethoxy. "Halo" includes fluoro, chloro, bromo and iodo. "Alkylthio" refers to an alkyl group attached to a sulfur atom. Examples include methylthio, ethylthio; *n*-propylthio, isopropylthio, *n*-butylthio, *sec*-butylthio, isobutylthio, *t*-butylthio. "Haloalkylthio" refers to an alkylthiogroup substituted with from one to five halogen atoms, preferably fluorine or chlorine atoms. Examples include trifluoromethylthio, difluoromethylthio, 2,2,2-trifluoroethylthio, 2-chloroethylthio, and pentafluoroethylthio. "Arylthio" and "aryloxy" mean an aromatic ring attached to a sulfur or oxygen respectively. Examples include phenylthio and phenyloxy. "Alkylcarbonyl" refers to a carbonyl group attached to an alkyl radical. Examples include methylcarbonyl, ethylcarbonyl, *n*-propylcarbonyl and isopropylcarbonyl. "Dialkylamino" refers to a nitrogen atom with two alkyl substituents, which may be the same or different. Examples include dimethylamino, diethylamino and methylethylamino. "Alkenyl" and "alkynyl", whether alone or as part of another group, refer to straight and branched chain alkenyl and alkynyl, respectively. Examples of alkenyl and alkynyl include (without limiting) allyl, propargyl and 1-methylpropargyl; and, as further illustration, examples of alkenyloxy and alkynyloxy include (without limiting) allyloxy, propargyloxy and 1-methylpropargyloxy. "Alkylideneiminooxy" refers to an alkyl group double bonded to nitrogen which is in turn bonded to oxygen. An example of alkylideneiminooxy is isopropylideneiminooxy. "Cycloalkyl", whether alone or as part of another group, refers to a monocyclic non-aromatic carbocyclic ring. Examples of cycloalkyl include (without limiting) cyclobutyl, cyclopentyl and cyclohexyl. Examples of heteroaromatic rings include (without limiting) thienyl, isoxazolyl, pyrazolyl, triazolyl, quinolinyl, imidazolopyridinyl, pyrimidinyl, benzothiadiazolyl, thiazolyl, pyridyl (alternatively termed " pyridinyl" and includes, but is not limited to, pyridinyl oxides) and thiadiazolyl.

In one embodiment of the present invention Y may be substituted with up to three substituents each independently selected from halo, cyano, nitro, (C₁-C₆)alkoxy, halo(C₁-C₄)alkoxy, (C₁-C₆)alkyl, halo(C₁-C₄)alkyl, phenyl, (C₁-C₄)alkylcarbonyloxy, di(C₁-C₄)alkylcarbamoyl, (C₁-C₆)alkylthio, halo(C₁-C₄)alkylthio, arylthio, aryloxy, formyl, (C₁-C₄)alkylcarbonyl, arylcarbonyl, di(C₁-C₄)alkylamino, methoxymethyl, methylthiomethyl and (C₁-C₄)alkoxycarbonyl;
R¹ and R² are each independently selected from (C₁-C₆)alkyl, (C₁-C₆)alkoxy, halo(C₂-C₄)alkoxy, (C₁-C₄)alkylthio, (C₃-C₄)alkenyloxy, (C₃-C₄)alkynyloxy, (C₁-C₄)alkoxy(C₁-C₄)alkoxy, (C₄-C₈)cycloalkyloxy, (C₃-C₆)cycloalkyl(C₁-C₃)alkoxy, cyano(C₁-C₄)alkoxy, (C₂-C₄)alkylideneiminooxy, chloro, and amino substituted with one or two substituents selected from (C₁-C₄)alkyl, (C₂-C₄)alkenyl and phenyl provided there is not more than one phenyl group on the amino group; and provided that R¹ may additionally be selected from phenyl or phenoxy; and provided that when R¹ and R² are both alkoxy, R¹ and ² may together with the phosphorous atom form a 6-membered oxygen-containing ring; and
R^{a} and R^{b} are each independently selected from (C₂-C₄)alkyl, (C₃-C₄)alkenyl, (C₂-C₄)alkyl or (C₃-C₄)alkenyl substituted with halo or R^{a} and R^{b} together with the nitrogen atom to which they are attached form the 5-membered heterocyclic moiety

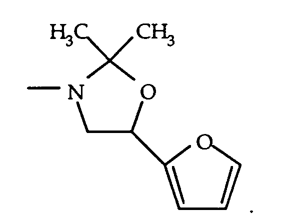

Preferably, in this embodiment:-
(A) Y is phenyl having up to three substituents, one of which is at the ortho position, independently selected from halo, cyano, nitro, (C₁-C₆)alkoxy, halo(C₁-C₄)alkoxy, (C₁-C₆)alkyl, halo(C₁-C₄)alkyl, phenyl, (C₁-C₄)alkylcarbonyloxy, di(C₁-C₄)alkylcarbamoyl, (C₁-C₆)alkylthio, halo(C₁-C₄)alkylthio, arylthio, aryloxy, formyl, (C₁-C₄)alkylcarbonyl, arylcarbonyl, di(C₁-C₄)alkylamino and (C₁-C₄)alkoxycarbonyl;
   X is an oxygen atom;
   R¹ and R² are each independently selected from (C₁-C₂)alkyl and (C₁-C₄)alkoxy; provided R¹ and R² are not both alkyl; and
   R^{a} and R^{b} are each independently selected from ethyl, *n*-propyl, allyl, or ethyl, *n*-propyl or allyl substituted with chloro, or R^{a} and R^{b} together with the nitrogen atom to which they are attached form the 5-membered heterocyclic moiety 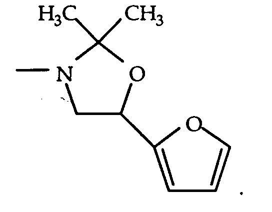
(B) Y is phenyl, monosubstituted in its ortho position, said substituent being independently selected from chloro, bromo, ethyl, ethoxy,*n*-propoxy, trifluoromethyl, pentafluoroethyl, methylthio, ethylthio, and trifluoromethylthio;
   X is an oxygen atom;
   R¹ is selected from methoxy, ethoxy, isopropyloxy, methyl and ethyl;
   R² is selected from ethoxy and isopropyloxy; and
   R^{a} and R^{b} are each independently allyl, 3,3-dichloroallyl, or R^{a} and R^{b} together with the nitrogen atom to which they are attached form the 5-membered heterocyclic moiety 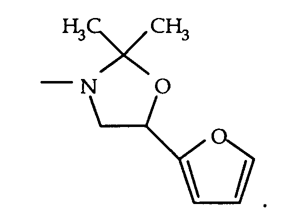
(C) Y is phenyl substituted in its ortho position, the substituent being independently selected from chloro, bromo, trifluoromethoxy, trifluoromethylthio, methylthio, ethylthio and trifluoromethyl; and has a second substituent in its second ortho position selected from chloro, bromo, methyl, ethyl, isopropyl, methoxy, ethoxy, trifluoromethyl, difluoromethyl, difluoromethoxy, trifluoromethylthio, methylthio, ethylthio, pentafluoroethyl, fluoro, and trifluoromethoxy;
   X is an oxygen atom;
   R¹ is selected from methoxy, ethoxy, isopropyloxy, methyl and ethyl;
   R² is selected from ethoxy and isopropyloxy; and
   R^{a} and R^{b} are each independently allyl, 3,3-dichloroallyl, or R^{a} and R^{b} together with the nitrogen atom to which they are attached form the 5-membered heterocyclic moiety 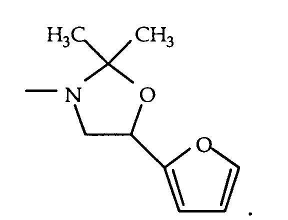
(D) Y is phenyl substituted with fluoro, chloro or bromo at the two ortho positions and with methyl or ethyl at the meta position;
   X is an oxygen atom;
   R¹ is selected from methoxy, ethoxy, isopropyloxy, methyl and ethyl;
   R² is selected from ethoxy and isopropyloxy; and
   R^{a} and R^{b} are each independently allyl, 3,3-dichloroallyl, or R^{a} and R^{b} together with the nitrogen atom to which they are attached form the 5-membered heterocyclic moiety 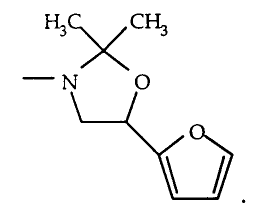
(E) Y is 2-chlorophenyl, 2-bromophenyl, 2,5-dichlorophenyl, 2,6-dichlorophenyl, 2-trifluoromethylphenyl, 2-chloro-6-isopropylphenyl, 2-chloro-6-methylphenyl, 2-methyl-6-trifluoromethylphenyl, 2-methoxy-6-trifluoromethylphenyl, 2-trifluoromethoxyphenyl, 2-methylthiophenyl, 2-ethylthiophenyl, 2-trifluoromethylthiophenyl, 2-trifluoromethyl-6-fluorophenyl, 2-trifluoromethyl-6-ethylphenyl, 2-trifluoromethyl-4-fluorophenyl, 2-trifluoromethyl-6-ethoxyphenyl, 2,5-difluorophenyl, 2-trifluoromethoxy-6-fluorophenyl, 2-trifluoromethyl-6-methylthiophenyl, 2-trifluoromethyl-6-ethylthiophenyl, 2-trifluoromethylthio-4-fluorophenyl, 2-trifluoromethylthio-6-methylphenyl, 2-trifluoromethylthio-6-chlorophenyl, 2-trifluoromethylthio-6-ethylphenyl, 2-trifluoromethylthio-6-fluorophenyl, 2-methyl-6-methylthiophenyl, 2-ethyl-6-methylthiophenyl, 2-fluoro-6-methylthiophenyl, 2-methyl-6-ethylthiophenyl, 2-ethyl-6-ethylthiophenyl, 2-chloro-6-methylthiophenyl, 2-fluoro-6-ethylthiophenyl, 2-methyl-3,6-difluorophenyl, 2,4,6-trifluorophenyl, 2,6-dichloro-3-methylphenyl, 2-pentafluoroethylphenyl, 2-trifluoromethoxy-6-ethylphenyl, 2-fluoro-6-methylthiophenyl, 2-chloro-6-ethylthiophenyl, 2-fluoro-6-ethylthiophenyl, 2-fluoro-6-ethylphenyl, or 2-ethyl-3, 6-difluorophenyl;
   X is an oxygen atom;
   R¹ is selected from methoxy, ethoxy, isopropyloxy, methyl and ethyl;
   R² is selected from ethoxy and isopropyloxy; and
   R^{a} and R^{b} are each independently allyl, 3,3-dichloroallyl, or R^{a} and R^{b} together with the nitrogen atom to which they are attached form the 5-membered heterocyclic moiety 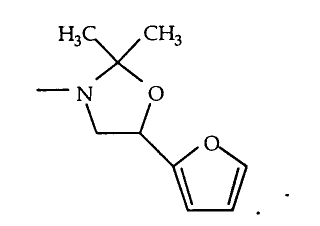
(F) Y is a 5-membered unsubstituted or substituted heterocyclic substituent selected from thienyl, pyrazolyl, isoxazolyl, triazolyl, tetrazolyl, thiazolyl, isothiazolyl, pyrrolyl, thiadiazolyl, pyrimidinyl, and imidazolyl; and
   R^{a} and R^{b} are each independently selected from ethyl, *n*-propyl, allyl, or ethyl, *n*-propyl or allyl substituted with chloro, or R^{a} and R^{b} together with the nitrogen atom to which they are attached form the 5-membered heterocyclic moiety 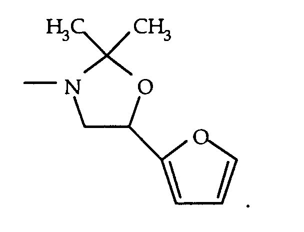
   or
(G) Y is a fused 5,6-membered heteroaromatic substituent selected from indolyl, imidazolpyridinyl, benzoimidazolyl, benzothienyl, benzothiazolyl, benzothiadiazolyl, benzotriazolyl, benzoxazolyl, and pyrazolopyrimidinyl; and
   R^{a} and R^{b} are each independently selected from ethyl, *n*-propyl, allyl, or ethyl, *n*-propyl or allyl substituted with chloro, or R^{a} and R^{b} together with the nitrogen atom to which they are attached form the 5-membered heterocyclic moiety

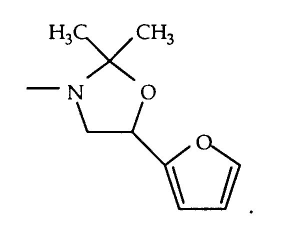

In the preferred embodiment (E) above, the composition preferably comprises one or more of the herbicidal compounds selected from
O-isopropyl P-ethyl[[(2-chloro-6-methylphenyl)sulfonyloxy]methyl]phosphinate;
O-isopropyl P-methyl[[(2-chloro-6-methylphenyl)sulfonyloxy]methyl]phosphinate;
O,O-diisopropyl [[(2-chloro-6-methylphenyl)sulfonyloxy]methyl]phosphonate;
O-isopropyl O-ethyl [[(2-chloro-6-methylphenyl)sulfonyloxy]methyl]phosphonate;
O-isopropyl O-methyl [[(2-chloro-6-methylphenyl)sulfonyloxy]methyl]phosphonate;
O-ethyl P-ethyl[[(2-chloro-6-methylphenyl)sulfonyloxy]methyl]phosphinate;
O-ethyl P-methyl[[(2-chloro-6-methylphenyl)sulfonyloxy]methyl]phosphinate;
O-diethyl [[(2-chloro-6-methylphenyl)sulfonyloxy]methyl]phosphonate;
O-ethyl O-methyl [[(2-chloro-6-methylphenyl)sulfonyloxy]methyl]phosphonate;
O-isopropyl P-ethyl[[(2-chloro-6-isopropylphenyl)sulfonyloxy]methyl]phosphinate;
O-isopropyl P-methyl[[(2-chloro-6-isopropylphenyl)sulfonyloxy]methyl]phosphinate;
O-isopropyl O-ethyl[[(2-chloro-6-isopropylphenyl)sulfonyloxy]methyl]phosphonate;
O-isopropyl O-methyl[[(2-chloro-6-isopropylphenyl)sulfonyloxy]methyl]phosphonate;
O,O-diethyl [[(2-chloro-6-isopropylphenyl)sulfonyloxy]methyl]phosphonate;
O,O-diisopropyl[[(2-chloro-6-isopropylphenyl)sulfonyloxy]methyl]phosphonate;
O-ethyl P-methyl-[[(2-chloro-6-isopropylphenyl)sulfonyloxy]methyl]phosphinate;
O-isopropyl P-ethyl[[(2-chlorophenyl)sulfonyloxy]methyl]phosphinate;
O-isopropyl P-methyl[[(2-chlorophenyl)sulfonyloxy]methyl]phosphinate;
O-isopropyl O-ethyl [[(2-chlorophenyl)sulfonyloxy]methyl]phosphonate;
O-isopropyl O-methyl [[(2-chlorophenyl)sulfonyloxy]methyl]phosphonate;
O,O-diethyl [[(2-chlorophenyl)sulfonyloxy]methyl]phosphonate;
O,O-diisopropyl [[(2-chlorophenyl)sulfonyloxy]methyl]phosphonate;
O-isopropyl P-ethyl[[(2-(trifluoromethyl)phenyl)sulfonyloxy]methyl]phosphinate;
O-isopropyl P-methyl[[(2-(trifluoromethyl)phenyl)sulfonyloxy]methyl]phosphinate;
O-isopropyl O-ethyl [[(2-(trifluoromethyl)phenyl)sulfonyloxy]methyl]phosphonate;
O-isopropyl O-methyl[[(2-(trifluoromethyl)phenyl)sulfonyloxy]methyl]phosphonate;
O,O-diethyl[[(2-(trifluoromethyl)phenyl)sulfonyloxy]methyl]phosphonate;
O,O-diisopropyl [[(2-(trifluoromethyl)phenyl)sulfonyloxy]-methyl]phosphonate;
O-isopropyl P-ethyl[[(2-(trifluoromethyl)-6-methylphenyl)sulfonyloxy]methyl]phosphinate;
O-isopropyl P-methyl[[(2-(trifluoromethyl)-6-methylphenyl)sulfonyloxy]methyl]phosphinate;
O-isopropyl O-ethyl [[(2-(trifluoromethyl)-6-methylphenyl)sulfonyloxy]methyl]phosphonate;
O-isopropyl O-methyl [[(2-(trifluoromethyl)-6-methylphenyl)sulfonyloxy]methyl]phosphonate;
O-isopropyl P-ethyl[[(2-methoxy-6-(trifluoromethyl)phenyl)sulfonyloxy]methyl]phosphinate;
O,O-diisopropyl [[(2-methoxy-6-(trifluoromethyl)phenyl)sulfonyloxy]methyl]phosphonate;
O-isopropyl O-methyl[[(2-(trifluoromethyl)-6-ethylphenyl)sulfonyloxy]methyl]phosphonate;
O-isopropyl P-methyl[[(2-methoxy-6-(trifluoromethyl)phenyl)sulfonyloxy]methyl]phosphinate;
O-isopropyl O-ethyl [[(2-methoxy-6-(trifluoromethyl)phenyl)sulfonyloxy]methyl]phosphonate;
O-isopropyl O-methyl [[(2-methoxy-6-(trifluoromethyl)phenyl)sulfonyloxy]methyl]phosphonate;
O-isopropyl P-ethyl[[(2,6-dichlorophenyl)sulfonyloxy]methyl]phosphinate;
O-isopropyl P-methyl[[(2,6-dichlorophenyl)sulfonyloxy]methyl]phosphinate;
O,O-diisopropyl [[(2,6-dichlorophenyl)sulfonyloxy]methyl]phosphonate;
O-isopropyl O-ethyl [[(2,6-dichlorophenyl)sulfonyloxy]methyllphosphonate;
O-isopropyl O-methyl[[(2,6-dichlorophenyl)sulfonyloxy]methyl]phosphonate;
O,O-diethyl [[(2,6-dichlorophenyl)sulfonyloxy]methyl]phosphonate;
O,O-diethyl [[(2,5-dichlorophenyl)sulfonyloxy]methyl]phosphonate;
O,O-diisopropyl [[(2,5-dichlorophenyl)sulfonyloxy]methyl]phosphonate;
O-isopropyl P-ethyl[[(2,5-dichlorophenyl)sulfonyloxy]methyl]phosphinate;
O-isopropyl P-methyl[[(2,5-dichlorophenyl)sulfonyloxy]methyl]phosphinate;
O-isopropyl O-ethyl[[(2,5-dichlorophenyl)sulfonyloxy]methyl]phosphonate;
O-isopropyl O-methyl[[(2,5-dichlorophenyl)sulfonyloxy]methyl]phosphonate;
O,O-diethyl [[(2-methyl-6-(trifluoromethyl)phenyl)sulfonyloxy]methyl]phosphonate;
O,O-diisopropyl [[(2-methyl-6-(trifluoromethyl)phenyl)sulfonyloxy]methyl]phosphonate;
O,O-diethyl [[(2-(trifluoromethyl)-6-methoxyphenyl)sulfonyloxy]methyl]phosphonate;
O-isopropyl P-methyl [[(2-(trifluoromethyl)-6-ethylphenyl)sulfonyloxy]methyl]phosphinate;
O-isopropyl P-ethyl [[(2-(trifluoromethyl)-6-ethylphenyl)sulfonyloxy]methyl]phosphinate;
O-isopropyl O-ethyl [[(2-(trifluoromethyl)-6-ethylphenyl)sulfonyloxy]methyl]phosphonate;
O,O-diisopropyl [[(2-(trifluoromethyl)-6-ethylphenyl)sulfonyloxy]methyl]phosphonate;
O,O-diethyl [[(2-(trifluoromethyl)-6-ethylphenyl)sulfonyloxy]methyl]phosphonate;
O-isopropyl P-methyl [[(2-(trifluoromethyl)-6-ethoxyphenyl)sulfonyloxy]methyl]phosphinate;
O-isopropyl P-ethyl [[(2-(trifluoromethyl)-6-ethoxyphenyl)sulfonyloxy]methyl]phosphinate;
O-isopropyl O-ethyl [[(2-(trifluoromethyl)-6-ethoxyphenyl)sulfonyloxy]methyl]phosphonate;
O,O-diisopropyl [[(2-(trifluoromethyl)-6-ethoxyphenyl)sulfonyloxy]methyl]phosphonate;
O,O-diethyl [[(2-(trifluoromethyl)-6-ethoxyphenyl)sulfonyloxy]methyl]phosphonate;
O-isopropyl O-methyl [[(2-(trifluoromethyl)-6-ethoxyphenyl)sulfonyloxy]methyl]phosphonate;
O-isopropyl P-methyl [[(2-(trifluoromethyl)-6-fluorophenyl)sulfonyloxy]methyl]phosphinate;
O-isopropyl P-ethyl [[(2-(trifluoromethyl)-6-fluorophenyl)sulfonyloxy]methyl]phosphinate;
O-isopropyl O-ethyl [[(2-(trifluoromethyl)-6-fluorophenyl)sulfonyloxy]methyl]phosphonate;
O,O-diisopropyl [[(2-(trifluoromethyl)-6-fluorophenyl)sulfonyloxy]methyl]phosphonate;
O,O-diethyl [[(2-(trifluoromethyl)-6-fluorophenyl)sulfonyloxy]methyl]phosphonate;
O-isopropyl O-methyl [[(2-(trifluoromethyl)-6-fluorophenyl)sulfonyloxy]methyl]phosphonate;
O-isopropyl P-methyl [[(2-trifluoromethoxyphenyl)sulfonyloxy]methyl]phosphinate;
O-isopropyl P-ethyl [[(2-trifluoromethoxyphenyl)sulfonyloxy]methyl]phosphinate;
O-isopropyl O-ethyl [[(2-trifluoromethoxyphenyl)sulfonyloxy]methyl]phosphonate;
O,O-diisopropyl [[(2-trifluoromethoxyphenyl)sulfonyloxy]methyl]phosphonate;
O,O-diethyl [[(2-trifluoromethoxyphenyl)sulfonyloxy]methyl]phosphonate;
O-isopropyl O-methyl [[(2-trifluoromethoxyphenyl)sulfonyloxy]methyl]phosphonate;
O-isopropyl P-methyl [[(2-(pentafluoroethyl)phenyl)sulfonyloxy]methyl]phosphinate;
O-isopropyl P-ethyl [[(2-(pentafluoroethyl)phenyl)sulfonyloxy]methyl]phosphinate;
O-isopropyl O-ethyl [[(2-(pentafluoroethyl)phenyl)sulfonyloxy]methyl]phosphonate;
O,O-diisopropyl [[(2-(pentafluoroethyl)phenyl)sulfonyloxy]methyl]phosphonate;
O,O-diethyl[[(2-(pentafluoroethyl)phenyl)sulfonyloxy]methyl]phosphonate;
O-isopropyl O-methyl [[(2-(pentafluoroethyl)phenyl)sulfonyloxy]methyl]phosphonate;
O-isopropyl P-methyl [[(2-methylthiophenyl)sulfonyloxy]methyl]phosphinate;
O-isopropyl P-ethyl [[(2-methylthiophenyl)sulfonyloxy]methyl]phosphinate;
O-isopropyl O-ethyl [[(2-methylthiophenyl)sulfonyloxy] methyl]phosphonate;
O,O-diisopropyl [[(2-methylthiophenyl)sulfonyloxy]methyl]phosphonate;
O,O-diethyl [[(2-methylthiophenyl)sulfonyloxy]methyl]phosphonate;
O-isopropyl O-methyl [[(2-methylthiophenyl)sulfonyloxy]methyl]phosphonate;
O-isopropyl P-methyl [[(2-ethylthiophenyl)sulfonyloxy]methyl]phosphinate;
O-isopropyl P-ethyl [[(2-ethylthiophenyl)sulfonyloxy]methyl]phosphinate;
O-isopropyl O-ethyl [[(2-ethylthiophenyl)sulfonyloxy]methyl]phosphonate;
O,O-diisopropyl [[(2-ethylthiophenyl)sulfonyloxy]methyl]phosphonate;
O,O-diethyl (2-ethylthiophenyl)sulfonyloxy]methyl]phosphonate;
O-isopropyl O-methyl [[(2-ethylthiophenyl)sulfonyloxy]methyl]phosphonate;
O-isopropyl P-methyl [[(2-trifluoromethylthiophenyl)sulfonyloxy]methyl]phosphinate;
O-isopropyl P-ethyl [[(2-trifluoromethylthiophenyl)sulfonyloxy]methyl]phosphinate;
O-isopropyl O-ethyl [[(2-trifluoromethylthiophenyl)sulfonyloxy]methyl]phosphonate;
O,O-diisopropyl [[(2-trifluoromethylthiophenyl)sulfonyloxy]methyl]phosphonate;
O,O-diethyl [[(2-trifluoromethylthiophenyl)sulfonyloxy]methyl]phosphonate;
O-isopropyl O-methyl [[(2-trifluoromethylthiophenyl)sulfonyloxy]methyl]phosphonate;
O-isopropyl P-methyl [[(2,5-difluorophenyl)sulfonyloxy]methyl]phosphinate;
O-isopropyl P-ethyl [[(2,5-difluorophenyl)sulfonyloxy]methyl]phosphinate;
O-isopropyl O-ethyl [[(2,5-difluorophenyl)sulfonyloxy]methyl]phosphonate;
O,O-diisopropyl [[(2,5-difluorophenyl)sulfonyloxy]methyl]phosphonate;
O,O-diethyl [[(2,5-difluorophenyl)sulfonyloxy]methyl]phosphonate;
O-isopropyl O-methyl [[(2,5-difluorophenyl)sulfonyloxy]methyl]phosphonate;
O-isopropyl P-methyl [[(2-(trifluoromethoxy)-6-fluorophenyl)sulfonyloxy]methyl]phosphinate;
O-isopropyl P-ethyl [[(2-(trifluoromethoxy)-6-fluorophenyl)sulfonyloxy]methyl]phosphinate;
O-isopropyl O-ethyl [[(2-(trifluoromethoxy)-6-fluorophenyl)sulfonyloxy]methyl]phosphonate;
O,O-diisopropyl[[(2-(trifluoromethoxy)-6-fluorophenyl)sulfonyloxy]methyl]phosphonate;
O,O-diethyl [[(2-(trifluoromethoxy)-6-fluorophenyl)sulfonyloxy]methyl]phosphonate;
O-isopropyl O-methyl [[(2-(trifluoromethoxy)-6-fluorophenyl)sulfonyloxy]methyl]phosphonate;
O-isopropyl P-methyl [[(2-(trifluoromethoxy)-6-ethylphenyl)sulfonyloxy]methyl]phosphinate;
O-isopropyl P-ethyl [[(2-(trifluoromethoxy)-6-ethylphenyl)sulfonyloxy]methyl]phosphinate;
O-isopropyl O-ethyl [[(2-(trifluoromethoxy)-6-ethylphenyl)sulfonyloxy]methyl]phosphonate;
O,O-diisopropyl [[(2-(trifluoromethoxy)-6-ethylphenyl)sulfonyloxy]methyl]phosphonate;
O,O-diethyl [[(2-(trifluoromethoxy)-6-ethylphenyl)sulfonyloxy]methyl]phosphonate;
O-isopropyl O-methyl [[(2-(trifluoromethoxy)-6-ethylphenyl)sulfonyloxy]methyl]phosphonate;
O-isopropyl P-methyl [[(2-(trifluoromethyl)-6-methylthiophenyl)sulfonyloxy]methyl]phosphinate;
O-isopropyl P-ethyl [[(2-(trifluoromethyl)-6-methylthiophenyl)sulfonyloxy]methyl]phosphinate;
O-isopropyl O-ethyl [[(2-(trifluoromethyl)-6-methylthiophenyl)sulfonyloxy]methyl]phosphonate;
O,O-diisopropyl [[(2-(trifluoromethyl)-6-methylthiophenyl)sulfonyloxy]methyl]phosphonate;
O,O-diethyl [[(2-(trifluoromethyl)-6-methylthiophenyl)sulfonyloxy]methyl]phosphonate;
O-isopropyl O-methyl [[(2-(trifluoromethyl)-6-methylthiophenyl)sulfonyloxy]methyl]phosphonate;
O-isopropyl P-methyl [[(2-(trifluoromethyl)-6-ethylthiophenyl)sulfonyloxy]methyl]phosphinate;
O-isopropyl P-ethyl [[(2-(trifluoromethyl)-6-ethylthiophenyl)sulfonyloxy]methyl]phosphinate;
O-isopropyl O-ethyl [[(2-(trifluoromethyl)-6-ethylthiophenyl)sulfonyloxy]methyl]phosphonate;
O,O-diisopropyl [[(2-(trifluoromethyl)-6-ethylthiophenyl)sulfonyloxy]methyl]phosphonate;
O,O-diethyl [[(2-(trifluoromethyl)-6-ethylthiophenyl)sulfonyloxy]methyl]phosphonate;
O-isopropyl O-methyl [[(2-(trifluoromethyl)-6-ethylthiophenyl)sulfonyloxy]methyl]phosphonate;
O-isopropyl P-methyl [[(2-(trifluoromethylthio)-4-fluorophenyl)sulfonyloxy]methyl]phosphinate;
O-isopropyl P-ethyl [[(2-(trifluoromethylthio)-4-fluorophenyl)sulfonyloxy]methyl]phosphinate;
O-isopropyl O-ethyl [[(2-(trifluoromethylthio)-4-fluorophenyl)sulfonyloxy]methyl]phosphonate;
O,O-diisopropyl [[(2-(trifluoromethylthio)-4-fluorophenyl)sulfonyloxy]methyl]phosphonate;
O,O-diethyl [[(2-(trifluoromethylthio)-4-fluorophenyl)sulfonyloxy]methy]phosphonate;
O-isopropyl O-methyl [[(2-(trifluoromethylthio)-4-fluorophenyl)sulfonyloxy]methyl]phosphonate;
O-isopropyl P-methyl [[(2-(trifluoromethylthio)-6-ethylphenyl)sulfonyloxy]methyl]phosphinate;
O-isopropyl P-ethyl [[(2-(trifluoromethylthio)-6-ethylphenyl)sulfonyloxy]methyl]phosphinate;
O-isopropyl O-ethyl [[(2-(trifluoromethylthio)-6-ethylphenyl)sulfonyloxy]methyl]phosphonate;
O,O-diisopropyl [[(2-(trifluoromethylthio)-6-ethylphenyl)sulfonyloxy]methyl]phosphonate;
O,O-diethyl [[(2-(trifluoromethylthio)-6-ethylphenyl)sulfonyloxy]methyl]phosphonate;
O-isopropyl O-methyl [[(2-(trifluoromethylthio)-6-ethylphenyl)sulfonyloxy]methyl]phosphonate;
O-isopropyl P-methyl [[(2-(trifluoromethylthio)-6-methylphenyl)sulfonyloxy]methyl]phosphinate;
O-isopropyl P-ethyl [[(2-(trifluoromethylthio)-6-methylphenyl)sulfonyloxy]methyl]phosphinate;
O-isopropyl O-ethyl [[(2-(trifluoromethylthio)-6-methylphenyl)sulfonyloxy]methyl]phosphonate;
O,O-diisopropyl [[(2-(trifluoromethylthio)-6-methylphenyl)sulfonyloxy]methyl]phosphonate;
O,O-diethyl [[(2-(trifluoromethylthio)-6-methylphenyl)sulfonyloxy]methyl]phosphonate;
O-isopropyl O-methyl [[(2-(trifluoromethylthio)-6-methylphenyl)sulfonyloxy]methyl]phosphonate;
O-isopropyl P-methyl [[(2-(trifluoromethylthio)-6-chlorophenyl)sulfonyloxy]methyl]phosphinate;
O-isopropyl P-ethyl [[(2-(trifluoromethylthio)-6-chlorophenyl)sulfonyloxy]methyl]phosphinate;
O-isopropyl O-ethyl [[(2-(trifluoromethylthio)-6-chlorophenyl)sulfonyloxy]methyl]phosphonate;
O,O-diisopropyl [[(2-(trifluoromethylthio)-6-chlorophenyl)sulfonyloxy]methyl]phosphonate;
O,O-diethyl [[(2-(trifluoromethylthio)-6-chlorophenyl)sulfonyloxy]methyl]phosphonate;
O-isopropyl O-methyl [[(2-(trifluoromethylthio)-6-chlorophenyl)sulfonyloxy]methyl]phosphonate;
O-isopropyl P-methyl [[(2-(trifluoromethyl)-4-fluorophenyl)sulfonyloxy]methyl]phosphinate;
O-isopropyl P-ethyl [[(2-(trifluoromethyl)-4-fluorophenyl)sulfonyloxy]methyl]phosphinate;
O-isopropyl O-ethyl [[(2-(trifluoromethyl)-4-fluorophenyl)sulfonyloxy]methyl]phosphonate;
O,O-diisopropyl [[(2-(trifluoromethyl)-4-fluorophenyl)sulfonyloxy]methyl]phosphonate;
O,O-diethyl [[(2-(trifluoromethyl)-4-fluorophenyl)sulfonyloxy]methy]phosphonate;
O-isopropyl O-methyl [[(2-(trifluoromethyl)4-fluorophenyl)sulfonyloxy]methyl]phosphonate;
O-isopropyl P-methyl [[(2-(trifluoromethylthio)-6-fluorophenyl)sulfonyloxy]methyl]phosphinate;
O-isopropyl P-ethyl [[(2-(trifluoromethylthio)-6-fluorophenyl)sulfonyloxy]methyl]phosphinate;
O-isopropyl O-ethyl [[(2-(trifluoromethylthio)-6-fluorophenyl)sulfonyloxy]methyl]phosphonate;
O,O-diisopropyl [(2-(trifluoromethylthio)-6-fluorophenyl)sulfonyloxy]methyl]phosphonate;
O,O-diethyl [[(2-(trifluoromethylthio)-6-fluorophenyl)sulfonyloxy]methyl]phosphonate;
O-isopropyl O-methyl [[(2-(trifluoromethylthio)-6-fluorophenyl)sulfonyloxy]methyl]phosphonate;
O-isopropyl P-methyl [[(2-methyl-6-methylthiophenyl)sulfonyloxy]methyl]phosphinate;
O-isopropyl P-ethyl [[(2-methyl-6-methylthiophenyl)sulfonyloxy]methyl]phosphinate;
O-isopropyl O-ethyl [[(2-methyl-6-methylthiophenyl)sulfonyloxy]methyl]phosphonate;
O,O-diisopropyl [[(2-methyl-6-methylthiophenyl)sulfonyloxy]methyl]phosphonate;
O,O-diethyl [[(2-methyl-6-methylthiophenyl)sulfonyloxy]methyl]phosphonate;
O-isopropyl O-methyl [[(2-methyl-6-methylthiophenyl)sulfonyloxy]methyl]phosphonate;
O-isopropyl P-methyl [[(2-ethyl-6-methylthiophenyl)sulfonyloxy]methyl]phosphinate;
O-isopropyl P-ethyl [[(2-ethyl-6-methylthiophenyl)sulfonyloxy]methyl]phosphinate;
O-isopropyl O-ethyl [[(2-ethyl-6-methylthiophenyl)sulfonyloxy]methyl]phosphonate;
O,O-diisopropyl [[(2-ethyl-6-methylthiophenyl)sulfonyloxy]methyl]phosphonate;
O,O-diethyl [[(2-ethyl-6-methylthiophenyl)sulfonyloxy]methyl]phosphonate;
O-isopropyl O-methyl [[(2-ethyl-6-methylthiophenyl)sulfonyloxy]methyl]phosphonate;
O-isopropyl P-methyl [[(2-fluoro-6-methylthiophenyl)sulfonyloxy]methyl]phosphinate;
O-isopropyl P-ethyl [[(2-fluoro-6-methylthiophenyl)sulfonyloxy]methyl]phosphinate;
O-isopropyl O-ethyl [[(2-fluoro-6-methylthiophenyl)sulfonyloxy]methyl]phosphonate;
O,O-diisopropyl [[(2-fluoro-6-methylthiophenyl)sulfonyloxy]methyl]phosphonate;
O,O-diethyl [[(2-fluoro-6-methylthiophenyl)sulfonyloxy]methyl]phosphonate;
O-isopropyl O-methyl [[(2-fluoro-6-methylthiophenyl)sulfonyloxy]methyl]phosphonate;
O-isopropyl P-methyl [[(2-methyl-6-ethylthiophenyl)sulfonyloxy]methyl]phosphinate;
O-isopropyl P-ethyl [[(2-methyl-6-ethylthiophenyl)sulfonyloxy]methyl]phosphinate;
O-isopropyl O-ethyl [[(2-methyl-6-ethylthiophenyl)sulfonyloxy]methyl]phosphonate;
O,O-diisopropyl [[(2-methyl-6-ethylthiophenyl)sulfonyloxy]methyl]phosphonate;
O,O-diethyl [[(2-methyl-6-ethylthiophenyl)sulfonyloxy]methyl]phosphonate;
O-isopropyl O-methyl [[(2-methyl-6-ethylthiophenyl)sulfonyloxy]methyl]phosphonate;
O-isopropyl P-methyl [[(2-ethyl-6-ethylthiophenyl)sulfonyloxy]methyl]phosphinate;
O-isopropyl P-ethyl [[(2-ethyl-6-ethylthiophenyl)sulfonyloxy]methyl]phosphinate;
O-isopropyl O-ethyl [[(2-ethyl-6-ethylthiophenyl)sulfonyloxy]methyl]phosphonate;
O,O-diisopropyl [[(2-ethyl-6-ethylthiophenyl)sulfonyloxy]methyl]phosphonate;
O,O-diethyl [[(2-ethyl-6-ethylthiophenyl)sulfonyloxy]methyl]phosphonate;
O-isopropyl O-methyl [[(2-ethyl-6-ethylthiophenyl)sulfonyloxy]methyl]phosphonate;
O-isopropyl P-methyl [[(2-chloro-6-ethylthiophenyl)sulfonyloxy]methyl]phosphinate;
O-isopropyl P-ethyl [[(2-chloro-6-ethylthiophenyl)sulfonyloxy]methyl]phosphinate;
O-isopropyl O-ethyl [[(2-chloro-6-ethylthiophenyl)sulfonyloxy]methyl]phosphonate;
O,O-diisopropyl [[(2-chloro-6-ethylthiophenyl)sulfonyloxy]methyl]phosphonate;
O,O-diethyl [[(2-chloro-6-ethylthiophenyl)sulfonyloxy]methyl]phosphonate;
O-isopropyl O-methyl [[(2-chloro-6-ethylthiophenyl)sulfonyloxy]methyl]phosphonate;
O-isopropyl P-methyl [[(2-fluoro-6-ethylthiophenyl)sulfonyloxy]methyl]phosphinate;
O-isopropyl P-ethyl [[(2-fluoro-6-ethylthiophenyl)sulfonyloxy]methyl]phosphinate;
O-isopropyl O-ethyl [[(2-fluoro-6-ethylthiophenyl)sulfonyloxy]methyl]phosphonate;
O,O-diisopropyl [[(2-fluoro-6-ethylthiophenyl)sulfonyloxy]methyl]phosphonate;
O,O-diethyl [[(2-fluoro-6-ethylthiophenyl)sulfonyloxy]methyl]phosphonate;
O-isopropyl O-methyl [[(2-fluoro-6-ethylthiophenyl)sulfonyloxy]methyl]phosphonate;
O-isopropyl P-methyl [[(2-fluoro-6-ethylphenyl)sulfonyloxy]methyl]phosphinate;
O-isopropyl P-ethyl [[(2-fluoro-6-ethylphenyl)sulfonyloxy]methyl]phosphinate;
O-isopropyl O-ethyl [[(2-fluoro-6-ethylphenyl)sulfonyloxy]methyl]phosphonate;
O,O-diisopropyl [[(2-fluoro-6-ethylphenyl)sulfonyloxy]methyl]phosphonate;
O,O-diethyl [[(2-fluoro-6-ethylphenyl)sulfonyloxy]methyl]phosphonate;
O-isopropyl O-methyl [[(2-fluoro-6-ethylphenyl)sulfonyloxy]methyl]phosphonate;
O-isopropyl P-methyl [[(2-methyl-3,6-difluorophenyl)sulfonyloxy]methyl]phosphinate;
O-isopropyl P-ethyl [[(2-methyl-3,6-difluorophenyl)sulfonyloxy]methyl]phosphinate;
O-isopropyl O-ethyl [[(2-methyl-3,6-difluorophenyl)sulfonyloxy]methyl]phosphonate;
O,O-diisopropyl [[(2-methyl-3,6-difluorophenyl)sulfonyloxy]methyl]phosphonate;
O,O-diethyl [[(2-methyl-3,6-difluorophenyl)sulfonyloxy]methyl]phosphonate;
O-isopropyl O-methyl [[(2-methyl-3,6-difluorophenyl)sulfonyloxy]methyl]phosphonate;
O-isopropyl P-methyl [[(2-ethyl-3,6-difluorophenyl)sulfonyloxy]methyl]phosphinate;
O-isopropyl P-ethyl [[(2-ethyl-3,6-difluorophenyl)sulfonyloxy]methyl]phosphinate;
O-isopropyl O-ethyl [[(2-ethyl-3,6-difluorophenyl)sulfonyloxy]methyl]phosphonate;
O,O-diisopropyl [[(2-ethyl-3,6-difluorophenyl)sulfonyloxy]methyl]phosphonate;
O,O-diethyl [[(2-ethyl-3,6-difluorophenyl)sulfonyloxy]methyl]phosphonate;
O-isopropyl O-ethyl [[(2-methyl-3,6-difluorophenyl)sulfonyloxy]methyl]phosphonate;
O-isopropyl P-methyl [[(2,4,6-trifluorophenyl)sulfonyloxy]methyl]phosphinate;
O-isopropyl P-ethyl [[(2,4,6-trifluorophenyl)sulfonyloxy]methyl]phosphinate;
O-isopropyl O-ethyl [[(2,4,6-trifluorophenyl)sulfonyloxy]methyl]phosphonate;
O,O-diisopropyl [[(2,4,6-trifluorophenyl)sulfonyloxy]methyl]phosphonate;
O,O-diethyl [[(2,4,6-trifluorophenyl)sulfonyloxy]methyl]phosphonate;
O-isopropyl O-methyl [[(2,4,6-trifluorophenyl)sulfonyloxy]methyl]phosphonate; and a safener selected from N,N-diallyldichloroacetamide, N,N-bis(3,3-dichloroallyl)dichloroacetamide and furilazole.

Preferably, in the preferred embodiment (F) above:
(a) Y is selected from pyrimidin-2-yl, pyrimidinyl-4-yl and pyrimidin-5-yl, and R^{a} and R^{b} are each independently allyl, 3,3-dichloroallyl, or R^{a} and R^{b} together with the nitrogen atom to which they are attached form the 5-membered heterocyclic moiety 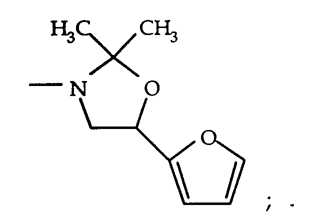 or
(b) Y is 5-chloro-1-methyl-3-(C₁-C₃)alkyl-4-pyrazolyl; R¹ is isopropoxy; R² is methyl, ethyl, methoxy, or ethoxy and preferably R² is methyl or ethyl; and R^{a} and R^{b} are each independently allyl, 3,3-dichloroallyl, or R^{a} and R^{b} together with the nitrogen atom to which they are attached form the 5-membered heterocyclic moiety

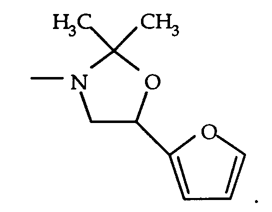

In another embodiment of the present invention Y is selected from phenyl; naphthyl; benzyl; (C₅-C₈)cycloalkyl; a 5-membered heteroaromatic ring having 1, 2, 3, or 4 heteroatoms independently selected from the group consisting of nitrogen, oxygen and sulfur atoms provided no more than one heteroatom is oxygen or sulfur; a 6-membered heteroaromatic ring having 1, 2 or 3 nitrogen atoms; a fused 5,6-membered heteroaromatic ring having 1-4 heteroatoms independently selected from the group consisting of nitrogen, oxygen and sulfur atoms provided no more than one heteroatom is oxygen or sulfur; or a fused 6,6-membered heteroaromatic ring having 1-4 heteroatoms independently selected from the group consisting of nitrogen, oxygen and sulfur atoms provided no more than one heteroatom is oxygen or sulfur;
wherein each of said Y may be substituted with up to three substituents each independently selected from halo, cyano, nitro, alkoxy, haloalkoxy, alkyl, haloalkyl, phenyl, alkylcarbonyloxy, dialkylcarbamoyl and alkoxycarbonyl, provided
(a) there is at most one of said substituents on said Y when Y is a thiadiazolyl ring or a tetrazolyl ring,
(b) there is at most two of said substituents when Y is a triazolyl ring, a thiazolyl ring, or an isothiazolyl ring, and
(c) when Y is phenyl, naphthyl or benzyl, there can be four or five of said substituents selected from halo, acetoxy, methyl, methoxy and halomethoxy but no more than two substituents are selected from acetoxy, methyl, methoxy, and halomethoxy.

In another embodiment of this invention are compositions comprising one or more herbicidal compounds of formula (I), a safener compound of formula (II) and an agronomically acceptable carrier, and the use of those compositions to control weeds, wherein Y is selected from phenyl, naphthyl, benzyl, a (C₅-C₈)cycloalkyl, a 5-membered heteroaromatic ring having 1, 2, 3 or 4 heteroatoms independently selected from the group consisting of nitrogen, oxygen and sulfur atoms provided no more than one heteroatom is oxygen or sulfur, a 6-membered heteroaromatic ring having 1, 2 or 3 nitrogen atoms, a fused 5,6-membered or fused 6,6-membered heteroaromatic ring having 1-4 heteroatoms independently selected from the group consisting of nitrogen, oxygen and sulfur atoms provided no more than one heteroatom is oxygen or sulfur; wherein each Y group may be substituted with up to three substituents each independently selected from halo, cyano, nitro, (C₁-C₆)alkoxy, halo(C₁-C₄)alkoxy, (C₁-C₆)alkyl, halo(C₁-C₄)alkyl, phenyl, (C₁-C₄)alkylcarbonyloxy, di(C₁-C₄)alkylcarbamoyl, (C₁-C₆)alkylthio, halo(C₁-C₄)alkylthio, arylthio, aryloxy, formyl, (C₁-C₄)alkylcarbonyl, arylcarbonyl, di(C₁-C₄)alkylamino, methoxymethyl, methylthiomethyl and (C₁-C₄)alkoxycarbonyl, provided (a) there is at most one substituent on thiadiazolyl or tetrazolyl, (b) that triazolyl, thiazolyl or isothiazolyl can only have at most two substituents, and (c) when Y is phenyl, naphthyl or benzyl, each Y group may be substituted with one to five substituents selected from halo, acetoxy, methyl, methoxy, difluoromethoxy, trifluoromethoxy, ethyl, ethoxy, trifluoromethyl, pentafluoroethyl, methylthio, ethylthio, propylthio, trifluoromethylthio, methoxymethyl and methylthiomethyl;
X is an oxygen or a sulfur atom, preferably an oxygen atom; and
R¹ and R² are each independently selected from (C₁-C₆)alkyl, (C₁-C₆)alkoxy, halo(C₁-C₄)alkoxy, (C₁-C₄)alkylthio, (C₃-C₄)alkenyloxy, (C₃-C₄)alkynyloxy, (C₁-C₄)alkoxy(C₁-C₄)alkoxy, (C₄-C₈)cycloalkyloxy, (C₃-C₆)cycloalkyl(C₁-C₃)alkoxy, cyano(C₁-C₄)alkoxy, (C₂-C₄)alkylideneiminooxy, chloro, and amino substituted with one or two substituents selected from (C₁-C₄)alkyl, (C₂-C₄)alkenyl and phenyl; provided there is not more than one phenyl group on the amino group; and provided that R¹ may additionally be selected from phenyl or phenoxy; and provided that when R¹ and R² are both alkoxy, R¹ and R² can together with the phosphorous atom form a 6-membered oxygen-containing ring; and provided that when R¹ and R² are both alkoxy, Y is not phenyl, 4-methylphenyl, 4-chlorophenyl, 4-bromophenyl or 3-nitrophenyl;
R^{a} and R^{b} are each independently selected from (C₂-C₄)alkyl, (C₃-C₄)alkenyl, or (C₂-C₄)alkyl or (C₃-C₄)alkenyl substituted with halo, or R^{a} and R^{b} together with the nitrogen atom to which they are attached form the 5-membered heterocyclic moiety 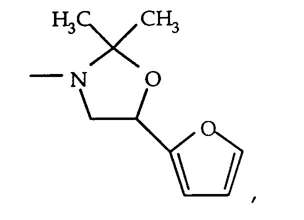 which together with the Cl₂CH(O) moiety forms the compound 3-(dichloroacetyl)-5-(2-furyl)-2,2-dimethyl-1,3-oxazolidine which is also known as furilazole.

Preferred 5-membered heteroaromatic Y substitutents are unsubstituted or substituted thienyl, pyrazolyl, isoxazolyl, triazolyl, tetrazolyl, thiazolyl, isothiazolyl, pyrrolyl, thiadiazolyl, and imidazolyl. Preferred thienyls are 2-thienyl and 3-thienyl. Preferred pyrazolyls are pyrazol-3-yl, pyrazol-4-yl, and pyrazol-5-yl, and more preferred pyrazolyls, when R¹ is isopropoxy and R² is methyl, ethyl, methoxy, or ethoxy, are 5-chloro-1-methyl-3-(C₁-C₃)alkyl-4-pyrazolyls, 5-chloro-1-methyl-3-alkyl-4-pyrazolyls and 1,5-di(C₁-C₃)alkyl-3-trifluoromethyl-4-pyrazolyl. Preferred triazolyls are 1,2,4-triazol-3-yl and 1,2,4-triazol-5-yl, which triazolyls optionally have a dimethylcarbamoyl substituent attached to a nitrogen atom. Preferred tetrazolyls are tetrazol-1-yl and tetrazol-5-yl. Preferred isoxazolyls are isoxazol-4-yl and isoxazol-5-yl. Preferred thiazolyls are thiazol-2-yl, thiazol-4-yl, and thiazol-5-yl. Preferred isothiazolyls are isothiazol-4-yl and isothiazol-5-yl. Preferred pyrrolyls are pyrrol-2-yl and pyrrol-3-yl. A preferred thiadiazolyl is 1,3,4-thiadiazol-2-yl. Preferred imidazolyls are imidazol-2-yl, imidazol-4-yl, and imidazol-5-yl.

Preferred 6-membered heteroaromatic Y substituents are pyridinyl, pyrazinyl, pyridazinyl, and pyrimidinyl. Preferred pyridinyls are pyridin-2-yl and pyridin-3-yl. Other preferred pyridinyls are pyridin-2-yl N-oxide and pyridin-3-yl N-oxide. A preferred pyrazinyl is pyrazin-2-yl. A preferred pyridazinyl is pyridazin-3-yl. Preferred pyrimidinyls are pyrimidin-2-yl, pyrimidin-4-yl, and pyrimidin-5-yl.

Preferred fused 5,6-membered heteroaromatic Y substituents are indolyl, imidazolopyridinyl, pyrazolopyrimidinyl, benzoimidazolyl, benzothienyl, benzothiazolyl, thiadiazolyl, benzotriazolyl, and benzoxazolyl. Preferred indolyls are 1H-indol-2-yl and 1H-indol-3-yl. A preferred imidazolpyridinyl is imidazol[1,2-*a*]-pyridin-3-yl. A preferred pyrazolopyrimidinyl is pyrazolo[1,5-*a*]pyrimidin-3-yl. Preferred benzoimidazolyls are benzoimidazol-2-yl and benzoimidazol-7-yl. Preferred benzothienyls are benzo[*b*]thien-2-yl and benzo[*b*]thien-3-yl. Preferred benzothiazolyls are benzothiazol-2-yl and benzothiazol-7-yl. A preferred benzothiadiazolyl is benzo-2,1,3-thiadiazol-4-yl. A preferred benzotriazolyl is 2H-benzotriazol-4-yl. Preferred benzoxazolyls are benzoxazol-2-yl and benzoxazol-4-yl.

A preferred fused 6,6-membered heteroaromatic Y substituent is quinolinyl.

All of the above preferred 5-membered heteroaromatic Y substituents, preferred 6-membered heteroaromatic Y substituents, preferred fused 5,6-membered heteroaromatic Y substituents, and preferred fused 6,6-membered heteroaromatic Y substituents can be unsubstituted or can be substituted with up to three substituents each independently selected from halo, cyano, nitro, (C₁-C₆)alkoxy, halo(C₁-C₄)alkoxy, (C₁-C₆)alkyl, halo(C₁-C₄)alkyl, phenyl, (C₁-C₄)alkylcarbonyloxy, di(C₁-C₄)alkylcarbamoyl, (C₁-C₆)alkylthio, halo(C₁-C₄)alkylthio, arylthio, aryloxy, formyl, (C₁-C₄)alkylcarbonyl, arylcarbonyl, di(C₁-C₄)alkylamino and (C₁-C₄)alkoxycarbonyl as specified hereinabove for all Y substituents.

In a preferred embodiment of this invention are compositions comprising one or more herbicidal compounds of formula (I), a safener compound of formula (II) and an agronomically acceptable carrier, and the use of those compositions to control weeds, wherein Y is
(a) a substituted group selected from phenyl, 1,2,4-triazol-3-yl, 1,2,4-triazol-5-yl, thien-2-yl (2-thienyl), thien-3-yl (3-thienyl), pyridin-2-yl (2-pyridinyl), pyridin-3-yl (3-pyridinyl), pyrimidin-2-yl (2-pyrimidinyl), pyrimidin-4-yl (4-pyrimidinyl), pyrimidin-5-yl (5-pyrimidinyl), pyrazol-4-yl (4-pyrazolyl), pyrazol-5-yl (5-pyrazolyl), isoxazol-4-yl (4-isoxazolyl), benzo-2,1,3-thiadiazol-4-yl (4-benzo-2,1,3-thiadiazolyl), thiazol-5-yl (5-thiazolyl), and quinolin-8-yl (8-quinolinyl), each Y group having up to three substituents selected from halo, cyano, (C₁-C₄)alkyl, (C₁-C₄)alkoxy, halo(C₁-C₄)alkoxy, halo(C₁-C₄)alkyl, (C₁-C₂)alkylcarbonyloxy, di(C₁-C₃)alkylcarbamoyl, and (C₁-C₃)alkoxycarbonyl; or
(b) substituted phenyl having four or five substituents selected from fluoro, chloro, bromo, methyl, methoxy, difluoromethoxy, trifluoromethoxy, ethyl, ethoxy,n-propoxy, trifluoromethyl, pentafluoroethyl, methylthio, ethylthio, trifluoromethylthio and acetoxy;
   X is an oxygen atom;
   R¹ and R² are each independently (C₁-C₄)alkyl, (C₁-C₄)alkoxy, (C₁-C₂)alkoxy(C₁-C₂)alkoxy, halo(C₁-C₄)alkoxy, (C₃-C₄)alkenyloxy, (C₃-C₄)alkynyloxy, cyano(C₁-C₄)alkoxy and (C₄-C₆)cycloalkoxy; provided R¹ and R² are not both alkyl and that when R¹ and R² are both alkoxy, Y is not phenyl, 4-methylphenyl, 4-chlorophenyl, 4-bromophenyl or 3-nitrophenyl; and
   R^{a} and R^{b} are each independently selected from ethyl, *n*-propyl, allyl, or ethyl, *n*-propyl or allyl substituted with chloro, or R^{a} and R^{b} together with the nitrogen atom to which they are attached form the 5-membered heterocyclic moiety

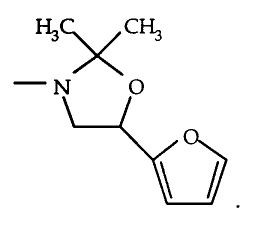

A more preferred embodiment of this invention is where Y is phenyl having up to three substituents, one of which is at the ortho position, independently selected from halo, halo(C₁-C₂)alkyl, (C₁-C₂)alkoxy, halo(C₁-C₂)alkoxy and (C₁-C₄)alkyl provided when there are three substituents no more than two substituents are concurrently alkoxy or alkyl; X is an oxygen atom; and R¹ and R² are each independently selected from (C₁-C₂)alkyl and (C₁-C₃)alkoxy, provided R¹ and R² are not both alkyl; and R^{a} and R^{b} are each independently allyl, 3,3-dichloroallyl, or R^{a} and R^{b} together with the nitrogen atom to which they are attached form the 5-membered heterocyclic moiety

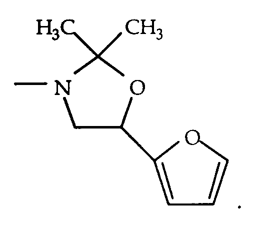

In an even more preferred embodiment of this invention Y is phenyl, monosubstituted in its ortho position, the substituent being independently selected from chloro, bromo, trifluoromethoxy, trifluoromethylthio, methylthio, ethylthio and trifluoromethyl; X is an oxygen atom; R¹ is selected from methoxy, ethoxy, isopropoxy, methyl and ethyl and R² is selected from ethoxy and isopropoxy; and R^{a} and R^{b} are each allyl which together with the Cl₂CH(O) moiety forms the compound N,N-diallyl-2,2-dichloroacetamide which is also known as dichlormid, or R^{a} and R^{b} together with the nitrogen atom to which they are attached form the 5-membered heterocyclic moiety 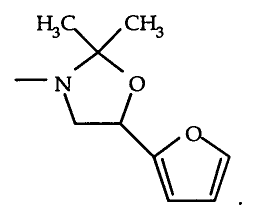 Additionally, Y may have a second substituent in its second ortho position selected from chloro, bromo, methyl, ethyl, isopropyl, methoxy, trifluoromethyl, difluoromethyl, difluoromethoxy, trifluoromethylthio, methylthio, ethylthio, pentafluoroethyl, fluoro, ethoxy and trifluoromethoxy. Further, Y may be trisubstituted with fluoro, chloro or bromo at the two ortho positions and methyl or ethyl at the meta position.

Most preferably, Y is 2-chlorophenyl, 2-bromophenyl, 2,6-dichlorophenyl, 2-trifluoromethylphenyl, 2-chloro-6-isopropylphenyl, 2-chloro-6-methylphenyl, 2-methyl-6-trifluoromethylphenyl, 2-methoxy-6-trifluoromethylphenyl, 2-trifluoromethoxyphenyl, 2-methylthiophenyl, 2-ethylthiophenyl, 2-trifluoromethylthiophenyl, 2-trifluoromethy-6-fluorophenyl, 2-trifluoromethyl-6-ethylphenyl, 2-trifluoromethyl-4-fluorophenyl, 2-trifluoromethyl-6-ethoxyphenyl, 2,5-difluorophenyl, 2-trifluoromethoxy-6-fluorophenyl, 2-trifluoromethyl-6-methylthiophenyl, 2-trifluoromethyl-6-ethylthiophenyl, 2-trifluoromethylthio-4-fluorophenyl, 2-trifluoromethylthio-6-methylphenyl, 2-trifluoromethylthio-6-chlorophenyl, 2-trifluoromethylthio-6-ethylphenyl, 2-trifluoromethylthio-6-fluorophenyl, 2-methyl-6-thiomethylphenyl, 2-ethyl-6-thiomethylphenyl, 2-fluoro-6-methylthiophenyl, 2-methyl-6-thioethylphenyl, 2-ethyl-6-thioethylphenyl, 2-chloro-6-methylthiophenyl, 2-fluoro-6-ethylthiophenyl, 2-methyl-3,6-difluorophenyl, 2,4,6-trifluorophenyl or 2,6-dichloro-3-methylphenyl; X is an oxygen atom; and R¹ is selected from methoxy, ethoxy, isopropoxy, methyl and ethyl and R² is selected from ethoxy and isopropoxy.

The phosphosulfonate herbicides of formula (I) may be prepared using methods taught by US-A-5,272,128. The dichloroacetamide safeners of formula (II) may be prepared from dichloroacetyl chloride and the appropriate amine, for example N,N-diallylamine, in the presence of a suitable base using methods well known to those skilled in the art such as those taught by US-A- 4,137,070 and EP-A- 0 648 768.

The following Examples 1-3 are presented to illustrate some embodiments of the present invention using a phosphosulfonate herbicide (PSH) and a dichloroacetamide safener. The herbicidal test procedure employed is substantially similar to those methods taught by US-A- 5,272,128.

### EXAMPLE 1: PREEMERGENCE CONTROL OF WEEDS AND SAFENING EFFECT USING THE HERBICIDAL COMPOSITION COMPRISING THE HERBICIDE O-ISOPROPYL P-ETHYL[[(2-CHLORO-6-METHYLPHENYL)SULFONYLOXY]METHYL]PHOSPHINATE (PSH 1) THE SAFENER DICHLORMID, AND AN AGRONOMICALLY ACCEPTABLE CARRIER.

| TEST | RATE, G/HA | PERCENT INJURY AFTER 28 DAYS | | | |
|---|---|---|---|---|---|
| | | CRN | FOX | BYG | BLK |
| PSH (1) | 300 | 70 | 100 | 100 | 100 |
| PSH (1) + | 300 | | | | |
| Dichlormid | 4800 | 0 | 100 | 100 | 100 |

### EXAMPLE 2: PREEMERGENCE CONTROL OF WEEDS AND SAFENING EFFECT USING THE HERBICIDAL COMPOSITION COMPRISING THE HERBICIDE O-ISOPROPYL O-METHYL[[(2-METHYL-6-(TRIFLUOROMETHYL)PHENYL)SULFONYLOXY]METHYL]PHOSPHONATE (PSH 2), THE SAFENER FURILAZOLE, AND AN AGRONOMICALLY ACCEPTABLE CARRIER

| TEST | RATE, G/HA | PERCENT INJURY AFTER 21 DAYS | |
|---|---|---|---|
| | | CRN | BYG |
| PSH (2) | 600 | 40 | 100 |
| PSH (2) + | 600 | | |
| Furilazole | 150 | 0 | 100 |

### EXAMPLE 3: PREEMERGENCE CONTROL OF WEEDS AND SAFENING EFFECT USING THE HERBICIDAL COMPOSITION COMPRISING THE HERBICIDE O-ISOPROPYL O-METHYL[[(2-ETHYL-6-(TRIFLUOROMETHYL)PHENYL)SULFONYLOXY]METHYL]PHOSPHONATE (PSH 3) THE SAFENER FURILAZOLE, AND AN AGRONOMICALLY ACCEPTABLE CARRIER.

| TEST | RATE, G/HA | PERCENT INJURY AFTER 21 DAYS | |
|---|---|---|---|
| | | CRN | BYG |
| PSH (3) | 600 | 30 | 100 |
| PSH (3) + | 600 | | |
| Furilazole | 150 | 0 | 100 |

### Footnotes for Examples 1-3:

G/HA = grams/Hectare of substance being tested
CRN = corn (*Zea mays*)
FOX = Green Foxtail (*Setaria viridis*)
BYG = Barnyardgrass (*Echinochloa crus-galli*)
BLK = Blackgrass (*Alopecurus myosuroides*)

The compositions of this invention are active herbicidally on monocot and dicot weeds, in either pre- or postemergence applications, while showing selectivity to the desired crop. In general, lower doses of the composition are required to control monocot weeds as compared to dicot weeds. In particular, several annual grasses, such as *Echinochloa crus-galli, Digitaria sanguinalis* and *Setaria viridis* are especially sensitive. These compositions generally show selectivity to several agronomically important crops such as corn, cotton, rice, soybean, sorghum, peanuts and wheat, most particularly corn. The invention is most effective when formulated in an appropriate carrier, such that the dissolved or dispersed composition is readily applied over the plants or soil in a homogeneous manner.

The invention is also effective when used as a part of a mixture of herbicides formulated in the above manner.

The present composition containing the herbicides and the safener may be applied in any amount which will give the required control of the undesired plants. Generally a rate of application of the herbicide compound(s) in the composition of this invention is from about 10 grams per hectare, to about 8 kilograms per hectare, and preferably from about 100 grams per hectare to about 4 kilograms per hectare. Most preferably a rate from about 200 grams per hectare to about 2 kilograms per hectare is used. In general, the amount of safener to be employed in the composition of this invention is from about 100 grams per hectare to about 8 kilograms per hectare, and preferably from about 200 grams per hectare to about 4 kilograms per hectare.

The compositions of the present invention are useful for both preemergence and postemergence applications. Preemergence compositions may be applied to the soil surface or incorporated into the soil. Postemergence compositions are those which are applied after the plants have emerged and during their growth period. The compositions of the present invention may be applied to the soil surface prior to plant emergence or incorporated into the soil or other growth medium prior to planting. This incorporation can be carried out by any convenient means, including by simply mixing with the soil, by applying the composition to the surface of the soil and then disking or dragging into the soil to the desired depth, or by employing a liquid carrier to accomplish the necessary penetration and impregnation. This invention also contemplates the coating of the seed with the safener component of the present composition prior to planting and subsequent treatment with the herbicidal component of the present composition.

A composition of the present invention can be applied postemergence to the growth medium or to plants to be treated either by itself, or, as is generally done, as a component in a herbicidal composition containing additional compounds or a formulation which also comprises an agronomically acceptable carrier.

By agronomically acceptable carrier is meant any substance which can be used to dissolve, disperse or diffuse a herbicidal compound in the composition without impairing the effectiveness of the herbicidal compound and which by itself has no detrimental effect on the soil, equipment, crops or agronomic environment. Mixtures of the herbicidal compounds of the present invention may also be used in any of these herbicidal formulations. The herbicidal compositions of the invention can be either solid or liquid formulations or solutions. For example, the compositions can be formulated as wettable powders, solutions, emulsifiable concentrates, dusts, granular formulations, aerosols, water dispersable granular formulations or flowable concentrates as is known to one skilled in the art. In such formulations, the herbicidal compounds of the composition are extended with a liquid or solid carrier and, when desired, suitable surfactants or emulsifiers are incorporated.

It is usually desirable, particularly in postemergence applications, to include adjuvants such as wetting agents, spreading agents, dispersing agents, sticking agents, adhesives and the like, in accordance with agricultural practices. Examples of adjuvants which are commonly used in the art can be found in the John W. McCutcheon, Inc. publication "Detergents and Emulsifiers Annual."

The herbicide(s) and safener of this invention may be dissolved in any appropriate solvent. Examples of solvents which are useful in the practice of this invention include water, alcohols, ketones, aromatic hydrocarbons, halogenated hydrocarbons, dimethylformamide, dioxane, dimethyl sulfoxide and the like. Mixtures of these solvents can also be used. The concentration of herbicidal compound in the solution can vary from about 2% to about 98%. For example, a solution of the herbicide(s) wherein the concentration of the herbicide is from 2-98% may be added to a solution of the safener (e.g. in the same solvent as used in forming the herbicide solution) to produce a composition according to the present invention.

The compositions of the present invention can also be mixed with fertilizers or fertilizing materials before their application. In one type of solid fertilizing composition in which the herbicidal compounds and safener in the compositions of the present invention may be used, particles of a fertilizer or fertilizing ingredients, such as ammonium sulfate, ammonium nitrate or ammonium phosphate can be coated with the present composition. Solid compositions of this invention and solid fertilizing material may also be admixed in blending or mixing equipment, or they can be incorporated with fertilizers in granular formulations. Any relative proportion of herbicidal composition and fertilizer can be used which is suitable for the crops and weeds to be treated.

The compositions of the present invention may be applied as herbicidal sprays by methods commonly employed, such as conventional high-gallonage hydraulic sprays, low gallonage sprays, air blast spray, aerial sprays and dusts. For some applications, two or more of the herbicidal compounds of the present invention may be combined in the composition, thereby providing additional advantages and effectiveness. When mixtures of the herbicidal compounds of the invention are used, the relative proportion of each compound used will depend on the relative efficacy of the compounds in the mixture with respect to the plants to be treated.

For some applications, one or more other herbicides may be added to the compositions of the present invention, thereby providing additional advantages and effectiveness. When mixtures of herbicides are employed, the relative proportions which are used will depend upon the relative efficacy of compounds in the mixture with respect to the plants to be treated. Examples of other herbicides which can be combined with those of the present invention include:

### Carboxylic Acids and Derivatives

2,3,6-trichlorobenzoic acid and its salts;
2,3,5,6-tetrachlorobenzoic acid and its salts;
2-methoxy-3,5,6-trichlorobenzoic acid and its salts;
2-methoxy-3,6-dichlorobenzoic acid and its salts;
2-methyl-3,6-dichlorobenzoic acid and its salts;
2,3-dichloro-6-methylbenzoic acid and its salts;
2,4-dichlorophenoxyacetic acid and its salts and esters;
2,4,5-trichlorophenoxyacetic acid and its salts and esters;
2-methyl-4-chlorophenoxyacetic acid and its salts and esters;
2-(2,4,5-trichlorophenoxy)propionic acid and its salts and esters;
4-(2,4-dichlorophenoxy)butyric acid and its salts and esters;
4-(2-methyl-4-chlorophenoxy)butyric acid and its salts and esters;
2,3,6-trichlorophenylacetic acid and its salts;
3,6-endoxohexahydrophthalic acid and its salts;
dimethyl 2,3,5,6-tetrachloroterephthalate;
trichloroacetic acid and its salts;
2,2-dichloropropionic acid and its salts;
2,3-dichloroisobutyric acid and its salts;
isopropylammonium 2-(4-isopropyl-5-methyl-5-oxo-2-imidazolin-2-yl)nicotinate;
2-[4,5-dihydro-4-methyl-4-(1-methylethyl)-5-oxo-1H-imidazol-2-yl]-3-quinolinecarboxylic acid;
*m*-toluic acid, 6-(4-isopropyl-4-methyl-5-oxo-2-imidazolin-2-yl)-, methyl ester and
*p*-toluic acid, 6-(4-isopropyl-4-methyl-5-oxo-2-imidazolin-2-yl)-, methyl ester;
N-(phosphomethyl)glycine isopropylammonium salt;
[3,5,6-trichloro-(2-pyridinyl)oxy]acetic acid;
3,7-dichloro-8-quinolinecarboxylic acid;
ammonium DL-homoalanin-4-yl(methyl)phosphinate.

### Carbamic Acid Derivatives

ethyl N,N-di(*n*-propyl)thiolcarbamate;
*n*-propyl N,N-di(*n*-propyl)thiolcarbamate;
ethyl N-ethyl-N-(*n*-butyl)thiolcarbamate;
*n*-propyl N-ethyl-N-(*n*-butyl)thiolcarbamate;
2-chloroallyl N,N-diethyldithiocarbamate;
isopropyl N-phenylcarbamate;
isopropyl N-(*m*-chlorophenyl)carbamate;
4-chloro-2-butynyl-N-(*m*-chlorophenyl)carbamate;
methyl N-(3,4-dichlorophenyl)carbamate;
dinitro-*o*-(*sec*-butyl)phenol and its salts;
pentachloropehnol and its salts;
S-(4-chlorobenzyl)-N,N-diethylthiolcarbamate.

### Substituted Ureas

2-chloro-N-[(4-methoxy-6-methyl-1,3,5-triazin-2-yl)aminocarbonyl]benzenesulfonamide;
3-(3,4-dichlorophenyl)-1,1-dimethylurea;
3-phenyl-1,1-dimethylurea;
3-(3,4-dichlorophenyl)-3-methoxy-1,1-dimethylurea;
3-(4-chlorophenyl)-3-methoxy-1,1-dimethylurea;
3-(3,4-dichlorophenyl)-1-*n*-butyl-1-methylurea;
3-(3,4-dichlorophenyl)-1-methoxy-1-methylurea;
3-(4-chlorophenyl)-1-methoxy-1-methylurea;
3-(3,4-dichloropheny1)-1,1,3-trimethylurea;
3-(3,4-dichlorophenyl)diethylurea;
dichloral urea;
methyl 2-[[[[(4,6-dimethyl-2-pyrimidinyl)amino]carbonyl]amino]sulfonyl]benzoate;
N-((6-methoxy-4-methyl-1,3,5-triazin-2-yl)aminocarbonyl)-2-(2-chloroethoxy)benzenesulfonamide;
2-[[[(4-chloro-6-methoxypyrimidine-2-yl)aminocarbonyl]amino]sulfonyl]benzoic acid, ethyl ester;
methyl 2-[[[[(4-methoxy-6-methyl-1,3,5-triazin-2-yl)amino]carbonyl]amino]sulfonyl]benzoate;
methyl 3-[[(4-methoxy-6-methyl-1,3,5-triazin-2-yl)aminocarbonyl]aminosulfonyl]-2-thiophenecarboxylate;
methyl 2-[[[[[(4,6-dimethoxypyrimidin-2-yl)amino]carbonyl]amino]sulfonyl]methyl]benzoate;
methyl 2-[[[[(4-methoxy-6-methyl-1,3,5-triazin-2-yl)methylamino]carbonyl]amino]sulfonyl]benzoate.

### Substituted Triazines

2-chloro-4,6-bis(ethylamino)-*s*-triazine;
2-chloro-4-ethylamino-6-isopropylamino-*s*-triazine;
2-chloro-4,6-bis(methoxy-*n*-propylamino)-*s*-triazine;
2-methoxy-4,6-bis(isopropylamino)-*s*-triazine;
2-chloro-4-ethylamino-6-(3-methoxy-*n*-propylamino)-*s*-triazine;
2-methylmercapto-4,6-bis(isopropylamino)-*s*-triazine;
2-methylmercapto-4,6-bis(ethylamino)-2-triazine;
2-methylmercapto-4-ethylamino-6-isopropylamino-*s*-triazine;
2-chloro-4,6-bis(isopropylamino)-*s*-triazine;
2-methoxy-4-ethylamino-6-isopropylamino-*s*-triazine;
2-methylmercapto-4-(2-methoxyethylamino)-6-isopropylamino-*s*-triazine;
4-amino-6-(*tert*-butyl)-3-(methylthio)-1,2,4-triazine-5(4H)-one.

### Diphenyl Ether Derivatives

2,4-dichloro-4'-nitrodiphenyl ether;
2,4,6-trichloro-4'-nitrodiphenyl ether;
2,4-dichloro-6-fluoro-4'-nitrodiphenyl ether;
3-methyl-4'-nitrodiphenyl ether;
3,5-dimethyl-5'-nitrodiphenyl ether;
2,4'-dinitro-4-(trifluoromethyl)diphenyl ether;
2,4-dichloro-3'-methoxy-4'-nitrodiphenyl ether;
sodium 5-(2-chloro-4-(trifluoromethyl)phenoxy)-2-nitrobenzoate;
2-chloro-1-(3-ethoxy-4-nitrophenoxy)-4-(trifluoromethyl)benzene;
1-(carboethoxy)ethyl 5-[2-chloro-4-(trifluoromethyl)-phenoxyl]-2-nitrobenzoate;
5-[2-chloro-4-(trifluoromethyl)phenoxyl]-N-(methylsulphonyl)-2-nitrobenzamide.

### Anilides

2-chloro-N-(2-ethyl-6-methylphenyl)-N-(2-methoxy-1-methylethyl)acetamide;
2-chloro-2',6'-diethyl-N-(2-propyloxyethyl)acetanilide;
N-(3,4-dichlorophenyl)propionamide;
N-(3,4-dichlorophenyl)methacrylamide;
N-(3-chloro-4-methylphenyl)-2-methylpentanamide;
N-(3,4-dichlorophenyl)trimethylacetamide;
N-(3,4-dichlorophenyl)-α,α-dimethylvaleramide;
N-isopropyl-N-phenylchloroacetamide;
N-*n*-butoxymethyl-N-(2,6-diethylphenyl)chloroacetamide;
N-methoxymethyl-N-(2,6-diethylphenyl)chloroacetamide.

### Oxyphenoxy Herbicides

2-(4-(2,4-dichlorophenoxy)phenoxy)methyl propionate;
methyl 2-(4-(3-chloro-5-(trifluoromethyl)-2-pyridinyloxy)phenoxy)propanoate;
butyl (R)-2-[4-[5-(trifluoromethyl)-2-pyridinyloxy]phenoxy]propionate;
ethyl 2-[4-[(6-chloro-2-benzoxazolyl)oxy]phenoxy]propanoate;
butyl 2-[4-[[5-(trifluoromethyl)-2-pyridinyl]oxy]phenoxy]propionate;
2-[4-[(6-chloro-2-quinoxalinyl)oxy]phenoxy]propionic acid, ethyl ester.

### Uracils

5-bromo-3-*sec*-butyl-6-methyluracil;
5-bromo-3-cyclohexyl-1,6-dimethyluracil;
3-cyclohexyl-5,6-trimethyleneuracil;
5-bromo-3-isopropyl-6-methyluracil;
3-*tert*-butyl-5-chloro-6-methyluracil.

### Nitriles

2,6-dichlorobenzonitrile; diphenylacetonitrile;
3,5-dibromo-4-hydroxybenzonitrile;
3,5-diiodo-4-hydroxybenzonitrile.

### Other Organic Herbicides

2-chloro-N,N-diallylacetamide;
N-(1,1-dimethyl-2-propynyl)-3,5-dichlorobenzamide;
maleic hydrazide;
3-amino-1,2,4-triazole;
monosodium methanearsonate;
disodium methanearsonate;
N,N-dimethyl-α,α-diphenylacetamide;
N-N-di(*n*-propyl)-2,6-dinitro-4-(trifluoromethyl)aniline;
N,N-di(*n*-propyl)-2,6-dinitro-4-methylaniline;
N,N-di(*n*-propyl)-2,6-dinitro-4-methylsulfonylaniline;
O-(2,4-dichlorophenyl)-O-methyl isopropylphosphoramidothioate;
4-amino-3,5,6-trichloropicolinic acid;
2,3-dichloro-1,4-naphthoquinone;
di(methoxythiocarbonyl)disulfide;
3-(1-methylethyl)-1H-2,1,3-benzothiadiazin-(4)3H-one-2,2-dioxide;
6,7-dihydrodipyridol[1,2-*a*:2',1'-*c*]pyrazidiium salts;
1,1'-dimethyl-4,4'-bipyridinium salts;
3,4,5,6-tetrahydro-3,5-dimethyl-2-thio-2H-1,3,5-thiadiazine;
2-[1-(ethoxyimino)butyl]-5-[*s*-(ethylthio)propyl]-3-hydroxy-2-cyclohexen-1-one;
2-(2-chlorophenyl)methyl-4,4-dimethyl-3-isoxazolidinone;
N-(1-ethylpropyl)-3,4-dimethyl-2,6-dinitrobenzamide;
4-chloro-5-(methylamino)-2-(α,α,α-trifluoro-*m*-toluyl)-3-(2H)-pyridazinone;
2-(3,5-dichlorophenyl)-2-(2,2,2-trichloromethyl)oxirane;
N,N-di(*n*-propyl)-2,6-dinitro-4-methylaniline;
N,N-di(*n*-propyl)-2,6-dinitro-4-methylsulfonylaniline;
O-(2,4-dichlorophenyl)-O-methyl isopropylphosphoramidothioate;
4-amino-3,5,6-trichloropicolinic acid;
2,3-dichloro-1,4-naphthoquinone;
di(methoxythiocarbonyl)disulfide;
3-(1-methylethyl)-1H-2,1,3-benzothiadiazin-(4)3H-one-2,2-dioxide;
6,7-dihydrodipyridol[1,2-*a*:2',1'-*c*]pyrazidiium salts;
1,1'-dimethyl-4,4'-bipyridinium salts;
3,4,5,6-tetrahydro-3,5-dimethyl-2-thio-2H-1,3,5-thiadiazine;
2-[1-(ethoxyimino)butyl]-5-[*s*-(ethylthio)propyl]-3-hydroxy-2-cyclohexen-1-one;
2-(2-chlorophenyl)methyl-4,4-dimethyl-3-isoxazolidinone;
N-(1-ethylpropyl)-3,4-dimethyl-2,6-dinitrobenzamide;
4-chloro-5-(methylamino)-2-(α,α,α-trifluoro-*m*-toluyl)-3-(2H)-pyridazinone;
2-(3,5-dichlorophenyl)-2-(2,2,2-trichloromethyl)oxirane.

## Claims

1. A herbicidal composition, which comprises:
(i) one or more phosphosulfonate herbicides having the general formula 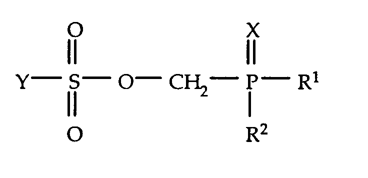 wherein
(1) Y is selected from phenyl; naphthyl; benzyl; (C₅-C₈)cycloalkyl; a 5-membered heteroaromatic ring having 1, 2, 3, or 4 heteroatoms independently selected from the group consisting of nitrogen, oxygen and sulfur atoms provided no more than one heteroatom is oxygen or sulfur; a 6-membered heteroaromatic ring having 1, 2 or 3 nitrogen atoms; a fused 5,6-membered heteroaromatic ring having 1-4 heteroatoms independently selected from the group consisting of nitrogen, oxygen and sulfur atoms provided no more than one heteroatom is oxygen or sulfur; or a fused 6,6-membered heteroaromatic ring having 1-4 heteroatoms independently selected from the group consisting of nitrogen, oxygen and sulfur atoms provided no more than one heteroatom is oxygen or sulfur;
wherein each of said Y may be substituted with up to three substituents each independently selected from halo, cyano, nitro, alkoxy, haloalkoxy, alkyl, haloalkyl, phenyl, alkylcarbonyloxy, dialkylcarbamoyl, alkylthio, haloalkylthio, arylthio, aryloxy, formyl, alkylcarbonyl, arylcarbonyl, dialkylamino, methoxymethyl, methylthiomethyl and alkoxycarbonyl, provided
(a) there is at most one of said substituents on said Y when Y is a thiadiazolyl ring or a tetrazolyl ring,
(b) there is at most two of said substituents when Y is a triazolyl ring, a thiazolyl ring, or an isothiazolyl ring, and
(c) when Y is phenyl, naphthyl or benzyl, there can be one to five of said previously described substituents;
(2) X is an oxygen or a sulfur atom; and
(3) R¹ and R² are each independently selected from alkyl, alkoxy, alkylthio, alkenyloxy, alkynyloxy, haloalkoxy, cyanoalkoxy, alkoxyalkoxy, cycloalkyloxy, cycloalkylalkoxy, alkylideneiminooxy, chloro and amino with one or two substituents selected from the group consisting of alkyl, alkenyl and phenyl, provided that there is no more than one phenyl group on the amino group, and provided that R¹ may be selected additionally from phenyl or phenoxy; and provided that when R¹ and R² are both alkoxy, R¹ and R² can together with the phosphorus atom form a 6-membered oxygen-containing ring; and provided that when R¹ and R² are both alkoxy, Y is not phenyl, 4-methylphenyl, 4-chlorophenyl, 4-bromophenyl or 3-nitrophenyl;
(ii) a dichloroacetamide safener having the general formula 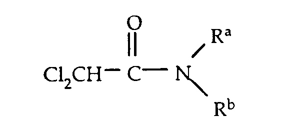 wherein
R^{a} and R^{b} are each independently selected from alkyl, alkenyl, or alkyl or alkenyl substituted with halo, or R^{a} and R^{b} together with the nitrogen atom to which they are attached form a 5- or 6-membered substituted heterocyclic ring selected from the group consisting of 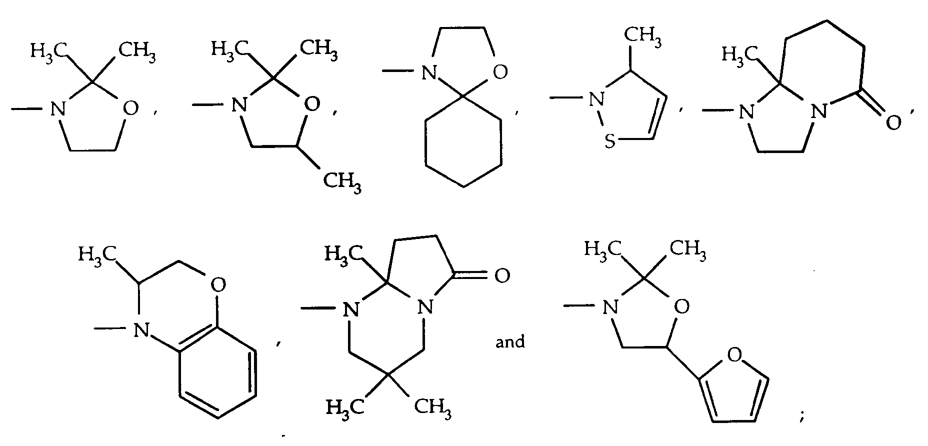 and (iii) an agronomically acceptable carrier.

2. A composition as claimed in claim 1, wherein:
each Y may be substituted with up to three substituents each independently selected from halo, cyano, nitro, (C₁-C₆)alkoxy, halo(C₁-C₄)alkoxy, (C₁-C₆)alkyl, halo(C₁-C₄)alkyl, phenyl, (C₁-C₄)alkylcarbonyloxy, di(C₁-C₄)alkylcarbamoyl, (C₁-C₆)alkylthio, halo(C₁-C₄)alkylthio, arylthio, aryloxy, formyl, (C₁-C₄)alkylcarbonyl, arylcarbonyl, di(C₁-C₄)alkylamino, methoxymethyl, methylthiomethyl and (C₁-C₄)alkoxycarbonyl;
R¹ and R² are each independently selected from (C₁-C₆)alkyl, (C₁-C₆)alkoxy, halo(C₂-C₄)alkoxy, (C₁-C₄)alkylthio, (C₃-C₄)alkenyloxy, (C₃-C₄)alkynyloxy, (C₁-C₄)alkoxy(C₁-C₄)alkoxy, (C₄-C₈)cycloalkyloxy, (C₃-C₆)cycloalkyl(C₁-C₃)alkoxy, cyano(C₁-C₄)alkoxy, (C₂-C₄)alkylideneiminooxy, chloro, and amino substituted with one or two substituents selected from (C₁-C₄)alkyl, (C₂-C₄)alkenyl and phenyl; provided there is not more than one phenyl group on the amino group; and provided that R¹ may additionally, be selected from phenyl or phenoxy; and provided that when R¹ and R² are both alkoxy, R¹ and R² may together with the phosphorous atom form a 6-membered oxygen-containing ring; and
R^{a} and R^{b} are each independently selected from (C₂-C₄)alkyl, (C₃-C₄)alkenyl, (C₂-C₄)alkyl or (C₃-C₄)alkenyl substituted with halo or R^{a} and R^{b} together with the nitrogen atom to which they are attached form the 5-membered heterocyclic moiety

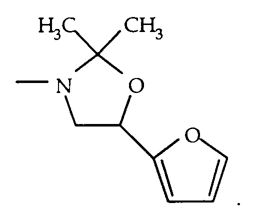

3. A composition as claimed in claim 2, wherein:
Y is phenyl having up to three substituents, one of which is at the ortho position, independently selected from halo, cyano, nitro, (C₁-C₆)alkoxy, halo(C₁-C₄)alkoxy, (C₁-C₆)alkyl, halo(C₁-C₄)alkyl, phenyl, (C₁-C₄)alkylcarbonyloxy, di(C₁-C₄)alkylcarbamoyl, (C₁-C₆)alkylthio, halo(C₁-C₄)alkylthio, arylthio, aryloxy,formyl, (C₁-C₄)alkylcarbonyl, arylcarbonyl, di(C₁-C₄)alkylamino and (C₁-C₄)alkoxycarbonyl;
X is an oxygen atom;
R¹ and R² are each independently selected from (C₁-C₂)alkyl and (C₁-C₄)alkoxy; provided R¹ and R² are not both alkyl; and
R^{a} and R^{b} are each independently selected from ethyl, *n*-propyl, allyl, or ethyl, *n*-propyl or allyl substituted with chloro, or R^{a} and R^{b} together with the nitrogen atom to which they are attached form the 5-membered heterocyclic moiety

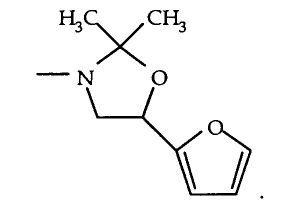

4. A composition as claimed in claim 3, wherein:
Y is phenyl, monosubstituted in its ortho position, said substituent being independently selected from chloro, bromo, ethyl, ethoxy,*n*-propoxy, trifluoromethyl, pentafluoroethyl, methylthio, ethylthio, and trifluoromethylthio;
R¹ is selected from methoxy, ethoxy, isopropyloxy, methyl and ethyl;
R² is selected from ethoxy and isopropyloxy; and
R^{a} and R^{b} are each independently allyl, 3,3-dichloroallyl, or R^{a} and R^{b} together with the nitrogen atom to which they are attached form the 5-membered heterocyclic moiety

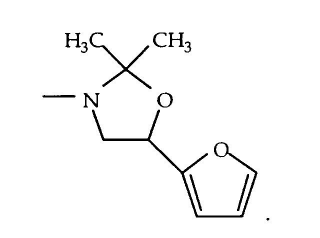

5. A composition as claimed in claim 3, wherein:
Y is phenyl substituted in its ortho position, the substituent being independently selected from chloro, bromo, trifluoromethoxy, trifluoromethylthio, methylthio, ethylthio and trifluoromethyl; and has a second substituent in its second ortho position selected from chloro, bromo, methyl, ethyl, isopropyl, methoxy, ethoxy, trifluoromethyl, difluoromethyl, difluoromethoxy, trifluoromethylthio, methylthio, ethylthio, pentafluoroethyl, fluoro, and trifluoromethoxy;
R¹ is selected from methoxy, ethoxy, isopropyloxy, methyl and ethyl;
R² is selected from ethoxy and isopropyloxy; and
R^{a} and R^{b} are each independently allyl, 3,3-dichloroallyl, or R^{a} and R^{b} together with the nitrogen atom to which they are attached form the 5-membered heterocyclic moiety

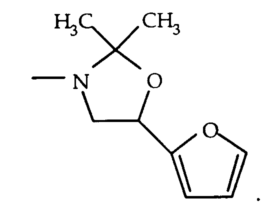

6. A composition as claimed in claim 3, wherein:
Y is phenyl substituted with fluoro, chloro or bromo at the two ortho positions and with methyl or ethyl at the meta position;
R¹ is selected from methoxy, ethoxy, isopropyloxy, methyl and ethyl;
R² is selected from ethoxy and isopropyloxy; and
R^{a} and R^{b} are each independently allyl, 3,3-dichloroallyl, or R^{a} and R^{b} together with the nitrogen atom to which they are attached form the 5-membered heterocyclic moiety

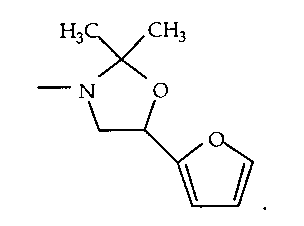

7. A composition as claimed in claim 3, wherein:
Y is 2-chlorophenyl, 2-bromophenyl, 2,5-dichlorophenyl, 2,6-dichlorophenyl, 2-trifluoromethylphenyl, 2-chloro-6-isopropylphenyl, 2-chloro-6-methylphenyl, 2-methyl-6-trifluoromethylphenyl, 2-methoxy-6-trifluoromethylphenyl, 2-trifluoromethoxyphenyl, 2-methylthiophenyl, 2-ethylthiophenyl, 2-trifluoromethylthiophenyl, 2-trifluoromethyl-6-fluorophenyl, 2-trifluoromethyl-6-ethylphenyl, 2-trifluoromethyl-4-fluorophenyl, 2-trifluoromethyl-6-ethoxyphenyl, 2,5-difluorophenyl, 2-trifluoromethoxy-6-fluorophenyl, 2-trifluoromethyl-6-methylthiophenyl, 2-trifluoromethyl-6-ethylthiophenyl, 2-trifluoromethylthio-4-fluorophenyl, 2-trifluoromethylthio-6-methylphenyl, 2-trifluoromethylthio-6-chlorophenyl, 2-trifluoromethylthio-6-ethylphenyl, 2-trifluoromethylthio-6-fluorophenyl, 2-methyl-6-methylthiophenyl, 2-ethyl-6-methylthiophenyl, 2-fluoro-6-methylthiophenyl, 2-methyl-6-ethylthiophenyl, 2-ethyl-6-ethylthiophenyl, 2-chloro-6-methylthiophenyl, 2-fluoro-6-ethylthiophenyl, 2-methyl-3,6-difluorophenyl, 2,4,6-trifluorophenyl, 2,6-dichloro-3-methylphenyl, 2-pentafluoroethylphenyl, 2-trifluoromethoxy-6-ethylphenyl, 2-fluoro-6-methylthiophenyl, 2-chloro-6-ethylthiophenyl, 2-fluoro-6-ethylthiophenyl, 2-fluoro-6-ethylphenyl, or 2-ethyl-3, 6-difluorophenyl.
R¹ is selected from methoxy, ethoxy, isopropyloxy, methyl and ethyl;
R² is selected from ethoxy and isopropyloxy; and
R^{a} and R^{b} are each independently allyl, 3,3-dichloroallyl, or R^{a} and R^{b} together with the nitrogen atom to which they are attached form the 5-membered heterocyclic moiety

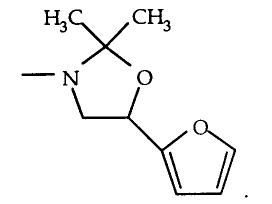

8. A composition as claimed in claim 7, which comprises one or more of the herbicidal compounds selected from
O-isopropyl P-ethyl[[(2-chloro-6-methylphenyl)sulfonyloxy]methyl]phosphinate;
O-isopropyl P-methyl[[(2-chloro-6-methylphenyl)sulfonyloxy]methyl]phosphinate;
O,O-diisopropyl [[(2-chloro-6-methylphenyl)sulfonyloxy]methyl]phosphonate;
O-isopropyl O-ethyl [[(2-chloro-6-methylphenyl)sulfonyloxy]methyl]phosphonate;
O-isopropyl O-methyl [[(2-chloro-6-methylphenyl)sulfonyloxy]methyl]phosphonate;
O-ethyl P-ethyl[[(2-chloro-6-methylphenyl)sulfonyloxy]methyl]phosphinate;
O-ethyl P-methyl[[(2-chloro-6-methylphenyl)sulfonyloxy]methyl]phosphinate;
O-diethyl [[(2-chloro-6-methylphenyl)sulfonyloxy]methyl]phosphonate;
O-ethyl O-methyl [[(2-chloro-6-methylphenyl)sulfonyloxy]methyl]phosphonate;
O-isopropyl P-ethyl[[(2-chloro-6-isopropylphenyl)sulfonyloxy]methyl]phosphinate;
O-isopropyl P-methyl[[(2-chloro-6-isopropylphenyl)sulfonyloxy]methyl]phosphinate;
O-isopropyl O-ethyl [[(2-chloro-6-isopropylphenyl)sulfonyloxy]methyl]phosphonate;
O-isopropyl O-methyl [[(2-chloro-6-isopropylphenyl)sulfonyloxy]methyl]phosphonate;
O,O-diethyl [[(2-chloro-6-isopropylphenyl)sulfonyloxy]methyl]phosphonate;
O,O-diisopropyl [[(2-chloro-6-isopropylphenyl)sulfonyloxy]methyl]phosphonate;
O-ethyl P-methyl-[[(2-chloro-6-isopropylphenyl)sulfonyloxy]methyl]phosphinate;
O-isopropyl P-ethyl[[(2-chlorophenyl)sulfonyloxy]methyl]phosphinate;
O-isopropyl P-methyl[[(2-chlorophenyl)sulfonyloxy]methyl]phosphinate;
O-isopropyl O-ethyl [[(2-chlorophenyl)sulfonyloxy]methyl]phosphonate;
O-isopropyl O-methyl [[(2-chlorophenyl)sulfonyloxy]methyl]phosphonate;
O,O-diethyl [[(2-chlorophenyl)sulfonyloxy]methyl]phosphonate;
O,O-diisopropyl [[(2-chlorophenyl)sulfonyloxy]methyl]phosphonate;
O-isopropyl P-ethyl[[(2-(trifluoromethyl)phenyl)sulfonyloxy]methyl]phosphinate;
O-isopropyl P-methyl[[(2-(trifluoromethyl)phenyl)sulfonyloxy]methyl]phosphinate;
O-isopropyl O-ethyl [[(2-(trifluoromethyl)phenyl)sulfonyloxy]methyl]phosphonate;
O-isopropyl O-methyl [[(2-(trifluoromethyl)phenyl)sulfonyloxy]methyl]phosphonate;
O,O-diethyl [[(2-(trifluoromethyl)phenyl)sulfonyloxy]methyl]phosphonate;
O,O-diisopropyl [[(2-(trifluoromethyl)phenyl)sulfonyloxy]-methyl]phosphonate;
O-isopropyl P-ethyl[[(2-(trifluoromethyl)-6-methylphenyl)sulfonyloxy]methyl]phosphinate;
O-isopropyl P-methyl[[(2-(trifluoromethyl)-6-methylphenyl)sulfonyloxy]methyl]phosphinate;
O-isopropyl O-ethyl [[(2-(trifluoromethyl)-6-methylphenyl)sulfonyloxy]methyl]phosphonate;
O-isopropyl O-methyl [[(2-(trifluoromethyl)-6-methylphenyl)sulfonyloxy]methyl]phosphonate;
O-isopropyl P-ethyl[[(2-methoxy-6-(trifluoromethyl)phenyl)sulfonyloxy]methyl]phosphinate;
O,O-diisopropyl [[(2-methoxy-6-(trifluoromethyl)phenyl)sulfonyloxy]methyl]phosphonate;
O-isopropyl O-methyl[[(2-(trifluoromethyl)-6-ethylphenyl)sulfonyloxy]methyl]phosphonate;
O-isopropyl P-methyl[[(2-methoxy-6-(trifluoromethyl)phenyl)sulfonyloxy]methyl]phosphinate;
O-isopropyl O-ethyl [[(2-methoxy-6-(trifluoromethyl)phenyl)sulfonyloxy]methyl]phosphonate;
O-isopropyl O-methyl [[(2-methoxy-6-(trifluoromethyl)phenyl)sulfonyloxy]methyl]phosphonate;
O-isopropyl P-ethyl[[(2,6-dichlorophenyl)sulfonyloxy]methyl]phosphinate;
O-isopropyl P-methyl[[(2,6-dichlorophenyl)sulfonyloxy]methyl]phosphinate;
O,O-diisopropyl [[(2,6-dichlorophenyl)sulfonyloxy]methyl]phosphonate;
O-isopropyl O-ethyl [[(2,6-dichlorophenyl)sulfonyloxy]methyl]phosphonate;
O-isopropyl O-methyl [[(2,6-dichlorophenyl)sulfonyloxy]methyl]phosphonate;
O,O-diethyl [[(2,6-dichlorophenyl)sulfonyloxy]methyl]phosphonate;
O,O-diethyl [[(2,5-dichlorophenyl)sulfonyloxy]methyl]phosphonate;
O,O-diisopropyl [[(2,5-dichlorophenyl)sulfonyloxy]methyl]phosphonate;
O-isopropyl P-ethyl[[(2,5-dichlorophenyl)sulfonyloxy]methyl]phosphinate;
O-isopropyl P-methyl[[(2,5-dichlorophenyl)sulfonyloxy]methyl]phosphinate;
O-isopropyl O-ethyl[[(2,5-dichlorophenyl)sulfonyloxy]methyl]phosphonate;
O-isopropyl O-methyl[[(2,5-dichlorophenyl)sulfonyloxy]methyl]phosphonate;
O,O-diethyl [[(2-methyl-6-(trifluoromethyl)phenyl)sulfonyloxy]methyl]phosphonate;
O,O-diisopropyl [[(2-methyl-6-(trifluoromethyl)phenyl)sulfonyloxy]methyl]phosphonate;
O,O-diethyl [[(2-(trifluoromethyl)-6-methoxyphenyl)sulfonyloxy]methyl]phosphonate;
O-isopropyl P-methyl [[(2-(trifluoromethyl)-6-ethylphenyl)sulfonyloxy]methyl]phosphinate;
O-isopropyl P-ethyl [[(2-(trifluoromethyl)-6-ethylphenyl)sulfonyloxy]methyl]phosphinate;
O-isopropyl O-ethyl [[(2-(trifluoromethyl)-6-ethylphenyl)sulfonyloxy]methyl]phosphonate;
O,O-diisopropyl [[(2-(trifluoromethyl)-6-ethylphenyl)sulfonyloxy]methyl]phosphonate;
O,O-diethyl [[(2-(trifluoromethyl)-6-ethylphenyl)sulfonyloxy]methyl]phosphonate;
O-isopropyl P-methyl [[(2-(trifluoromethyl)-6-ethoxyphenyl)sulfonyloxy]methyl]phosphinate;
O-isopropyl P-ethyl [[(2-(trifluoromethyl)-6-ethoxyphenyl)sulfonyloxy]methyl]phosphinate;
O-isopropyl O-ethyl [[(2-(trifluoromethyl)-6-ethoxyphenyl)sulfonyloxy]methyl]phosphonate;
O,O-diisopropyl [[(2-(trifluoromethyl)-6-ethoxyphenyl)sulfonyloxy]methyl]phosphonate;
O,O-diethyl [[(2-(trifluoromethyl)-6-ethoxyphenyl)sulfonyloxy]methyl]phosphonate;
O-isopropyl O-methyl [[(2-(trifluoromethyl)-6-ethoxyphenyl)sulfonyloxy]methyl]phosphonate;
O-isopropyl P-methyl [[(2-(trifluoromethyl)-6-fluorophenyl)sulfonyloxy]methyl]phosphinate;
O-isopropyl P-ethyl [[(2-(trifluoromethyl)-6-fluorophenyl)sulfonyloxy]methyl]phosphinate;
O-isopropyl O-ethyl [[(2-(trifluoromethyl)-6-fluorophenyl)sulfonyloxy]methyl]phosphonate;
O,O-diisopropyl [[(2-(trifluoromethyl)-6-fluorophenyl)sulfonyloxy]methyl]phosphonate;
O,O-diethyl [[(2-(trifluoromethyl)-6-fluorophenyl)sulfonyloxy]methyl]phosphonate;
O-isopropyl O-methyl [[(2-(trifluoromethyl)-6-fluorophenyl)sulfonyloxy]methyl]phosphonate;
O-isopropyl P-methyl [[(2-trifluoromethoxyphenyl)sulfonyloxy]methyl]phosphinate;
O-isopropyl P-ethyl[[(2-trifluoromethoxyphenyl)sulfonyloxy]methyl]phosphinate;
O-isopropyl O-ethyl [[(2-trifluoromethoxyphenyl)sulfonyloxy]methyl]phosphonate;
O,O-diisopropyl [[(2-trifluoromethoxyphenyl)sulfonyloxy]methyl]phosphonate;
O,O-diethyl [[(2-trifluoromethoxyphenyl)sulfonyloxy]methyl]phosphonate;
O-isopropyl O-methyl [[(2-trifluoromethoxyphenyl)sulfonyloxy]methyl]phosphonate;
O-isopropyl P-methyl [[(2-(pentafluoroethyl)phenyl)sulfonyloxy]methyl]phosphinate;
O-isopropyl P-ethyl [[(2-(pentafluoroethyl)phenyl)sulfonyloxy]methyl]phosphinate;
O-isopropyl O-ethyl [[(2-(pentafluoroethyl)phenyl)sulfonyloxy]methyl]phosphonate;
O,O-diisopropyl [[(2-(pentafluoroethyl)phenyl)sulfonyloxy]methyl]phosphonate;
O,O-diethyl [[(2-(pentafluoroethyl)phenyl)sulfonyloxy]methyl]phosphonate;
O-isopropyl O-methyl [[(2-(pentafluoroethyl)phenyl)sulfonyloxy]methyl]phosphonate;
O-isopropyl P-methyl [[(2-methylthiophenyl)sulfonyloxy]methyl]phosphinate;
O-isopropyl P-ethyl [[(2-methylthiophenyl)sulfonyloxy]methyl]phosphinate;
O-isopropyl O-ethyl [[(2-methylthiophenyl)sulfonyloxy]methyl]phosphonate;
O,O-diisopropyl [[(2-methylthiophenyl)sulfonyloxy]methyl]phosphonate;
O,O-diethyl [[(2-methylthiophenyl)sulfonyloxy]methyl]phosphonate;
O-isopropyl O-methyl [[(2-methylthiophenyl)sulfonyloxy]methyl]phosphonate;
O-isopropyl P-methyl [[(2-ethylthiophenyl)sulfonyloxy]methyl]phosphinate;
O-isopropyl P-ethyl [[(2-ethylthiophenyl)sulfonyloxy]methyl]phosphinate;
O-isopropyl O-ethyl [[(2-ethylthiophenyl)sulfonyloxy]methyl]phosphonate;
O,O-diisopropyl [[(2-ethylthiophenyl)sulfonyloxy]methyl]phosphonate;
O,O-diethyl [[(2-ethylthiophenyl)sulfonyloxy]methyl]phosphonate;
O-isopropyl O-methyl [[(2-ethylthiophenyl)sulfonyloxy]methyl]phosphonate;
O-isopropyl P-methyl [[(2-trifluoromethylthiophenyl)sulfonyloxy]methyl]phosphinate;
O-isopropyl P-ethyl [[(2-trifluoromethylthiophenyl)sulfonyloxy]methyl]phosphinate;
O-isopropyl O-ethyl [[(2-trifluoromethylthiophenyl)sulfonyloxy]methyl]phosphonate;
O,O-diisopropyl [[(2-trifluoromethylthiophenyl)sulfonyloxy]methyl]phosphonate;
O,O-diethyl [[(2-trifluoromethylthiophenyl)sulfonyloxy]methyl]phosphonate;
O-isopropyl O-methyl [[(2-trifluoromethylthiophenyl)sulfonyloxy]methyl]phosphonate;
O-isopropyl P-methyl [[(2,5-difluorophenyl)sulfonyloxy]methyl]phosphinate;
O-isopropyl P-ethyl [[(2,5-difluorophenyl)sulfonyloxy]methyl]phosphinate;
O-isopropyl O-ethyl [[(2,5-difluorophenyl)sulfonyloxy]methyl]phosphonate;
O,O-diisopropyl [[(2,5-difluorophenyl)sulfonyloxy]methyl]phosphonate;
O,O-diethyl [[(2,5-difluorophenyl)sulfonyloxy]methyl]phosphonate;
O-isopropyl O-methyl [[(2,5-difluorophenyl)sulfonyloxy]methyl]phosphonate;
O-isopropyl P-methyl [[(2-(trifluoromethoxy)-6-fluorophenyl)sulfonyloxy]methyl]phosphinate;
O-isopropyl P-ethyl [[(2-(trifluoromethoxy)-6-fluorophenyl)sulfonyloxy]methyl]phosphinate;
O-isopropyl O-ethyl [[(2-(trifluoromethoxy)-6-fluorophenyl)sulfonyloxy]methyl]phosphonate;
O,O-diisopropyl [[(2-(trifluoromethoxy)-6-fluorophenyl)sulfonyloxy]methyl]phosphonate;
O,O-diethyl [[(2-(trifluoromethoxy)-6-fluorophenyl)sulfonyloxy]methyl]phosphonate;
O-isopropyl O-methyl [[(2-(trifluoromethoxy)-6-fluorophenyl)sulfonyloxy]methyl]phosphonate;
O-isopropyl P-methyl [[(2-(trifluoromethoxy)-6-ethylphenyl)sulfonyloxy]methyl]phosphinate;
O-isopropyl P-ethyl [[(2-(trifluoromethoxy)-6-ethylphenyl)sulfonyloxy]methyl]phosphinate;
O-isopropyl O-ethyl [[(2-(trifluoromethoxy)-6-ethylphenyl)sulfonyloxy]methyl]phosphonate;
O,O-diisopropyl [[(2-(trifluoromethoxy)-6-ethylphenyl)sulfonyloxy]methyl]phosphonate;
O,O-diethyl [[(2-(trifluoromethoxy)-6-ethylphenyl)sulfonyloxy]methyl]phosphonate;
O-isopropyl O-methyl [[(2-(trifluoromethoxy)-6-ethylphenyl)sulfonyloxy]methyl]phosphonate;
O-isopropyl P-methyl [[(2-(trifluoromethyl)-6-methylthiophenyl)sulfonyloxy]methyl]phosphinate;
O-isopropyl P-ethyl [[(2-(trifluoromethyl)-6-methylthiophenyl)sulfonyloxy]methyl]phosphinate;
O-isopropyl O-ethyl [[(2-(trifluoromethyl)-6-methylthiophenyl)sulfonyloxy]methyl]phosphonate;
O,O-diisopropyl [[(2-(trifluoromethyl)-6-methylthiophenyl)sulfonyloxy]methyl]phosphonate;
O,O-diethyl [[(2-(trifluoromethyl)-6-methylthiophenyl)sulfonyloxy]methyl]phosphonate;
O-isopropyl O-methyl [[(2-(trifluoromethyl)-6-methylthiophenyl)sulfonyloxy]methyl]phosphonate;
O-isopropyl P-methyl [[(2-(trifluoromethyl)-6-ethylthiophenyl)sulfonyloxy]methyl]phosphinate;
O-isopropyl P-ethyl [[(2-(trifluoromethyl)-6-ethylthiophenyl)sulfonyloxy]methyl]phosphinate;
O-isopropyl O-ethyl [[(2-(trifluoromethyl)-6-ethylthiophenyl)sulfonyloxy]methyl]phosphonate;
O,O-diisopropyl [[(2-(trifluoromethyl)-6-ethylthiophenyl)sulfonyloxy]methyl]phosphonate;
O,O-diethyl [[(2-(trifluoromethyl)-6-ethylthiophenyl)sulfonyloxy]methyl]phosphonate;
O-isopropyl O-methyl [[(2-(trifluoromethyl)-6-ethylthiophenyl)sulfonyloxy]methyl]phosphonate;
O-isopropyl P-methyl [[(2-(trifluoromethylthio)-4-fluorophenyl)sulfonyloxy]methyl]phosphinate;
O-isopropyl P-ethyl [[(2-(trifluoromethylthio)-4-fluorophenyl)sulfonyloxy]methyl]phosphinate;
O-isopropyl O-ethyl [[(2-(trifluoromethylthio)-4-fluorophenyl)sulfonyloxy]methyl]phosphonate;
O,O-diisopropyl [[(2-(trifluoromethylthio)-4-fluorophenyl)sulfonyloxy]methyl]phosphonate;
O,O-diethyl [[(2-(trifluoromethylthio)-4-fluorophenyl)sulfonyloxy]methy]phosphonate;
O-isopropyl O-methyl [[(2-(trifluoromethylthio)-4-fluorophenyl)sulfonyloxy]methyl]phosphonate;
O-isopropyl P-methyl [[(2-(trifluoromethylthio)-6-ethylphenyl)sulfonyloxy]methyl]phosphinate;
O-isopropyl P-ethyl [[(2-(trifluoromethylthio)-6-ethylphenyl)sulfonyloxy]methyl]phosphinate;
O-isopropyl O-ethyl [[(2-(trifluoromethylthio)-6-ethylphenyl)sulfonyloxy]methyl]phosphonate;
O,O-diisopropyl [[(2-(trifluoromethylthio)-6-ethylphenyl)sulfonyloxy]methyl]phosphonate;
O,O-diethyl [[(2-(trifluoromethylthio)-6-ethylphenyl)sulfonyloxy]methyl]phosphonate;
O-isopropyl O-methyl [[(2-(trifluoromethylthio)-6-ethylphenyl)sulfonyloxy]methyl]phosphonate;
O-isopropyl P-methyl [[(2-(trifluoromethylthio)-6-methylphenyl)sulfonyloxy]methyl]phosphinate;
O-isopropyl P-ethyl [[(2-(trifluoromethylthio)-6-methylphenyl)sulfonyloxy]methyl]phosphinate;
O-isopropyl O-ethyl [[(2-(trifluoromethylthio)-6-methylphenyl)sulfonyloxy]methyl]phosphonate;
O,O-diisopropyl [[(2-(trifluoromethylthio)-6-methylphenyl)sulfonyloxy]methyl]phosphonate;
O,O-diethyl [[(2-(trifluoromethylthio)-6-methylphenyl)sulfonyloxy]methyl]phosphonate;
O-isopropyl O-methyl [[(2-(trifluoromethylthio)-6-methylphenyl)sulfonyloxy]methyl]phosphonate;
O-isopropyl P-methyl [[(2-(trifluoromethylthio)-6-chlorophenyl)sulfonyloxy]methyl]phosphinate;
O-isopropyl P-ethyl [[(2-(trifluoromethylthio)-6-chlorophenyl)sulfonyloxy]methyl]phosphinate;
O-isopropyl O-ethyl [[(2-(trifluoromethylthio)-6-chlorophenyl)sulfonyloxy]methyl]phosphonate;
O,O-diisopropyl [[(2-(trifluoromethylthio)-6-chlorophenyl)sulfonyloxy]methyl]phosphonate;
O,O-diethyl [[(2-(trifluoromethylthio)-6-chlorophenyl)sulfonyloxy]methyl]phosphonate;
O-isopropyl O-methyl [[(2-(trifluoromethylthio)-6-chlorophenyl)sulfonyloxy]methyl]phosphonate;
O-isopropyl P-methyl [[(2-(trifluoromethyl)-4-fluorophenyl)sulfonyloxy]methyl]phosphinate;
O-isopropyl P-ethyl [[(2-(trifluoromethyl)-4-fluorophenyl)sulfonyloxy]methyl]phosphinate;
O-isopropyl O-ethyl [[(2-(trifluoromethyl)-4-fluorophenyl)sulfonyloxy]methyl]phosphonate;
O,O-diisopropyl [[(2-(trifluoromethyl)-4-fluorophenyl)sulfonyloxy]methyl]phosphonate;
O,O-diethyl [[(2-(trifluoromethyl)-4-fluorophenyl)sulfonyloxy]methy]phosphonate;
O-isopropyl O-methyl [[(2-(trifluoromethyl)-4-fluorophenyl)sulfonyloxy]methyl]phosphonate;
O-isopropyl P-methyl [[(2-(trifluoromethylthio)-6-fluorophenyl)sulfonyloxy]methyl]phosphinate;
O-isopropyl P-ethyl [[(2-(trifluoromethylthio)-6-fluorophenyl)sulfonyloxy]methyl]phosphinate;
O-isopropyl O-ethyl [[(2-(trifluoromethylthio)-6-fluorophenyl)sulfonyloxy]methyl]phosphonate;
O,O-diisopropyl [[(2-(trifluoromethylthio)-6-fluorophenyl)sulfonyloxy]methyl]phosphonate;
O,O-diethyl [[(2-(trifluoromethylthio)-6-fluorophenyl)sulfonyloxy]methyl]phosphonate;
O-isopropyl O-methyl [[(2-(trifluoromethylthio)-6-fluorophenyl)sulfonyloxy]methyl]phosphonate;
O-isopropyl P-methyl [[(2-methyl-6-methylthiophenyl)sulfonyloxy]methyl]phosphinate;
O-isopropyl P-ethyl [[(2-methyl-6-methylthiophenyl)sulfonyloxy]methyl]phosphinate;
O-isopropyl O-ethyl [[(2-methyl-6-methylthiophenyl)sulfonyloxy]methyl]phosphonate;
O,O-diisopropyl [[(2-methyl-6-methylthiophenyl)sulfonyloxy]methyl]phosphonate;
O,O-diethyl [[(2-methyl-6-methylthiophenyl)sulfonyloxy]methyl]phosphonate;
O-isopropyl O-methyl [[(2-methyl-6-methylthiophenyl)sulfonyloxy]methyl]phosphonate;
O-isopropyl P-methyl [[(2-ethyl-6-methylthiophenyl)sulfonyloxy]methyl]phosphinate;
O-isopropyl P-ethyl [[(2-ethyl-6-methylthiophenyl)sulfonyloxy]methyl]phosphinate;
O-isopropyl O-ethyl [[(2-ethyl-6-methylthiophenyl)sulfonyloxy]methyl]phosphonate;
O,O-diisopropyl [[(2-ethyl-6-methylthiophenyl)sulfonyloxy]methyl]phosphonate;
O,O-diethyl [[(2-ethyl-6-methylthiophenyl)sulfonyloxy]methyl]phosphonate;
O-isopropyl O-methyl [[(2-ethyl-6-methylthiophenyl)sulfonyloxy]methyl]phosphonate;
O-isopropyl P-methyl [[(2-fluoro-6-methylthiophenyl)sulfonyloxy]methyl]phosphinate;
O-isopropyl P-ethyl [[(2-fluoro-6-methylthiophenyl)sulfonyloxy]methyl]phosphinate;
O-isopropyl O-ethyl [[(2-fluoro-6-methylthiophenyl)sulfonyloxy]methyl]phosphonate;
O,O-diisopropyl [[(2-fluoro-6-methylthiophenyl)sulfonyloxy]methyl]phosphonate;
O,O-diethyl [[(2-fluoro-6-methylthiophenyl)sulfonyloxy]methyl]phosphonate;
O-isopropyl O-methyl [[(2-fluoro-6-methylthiophenyl)sulfonyloxy]methyl]phosphonate;
O-isopropyl P-methyl [[(2-methyl-6-ethylthiophenyl)sulfonyloxy]methyl]phosphinate;
O-isopropyl P-ethyl [[(2-methyl-6-ethylthiophenyl)sulfonyloxy]methyl]phosphinate;
O-isopropyl O-ethyl [[(2-methyl-6-ethylthiophenyl)sulfonyloxy]methyl]phosphonate;
O,O-diisopropyl [[(2-methyl-6-ethylthiophenyl)sulfonyloxy]methyl]phosphonate;
O,O-diethyl [[(2-methyl-6-ethylthiophenyl)sulfonyloxy]methyl]phosphonate;
O-isopropyl O-methyl [[(2-methyl-6-ethylthiophenyl)sulfonyloxy]methyl]phosphonate;
O-isopropyl P-methyl [[(2-ethyl-6-ethylthiophenyl)sulfonyloxy]methyl]phosphinate;
O-isopropyl P-ethyl [[(2-ethyl-6-ethylthiophenyl)sulfonyloxy]methyl]phosphinate;
O-isopropyl O-ethyl [[(2-ethyl-6-ethylthiophenyl)sulfonyloxy]methyl]phosphonate;
O,O-diisopropyl [[(2-ethyl-6-ethylthiophenyl)sulfonyloxy]methyl]phosphonate;
O,O-diethyl [[(2-ethyl-6-ethylthiophenyl)sulfonyloxy]methyl]phosphonate;
O-isopropyl O-methyl [[(2-ethyl-6-ethylthiophenyl)sulfonyloxy]methyl]phosphonate;
O-isopropyl P-methyl [[(2-chloro-6-ethylthiophenyl)sulfonyloxy]methyl]phosphinate;
O-isopropyl P-ethyl [[(2-chloro-6-ethylthiophenyl)sulfonyloxy]methyl]phosphinate;
O-isopropyl O-ethyl [[(2-chloro-6-ethylthiophenyl)sulfonyloxy]methyl]phosphonate;
O,O-diisopropyl [[(2-chloro-6-ethylthiophenyl)sulfonyloxy]methyl]phosphonate;
O,O-diethyl [[(2-chloro-6-ethylthiophenyl)sulfonyloxy]methyl]phosphonate;
O-isopropyl O-methyl [[(2-chloro-6-ethylthiophenyl)sulfonyloxy]methyl]phosphonate;
O-isopropyl P-methyl [[(2-fluoro-6-ethylthiophenyl)sulfonyloxy]methyl]phosphinate;
O-isopropyl P-ethyl [[(2-fluoro-6-ethylthiophenyl)sulfonyloxy]methyl]phosphinate;
O-isopropyl O-ethyl [[(2-fluoro-6-ethylthiophenyl)sulfonyloxy]methyl]phosphonate;
O,O-diisopropyl [[(2-fluoro-6-ethylthiophenyl)sulfonyloxy]methyl]phosphonate;
O,O-diethyl [[(2-fluoro-6-ethylthiophenyl)sulfonyloxy]methyl]phosphonate;
O-isopropyl O-methyl [[(2-fluoro-6-ethylthiophenyl)sulfonyloxy]methyl]phosphonate;
O-isopropyl P-methyl [[(2-fluoro-6-ethylphenyl)sulfonyloxy]methyl]phosphinate;
O-isopropyl P-ethyl [[(2-fluoro-6-ethylphenyl)sulfonyloxy]methyl]phosphinate;
O-isopropyl O-ethyl [[(2-fluoro-6-ethylphenyl)sulfonyloxy]methyl]phosphonate;
O,O-diisopropyl [[(2-fluoro-6-ethylphenyl)sulfonyloxy]methyl]phosphonate;
O,O-diethyl [[(2-fluoro-6-ethylphenyl)sulfonyloxy]methyl]phosphonate;
O-isopropyl O-methyl [[(2-fluoro-6-ethylphenyl)sulfonyloxy]methyl]phosphonate;
O-isopropyl P-methyl [[(2-methyl-3,6-difluorophenyl)sulfonyloxy]methyl]phosphinate;
O-isopropyl P-ethyl [[(2-methyl-3,6-difluorophenyl)sulfonyloxy]methyl]phosphinate;
O-isopropyl O-ethyl [[(2-methyl-3,6-difluorophenyl)sulfonyloxy]methyl]phosphonate;
O,O-diisopropyl [[(2-methyl-3,6-difluorophenyl)sulfonyloxy]methyl]phosphonate;
O,O-diethyl [[(2-methyl-3,6-difluorophenyl)sulfonyloxy]methyl]phosphonate;
O-isopropyl O-methyl [[(2-methyl-3,6-difluorophenyl)sulfonyloxy]methyl]phosphonate;
O-isopropyl P-methyl [[(2-ethyl-3,6-difluorophenyl)sulfonyloxy]methyl]phosphinate;
O-isopropyl P-ethyl [[(2-ethyl-3,6-difluorophenyl)sulfonyloxy]methyl]phosphinate;
O-isopropyl O-ethyl [[(2-ethyl-3,6-difluorophenyl)sulfonyloxy]methyl]phosphonate;
O,O-diisopropyl [[(2-ethyl-3,6-difluorophenyl)sulfonyloxy]methyl]phosphonate;
O,O-diethyl [[(2-ethyl-3,6-difluorophenyl)sulfonyloxy]methyl]phosphonate;
O-isopropyl O-ethyl [[(2-methyl-3,6-difluorophenyl)sulfonyloxy]methyl]phosphonate;
O-isopropyl P-methyl [[(2,4,6-trifluorophenyl)sulfonyloxy]methyl]phosphinate;
O-isopropyl P-ethyl [[(2,4,6-trifluorophenyl)sulfonyloxy]methyl]phosphinate;
O-isopropyl O-ethyl [[(2,4,6-trifluorophenyl)sulfonyloxy]methyl]phosphonate;
O,O-diisopropyl [[(2,4,6-trifluorophenyl)sulfonyloxy]methyl]phosphonate;
O,O-diethyl [[(2,4,6-trifluorophenyl)sulfonyloxy]methyl]phosphonate;
O-isopropyl O-methyl [[(2,4,6-trifluorophenyl)sulfonyloxy]methyl]phosphonate; and
a safener selected from N,N-diallyldichloroacetamide, N,N-bis(3,3-dichloroallyl)dichloroacetamide and furilazole.

9. A composition as claimed in claim 2, wherein:
Y is a 5-membered unsubstituted or substituted heterocyclic substituent selected from thienyl, pyrazolyl, isoxazolyl, triazolyl, tetrazolyl, thiazolyl, isothiazolyl, pyrrolyl, thiadiazolyl, pyrimidinyl, and imidazolyl; and
R^{a} and R^{b} are each independently selected from ethyl, *n*-propyl, allyl, or ethyl, *n*-propyl or allyl substituted with chloro, or R^{a} and R^{b} together with the nitrogen atom to which they are attached form the 5-membered heterocyclic moiety

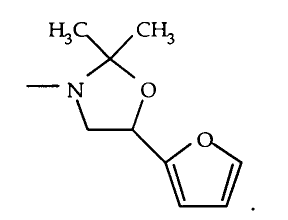

10. A composition as claimed in claim 9, wherein Y is selected from pyrimidin-2-yl, pyrimidinyl-4-yl and pyrimidin-5-yl, and R^{a} and R^{b} are each independently allyl, 3,3-dichloroallyl, or R^{a} and R^{b} together with the nitrogen atom to which they are attached form the 5-membered heterocyclic moiety

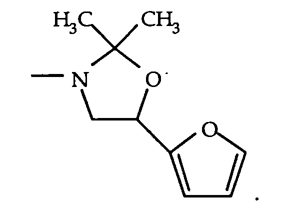

11. A composition as claimed in claim 2, wherein Y is a fused 5,6-membered heteroaromatic substituent selected from indolyl, imidazolpyridinyl, benzoimidazolyl, benzothienyl, benzothiazolyl, benzothiadiazolyl, benzotriazolyl, benzoxazolyl, and pyrazolopyrimidinyl; and
R^{a} and R^{b} are each independently selected from ethyl, *n*-propyl, allyl, or ethyl, *n*-propyl or allyl substituted with chloro, or R^{a} and R^{b} together with the nitrogen atom to which they are attached form the 5-membered heterocyclic moiety

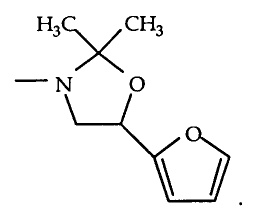

12. A composition as claimed in claim 9, wherein Y is 5-chloro-1-methyl-3-(C₁-C₃)alkyl-4-pyrazolyl; R¹ is isopropoxy; R² is methyl, ethyl, methoxy, or ethoxy, and preferably R² is methyl or ethyl; and R^{a} and R^{b} are each independently allyl, 3,3-dichloroallyl, or R^{a} and R^{b} together with the nitrogen atom to which they are attached form the 5-membered heterocyclic moiety

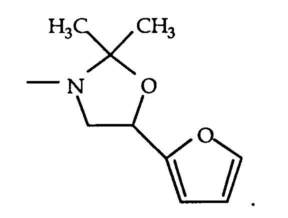

13. A composition as claimed in claim 1, wherein:
Y is selected from phenyl; naphthyl; benzyl; (C₅-C₈)cycloalkyl; a 5-membered heteroaromatic ring having 1,2,3 or 4 heteroatoms independently selected from the group consisting of nitrogen, oxygen and sulfur atoms provided no more than one heteroatom is oxygen or sulfur; a 6-membered heteroaromatic ring having 1,2 or 3 nitrogen atoms; a fused 5,6-membered heteroaromatic ring having 1-4 heteroatoms independently selected from the group consisting of nitrogen, oxygen and sulfur atoms provided no more than one heteroatom is oxygen or sulfur; or a fused 6,6-membered heteroaromatic ring having 1-4 heteroatoms independently selected from the group consisting of nitrogen, oxygen and sulfur atoms provided no more than one heteroatom is oxygen or sulfur;
wherein each of said Y may be substituted with up to three substituents each independently selected from halo, cyano, nitro, alkoxy, haloalkoxy, alkyl, haloalkyl, phenyl, alkylcarbonyloxy, dialkylcarbanoyl and alkoxycarbonyl, provided
(a) there is at most one of said substituents on said Y when Y is a thiadiazolyl ring or a tetrazolyl ring,
(b) there is at most two of said substituents when Y is a triazolyl ring, a thiazolyl ring, or an isothiazolyl ring, and
(c) when Y is phenyl, naphthyl or benzyl, there can be four or five of said substituents selected from halo, acetoxy, methyl, methoxy and halomethoxy but no more than two substituents are selected from acetoxy, methyl, methoxy, and halomethoxy.

14. A method for controlling unwanted plants, which comprises applying to the seed, plant or growth medium therefor a composition as claimed in any of claims 1 to 12.

15. A method for controlling unwanted plants, which comprises applying to the seed, plant or growth medium therefor a composition as claimed in claim 13.

16. A method for controlling unwanted plants, which comprises applying to the seed a composition comprising a safener as defined in any of claims 1 to 7 or 9 to 13 and an agronomically acceptable carrier; and preemergence application to the growth medium for the plants a composition comprising one or more herbicide as defined in any of claims 1 to 13 and an agronomically acceptable carrier.

## Patentansprüche

1. Herbizide Zusammensetzung, welche umfaßt:
(i) ein oder mehrere Phosphosulphonat-Herbizide mit dar allgemeinen Formel 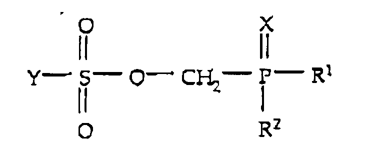 worin
(1) der Rest Y aus Phenyl, Naphthyl, Benzyl, (C₅-C₈)-Cycloalkyl, einem 5-gliedrigen heteroaromatischen Ring mit 1, 2, 3 oder 4 Heteroatomen, die unabhängig aus der Gruppe Stickstoff-, Sauerstoff- und Schwefelatomen ausgewählt sind, mit der Maßgabe, daß nicht mehr als ein Heteroatom Sauerstoff oder Schwefel ist, einem 6-gliedrigen heteroaromatischen Ring mit 1, 2 oder 3 Stickstoffatomen, einem kondensierten 5,6-gliedrigen heteroaromatischen Ring mit 1 bis 4 Heteroatomen, die unabhängig aus Stickstoff-, Sauerstoff- und Schwefelatomen ausgewählt sind, mit der Maßgabe, daß nicht mehr als ein Heteroatom Sauerstoff oder Schwefel ist, oder einem kondensierten 6,6-gliedrigen heteroaromatischen Ring mit 1 bis 4 Heteroatomen, die unabhängig voneinander aus der Gruppe Stickstoff-, Sauerstoff- und Schwefelatome ausgewählt sind, mit der Maßgabe, daß nicht mehr als ein Heteroatom Sauerstoff oder Schwefel ist, ausgewählt ist, wobei jedes Y mit bis zu 3 Substituenten, die unabhängig voneinander aus Halogen, Cyan, Nitro, Alkoxy, Halogenalkoxy, Alkyl, Halogenalkyl, Phenyl, Alkylcarbonyloxy, Dialkylcarbamoyl, Alkylthio, Halogenalkylthio, Arylthio, Aryloxy, Formyl, Alkylcarbonyl, Arylcarbonyl, Dialkylamino, Methoxymethyl, Methylthiomethyl und Alkoxycarbonyl ausgewählt sind, substituiert ist, mit der Maßgabe, daß
(a) der Rest Y höchstens einen dieser Substituenten aufweist, wenn Y ein Thiadiazolylring oder ein Tetrazolylring ist, und
(b) der Rest Y höchstens zwei dieser Substituenten aufweist, wenn Y ein Triazolylring, ein Thiazolylring oder ein Isothiazolylring ist, und
(c) ein bis fünf Substituenten der vorgenannt beschriebenen Substituenten vorliegen können, wenn der Rest Y Phenyl, Naphthyl oder Benzyl ist,
(2) X ein Sauerstoffatom oder ein Schwefelatom ist, und
(3) R¹ und R² jeweils unabhängig voneinander ausgewählt sind aus Alkyl, Alkoxy, Alkylthio, Alkenyloxy, Alkinyloxy, Halogenalkoxy, Cyanalkoxy, Alkoxyalkoxy, Cycloalkyloxy, Cycloalkylalkoxy, Alkylideniminooxy, Chlor und einer Aminogruppe, welche mit einem oder zwei Substituenten aus der Gruppe Alkyl, Alkenyl und Phenyl substituiert ist, mit der Maßgabe, daß die Aminogruppe nicht mehr als eine Phenylgruppe aufweist, und daß R¹ zusätzlich aus Phenyl oder Phenoxy ausgewählt sein kann, und mit der Maßgabe, daß, wenn R¹ und R² beide Alkoxyreste sind, R¹ und R² zusammen mit dem Phosphoratom einen 6-gliedrigen Sauerstoff-enthaltenden Ring bilden können, und mit der Maßgabe, daß, wenn R¹ und R² beide Alkoxyreste sind, Y nicht eine Phenyl-, 4-Methylphenyl-, 4-Chlorphenyl-, 4-Bromphenyl- oder 3-Nitrophenylgruppe ist,
(ii) einen Dichloracetamid-Safener mit der allgemeinen Formel 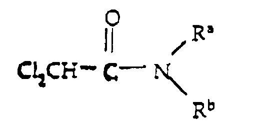 worin R^{a} und R^{b} jeweils unabhängig voneinander aus Alkylresten, Alkenylresten oder halogensubstituierten Alkylresten oder Alkenylresten ausgewählt sind oder R^{a} und R^{b} zusammen mit dem Stickstoffatom, an welches sie gebunden sind, einen 5- oder 6-gliedrigen, substituierten heterocyclischen Ring bilden, ausgewählt aus der Gruppe, bestehend aus 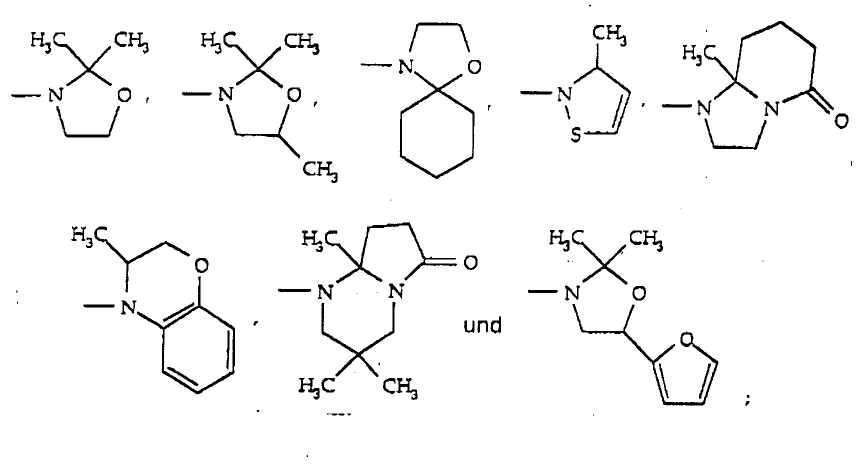 und (iii) einen landwirtschaftlich annehmbaren Träger.

2. Zusammensetzung nach Anspruch 1, wobei jeder Rest Y mit bis zu drei Substituenten substituiert sein kann, die jeweils unabhängig voneinander aus Halogen, Cyan, Nitro, (C₁-C₆)-Alkoxy, Halogen-(C₁-C₄)-alkoxy, (C₁-C₆)-Alkyl, Halogen-(C₁-C₄)-alkyl, Phenyl, (C₁-C₄)-Alkylcarbonyloxy, Di-(C₁-C₄)-alkylcarbamoyl, (C₁-C₆)-Alkylthio, Halogen-(C₁-C₄)-alkylthio, Arylthio, Aryloxy, Formyl, (C₁-C₄)-Alkylcarbonyl, Arylcarbonyl, Di-(C₁-C₄)-alkylamino, Meth-oxymethyl, Methylthiomethyl und (C₁-C₄)-Alkoxycarbonyl ausgewählt sind,
R¹ und R² jeweils unabhängig voneinander ausgewählt sind aus (C₁-C₆)-Alkyl, (C₁-C₆)-Alkoxy, Halogen-(C₂-C₄)-alkoxy, (C₁-C₄)-Alkylthio, (C₃-C₄)-Alkenyloxy, (C₃-C₄)-Alkinyloxy, (C₁-C₄)-Alkoxy-(C₁-C₄)-alkoxy, (C₄-C₈)-Cycloalkyloxy, (C₃-C₆)-Cycloalkyl-(C₁-C₃)-alkoxy, Cyan-(C₁-C₄)-alkoxy, (C₂-C₄)-Alkylideniminooxy, Chlor und einer Aminogruppe, welche mit einem oder zwei Substituenten aus der Gruppe (C₁-C₄)-Alkyl, (C₂-C₄)-Alkenyl und Phenyl substituiert ist, mit der Maßgabe, daß die Aminogruppe nicht mehr als eine Phenylgruppe aufweist, und daß R¹ zusätzlich aus Phenyl oder Phenoxy ausgewählt sein kann, und mit der Maßgabe, daß, wenn R¹ und R² beide Alkoxy sind, R¹ und R² zusammen mit dem Phosphoratom einen 6-gliedrigen Sauerstoff-enthaltenden Ring bilden können, und
worin R^{a} und R^{b} jeweils unabhängig voneinander aus (C₂-C₄)-Alkylresten, (C₃-C₄)-Alkenylresten oder halogensubstituierten (C₂-C₄)-Alkylresten oder (C₃-C₄)-Alkenylresten ausgewählt sind oder R^{a} und R^{b} zusammen mit dem Stickstoffatom, an welches sie gebunden sind, den 5-gliedrigen, heterocyclischen Teil 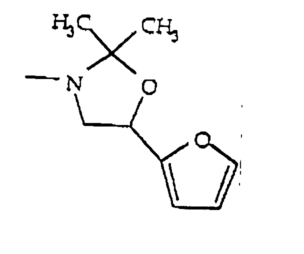 bilden.

3. Zusammensetzung nach Anspruch 2, wobei der Rest Y ein Phenylrest mit bis zu drei Substituenten ist, worin einer an der ortho-Position ist, unabhängig ausgewählt aus Halogen, Cyan, Nitro, (C₁-C₆)-Alkoxy, Halogen-(C₁-C₄)-alkoxy, (C₁-C₆)-Alkyl, Halogen-(C₁-C₄)-alkyl, Phenyl, (C₁-C₄)-Alkylcarbonyloxy, Di(C₁-C₄)-alkylcarbamoyl, (C₁-C₆)-Alkylthio, Halogen-(C₁-C₄)-alkylthio, Arylthio, Aryloxy, Formyl, (C₁-C₄)-Alkylcarbonyl, Arylcarbonyl, Di(C₁-C₄)-alkylamino und (C₁-C₄)-Alkoxycarbonyl;
X ein Sauerstoffatom ist,
R¹ und R² unabhängig voneinander ausgewählt sind aus (C₁-C₂)-Alkyl und
(C₁-C₄)-Alkoxy, mit der Maßgabe, daß R¹ und R² nicht beide Alkylreste sind; und
R^{a} und R^{b} jeweils unabhängig voneinander aus Ethyl, n-Propyl, Allyl oder mit Chlor substituiertem Ethyl, n-Propyl oder Allyl ausgewählt sind oder R^{a} und R^{b} zusammen mit dem Stickstoffatom, an welches sie gebunden sind, den 5-gliedrigen, heterocyclischen Teil 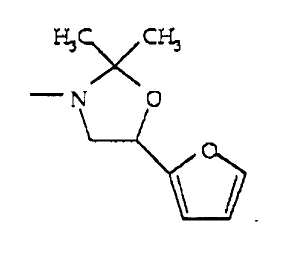 bilden.

4. Zusammensetzung nach Anspruch 3, wobei der Rest Y ein in seiner ortho-Position monosubstituierter Phenylrest ist, wobei der Substituent unabhängig ausgewählt ist aus Chlor, Brom, Ethyl, Ethoxy, n-Propoxy, Trifluormethyl, Pentafluorethyl, Methylthio, Ethylthio und Trifluormethylthio;
R¹ aus Methoxy, Ethoxy, Isopropyloxy, Methyl und Ethyl ausgewählt ist;
R² aus Ethoxy und Isopropyloxy ausgewählt ist; und
R^{a} und R^{b} jeweils unabhängig voneinander Allyl oder 3,3-Dichlorallyl sind oder R^{a} und R^{b} zusammen mit dem Stickstoffatom, an welches sie gebunden sind, den 5-gliedrigen, heterocyclischen Teil 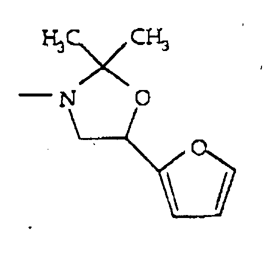 bilden.

5. Zusammensetzung nach Anspruch 3, wobei der Rest Y ein in seiner ortho-Position substituierter Phenylrest ist, wobei der Substituent unabhängig ausgewählt ist aus Chlor, Brom, Trifluormethoxy, Trifluormethylthio, Methylthio, Ethylthio und Trifluormethyl und einen zweiten Substituenten in seiner zweiten ortho-Position aufweist, ausgewählt aus Chlor, Brom, Methyl, Ethyl, Isopropyl, Methoxy, Ethoxy, Trifluormethyl, Difluormethyl, Difluormethoxy, Trifluormethylthio, Methylthio, Ethylthio, Pentafluorethyl, Fluor und Trifluormethoxy,
R¹ aus Methoxy, Ethoxy, Isopropyloxy, Methyl und Ethyl ausgewählt ist;
R² aus Ethoxy und Isopropyloxy ausgewählt ist; und
R^{a} und R^{b} jeweils unabhängig voneinander Allyl oder 3,3-Dichlorallyl sind oder R^{a} und R^{b} zusammen mit dem Stickstoffatom, an welches sie gebunden sind, den 5-gliedrigen, heterocyclischen Teil 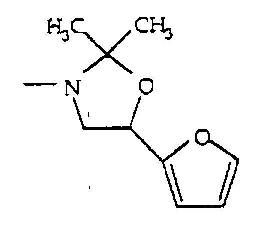 bilden.

6. Zusammensetzung nach Anspruch 3, wobei der Rest Y ein mit Fluor, Chlor oder Brom in den zwei ortho-Positionen und mit Methyl oder Ethyl in der meta-Position substituierter Phenylrest ist,
R¹ aus Methoxy, Ethoxy, Isopropyloxy, Methyl und Ethyl ausgewählt ist;
R² aus Ethoxy und Isopropyloxy ausgewählt ist; und
R^{a} und R^{b} jeweils unabhängig voneinander Allyl oder 3,3-Dichlorallyl sind oder R^{a} und R^{b} zusammen mit dem Stickstoffatom, an welches sie gebunden sind, den 5-gliedrigen, heterocyclischen Teil 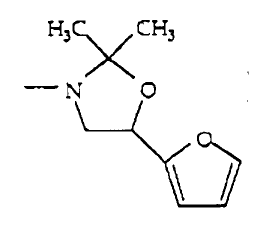 bilden.

7. Zusammensetzung nach Anspruch 3, wobei der Rest Y 2-Chlorphenyl, 2-Bromphenyl, 2,5-Dichlorphenyl, 2,6-Dichlorphenyl, 2-Trifluormethylphenyl, 2-Chlor-6-isopropylphenyl, 2-Chlor-6-methylphenyl, 2-Methyl-6-trifluormethylphenyl,2-Methoxy-6-trifluormethylphenyl,2-Trifluormethoxyphenyl, 2-Methylthiophenyl, 2-Ethylthiophenyl, 2-Trifluormethylthiophenyl, 2-Trifluormethyl-6-fluorphenyl, 2-Trifluormethyl-6-ethylphenyl, 2-Trifluormethyl-4-fluorphenyl, 2-Trifluormethyl-6-ethoxyphenyl, 2,5-Difluorphenyl, 2-Trifluormethoxy-6-fluorphenyl, 2-Trifluormethyl-6-methylthiophenyl, 2-Trifluormethyl-6-ethylthiophenyl, 2-Trifluormethylthio-4-fluorphenyl, 2-Trifluormethylthio-6-methyphenyl, 2-Trifluormethylthio-6-chlorphenyl, 2-Trifluormethylthio-6-ethylphenyl, 2-Trifluormethylthio-6-fluorphenyl, 2-Methyl-6-methylthiophenyl, 2-Ethyl-6-methylthiophenyl, 2-Fluor-6-methylthiophenyl, 2-Methyl-6-ethylthiophenyl, 2-Ethyl-6-ethylthiophenyl, 2-Chlor-6-methylthiophenyl, 2-Fluor-6-ethylthiophenyl, 2-Methyl-3,6-difluorphenyl, 2,4,6-Trifluorphenyl, 2,6-Dichlor-3-methylphenyl, 2-Pentafluorethylphenyl, 2-Trifluormethoxy-6-ethylphenyl, 2-Fluor-6-methylthiophenyl, 2-Chlor-6-ethylthiophenyl, 2-Fluor-6-ethylthiophenyl, 2-Fluor-6-ethylphenyl oder 2-Ethyl-3,6-difluorphenyl ist,
R¹ aus Methoxy, Ethoxy, Isopropyloxy, Methyl und Ethyl ausgewählt ist;
R² aus Ethoxy und Isopropyloxy ausgewählt ist; und
R^{a} und R^{b} jeweils unabhängig voneinander Allyl oder 3,3-Dichlorallyl sind oder R^{a} und R^{b} zusammen mit dem Stickstoffatom, an welches sie gebunden sind, den 5-gliedrigen, heterocyclischen Teil 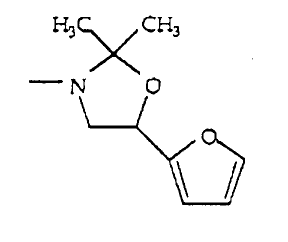 bilden.

8. Zusammensetzung nach Anspruch 7, welche eine oder mehrere der herbizide Verbindungen, ausgewählt aus
O-Isopropyl-P-ethyl-[[(2-chlor-6-methylphenyl)sulfonyloxy]methyl]phosphinat,
O-Isopropyl-P-methyl-[[(2-chlor-6-methylphenyl)sulfonyloxy]methyl]phosphinat,
O,O-Diisopropyl-[[(2-chlor-6-methylphenyl)sulfonyloxy]methyl]phosphonat,
O-Isopropyl-O-ethyl-[[(2-chlor-6-methylphenyl)-sulfonyloxy]methyl]phosphonat,
O-Isopropyl-O-methyl-[[(2-chlor-6-methylphenyl)sulfonyloxy]methyl]phosphonat,
O-Ethyl-P-ethyl-[[(2-chlor-6-methylphenyl)sulfonyloxy]methyl]phosphinat,
O-Ethyl-P-methyl-[[(2-chlor-6-methylphenyl)sulfonyloxy]methyl]phosphinat,
O-Diethyl-[[(2-chlor-6-methylphenyl)sulfonyloxy]-methyl]phosphonat,
O-Ethyl-O-methyl-[[(2-chlor-6-methylphenyl)sulfonyloxy]methyl]phosphonat,
O-Isopropyl-P-ethyl-[[(2-chlor-6-isopropylphenyl)sulfonyloxy]methyl]phosphinat,
O-Isopropyl-P-methyl-[[(2-chlor-6-isopropylphenyl)sulfonyloxy]methyl]phosphinat,
O-Isopropyl-O-ethyl-[[(2-chlor-6-isopropylphenyl)sulfonyloxy]methyl]phosphonat,
O-Isopropyl-O-methyl-[[(2-chlor-6-isopropylphenyl)sulfonyloxy]methyl]phosphonat,
O,O-Diethyl-[[(2-chlor-6-isopropylphenyl)sulfonyloxy]methyl]phosphonat,
O,O-Diisopropyl-[[(2-chlor-6-isopropylphenyl)sulfonyloxy]methyl]phosphonat,
O-Ethyl-P-methyl-[[(2-chlor-6-isopropylphenyl)sulfonyloxy]methyl]phosphinat,
O-Isopropyl-P-ethyl-[[(2-chlorophenyl)sulfonyloxy]-methyl]phosphinat,
O-Isopropyl-P-methyl-[[(2-chlorophenyl)sulfonyloxy]-methyl]phosphinat,
O-Isopropyl-O-ethyl-[[(2-chlorophenyl)sulfonyloxy]-methyl]phosphonat,
O-Isopropyl-O-methyl-[[(2-chlorphenyl)sulfonyloxy]-methyl]phosphonat,
O,O-Diethyl-[[(2-chlorphenyl)sulfonyloxy]methyl]-phosphonat,
O,O-Diisopropyl-[[(2-chlorphenyl)sulfonyloxy]methyl]phosphonat,
O-Isopropyl-P-ethyl-[[(2-trifluormethyl)phenyl)sulfonyloxy]methyl]phosphinat,
O-Isopropyl-P-methyl-[[(2-(trifluormethyl)phenyl)sulfonyloxy]methyl]phosphinat,
O-Isopropyl-O-ethyl-[[(2-(trifluormethyl)phenyl)sulfonyloxy]methyl]phosphonat,
O-Isopropyl-O-methyl-[[(2-(trifluormethyl)phenyl)sulfonyloxy]methyl]phosphonat,
O,O-Diethyl-[[(2-(trifluormethyl)phenyl)sulfonyloxy]methyl]phosphonat,
O,O-Diisopropyl-[[(2-(trifluormethyl)phenyl)sulfonyloxy]methyl]phosphonat,
O-Isopropyl-P-ethyl-[[(2-(trifluormethyl)-6-methylphenyl)sulfonyloxy]methyl]-phosphinat,
O-Isopropyl-P-methyl-[[(2-(trifluormethyl)-6-methylphenyl)sulfonyloxy] methyl]phosphinat,
O-Isopropyl-O-ethyl-[[(2-(trifluormethyl)-6-methylphenyl)sulfonyloxy]methyl]phosphonat,
O-Isopropyl-O-methyl-[[(2-(trifluormethyl)-6-methylphenyl)sulfonyloxy]methyl]phosphonat,
O-Isopropyl-P-ethyl-[[(2-methoxy-6-(trifluormethyl)phenyl)sulfonyloxy]methyl]phosphinat,
O,O-Diisopropyl-[[(2-methoxy-6-(trifluormethyl)phenyl)sulfonyloxy]methyl]phosphonat,
O-Isopropyl-O-methyl-[[(2-(trifluormethyl)-6-ethylphenyl)sulfonyloxy]methyl]phosphonat,
O-Isopropyl-P-methyl-[[(2-methoxy-6-(trifluormethyl)phenyl)sulfonyloxy]methyl]phosphinat,
O-Isopropyl-O-ethyl-[[(2-methoxy-6-(trifluormethyl)phenyl)sulfonyloxy]methyl]phosphonat,
O-Isopropyl-O-methyl-[[(2-methoxy-6-(trifluormethyl)phenyl)sulfonyloxy]methyl]phosphonat,
O-Isopropyl-P-ethyl-[[(2,6-dichlorphenyl)sulfonyloxy]methyl]phosphinat,
O-Isopropyl-P-methyl-[[(2,6-dichlorphenyl)sulfonyloxy]methyl]phosphinat,
O,O-Diisopropyl-[[(2,6-dichlorphenyl)sulfonyloxy]methyl]phosphonat,
O-Isopropyl-O-ethyl-[[(2,6-dichlorphenyl)sulfonyloxy]methyl]phosphonat,
O-Isopropyl-O-methyl-[[(2,6-dichlorphenyl)sulfonyloxy]methyl]phosphonat,
O,O-Diethyl-[[(2,6-dichlorphenyl)sulfonyloxy]methyl]phosphonat,
O,O-Diethyl-[[(2,5-dichlorphenyl)sulfonyloxy]methyl]phosphonat,
O,O-Diisopropyl-[[(2,5-dichlorphenyl)sulfonyloxy]methyl]phosphonat,
O-Isopropyl-P-ethyl-[[(2,5-dichlorphenyl)sulfonyloxy]methyl]phosphinat,
O-Isopropyl-P-methyl-[[(2,5-dichlorphenyl)sulfonyloxy]methyl]phosphinat,
O-Isopropyl-O-ethyl-[[(2,5-dichlorophenyl)sulfonyloxy]methyl]phosphonat,
O-Isopropyl-O-methyl-[[(2,5-dichlorphenyl)sulfonyloxy]methyl]phosphonat,
O,O-Diethyl-[[(2-methyl-6-(trifluormethyl)phenyl)sulfonyloxy]-methyl]phosphonat,
O,O-Didiisopropyl-[[(2-methyl-6-(trifluormethyl)phenyl)sulfonyloxy]methyl]phosphonat,
O,O-Diethyl-[[(2-(trifluormethyl)-6-methoxyphenyl)-sulfonyloxy]methyl]phosphonat,
O-Isopropyl-P-methyl-[[(2-(trifluormethyl)-6-ethylphenyl)sulfonyloxy]methyl]phosphinat,
O-Isopropyl-P-ethyl-[[(2-(trifluormethyl)-6-ethylphenyl)-sulfonyloxy]methyl]phosphinat,
O-Isopropyl-O-ethyl-[[(2-(trifluormethyl)-6-ethylphenyl)-sulfonyloxy]methyl]phosphonat,
O,O-Diisopropyl-[[(2-(trifluormethyl)-6-ethylphenyl)-sulfonyloxy]methyl]phosphonat,
O,O-Diethyl-[[(2-(trifluormethyl)-6-ethylphenyl)-sulfonyloxy]methyl]phosphonat,
O-Isopropyl-P-methyl-[[(2-(trifluormethyl)-6-ethoxyphenyl)-sulfonyloxy]methyl]phosphinat,
O-Isopropyl-P-ethyl-[[(2-(trifluormethyl)-6-ethoxyphenyl)-sulfonyloxy]methyl]phosphinat,
O-Isopropyl-O-ethyl-[[(2-(trifluormethyl)-6-ethoxyphenyl)-sulfonyloxy]methyl]phosphonat,
O,O-Diisopropyl-[[(2-(trifluormethyl)-6-ethoxyphenyl)-sulfonyloxy]methyl]phosphonat,
O,O-Diethyl-[[(2-(trifluormethyl)-6-ethoxyphenyl)-sulfonyloxy]methyl]phosphonat,
O-Isopropyl-O-methyl-[[(2-(trifluormethyl)-6-ethoxyphenyl)-sulfonyloxy]methyl]phosphonat,
O-Isopropyl-P-methyl-[[(2-(trifluormethyl)-6-fluorphenyl)-sulfonyloxy]methyl]phosphinat,
O-Isopropyl-P-ethyl-[[(2-(trifluormethyl)-6-fluorphenyl)-sulfonyloxy]methyl]phosphinat,
O-Isopropyl-O-ethyl-[[(2-(trifluormethyl)-6-fluorphenyl)-sulfonyloxy]methyl]phosphonat,
O,O-Diisopropyl-[[(2-(trifluormethyl)-6-fluorphenyl)-sulfonyloxy]methyl]phosphonat,
O,O-Diethyl-[[(2-(trifluormethyl)-6-fluorphenyl)-sulfonyloxy]methyl]phosphonat,
O-Isopropyl-O-methyl-[[(2-(trifluormethyl)-6-fluorphenyl)-sulfonyloxy]methyl]phosphonat,
O-Isopropyl-P-methyl-[[(2-(trifluormethoxyphenyl)-sulfonyloxy]methyl]phosphinat,
O-Isopropyl-P-ethyl-[[(2-(trifluormethoxyphenyl)-sulfonyloxy]methyl]phosphinat,
O-Isopropyl-O-ethyl-[[(2-(trifluormethoxyphenyl)-sulfonyloxy]methyl]phosphonat,
O,O-Diisopropyl-[[(2-(trifluormethoxyphenyl)-sulfonyloxy]methyl]phosphonat,
O,O-Diethyl-[[(2-(trifluormethoxyphenyl)sulfonyloxy]methyl]phosphonat,
O-Isopropyl-O-methyl-[[(2-(trifluormethoxyphenyl)-sulfonyloxy]methyl]phosphonat,
O-Isopropyl-P-methyl-[[(2-(pentafluorethyl)phenyl)-sulfonyloxy]methyl]phosphinat,
O-Isopropyl-P-ethyl-[[(2-(pentafluorethyl)phenyl)-sulfonyloxy]methyl]phosphinat,
O-Isopropyl-O-ethyl-[[(2-(pentafluorethyl)phenyl)-sulfonyloxy]methyl]phosphonat,
O,O-Diisopropyl-[[(2-(pentafluorethyl)phenyl)sulfonyloxy]methyl]phosphonat,
O,O-Diethyl-[[(2-(pentafluorethyl)phenyl)sulfonyloxy]methyl]phosphonat,
O-Isopropyl-O-methyl-[[(2-(pentafluorethyl)phenyl)-sulfonyloxy]methyl]phosphonat,
O-Isopropyl-P-methyl-[[(2-methylthiophenyl)sulfonyloxy]methyl]phosphinat,
O-Isopropyl-P-ethyl-[[(2-methylthiophenyl)sulfonyloxy]methyl]phosphinat,
O-Isopropyl-O-ethyl-[[(2-methylthiophenyl)sulfonyloxy]methyl]phosphonat,
O,O-Diisopropyl-[[(2-methylthiophenyl)sulfonyloxy]methyl]phosphonat,
O,O-Diethyl-[[(2-methylthiophenyl)sulfonyloxy]-methyl]phosphonat,
O-Isopropyl-O-methyl-[[(2-methylthiophenyl)sulfonyloxy]-methyl]phosphonat,
O-Isopropyl-P-methyl-[[(2-ethylthiopnenyl)sulfonyloxy]methyl]phosphinat,
O-Isopropyl-P-ethyl-[[(2-ethylthiophenyl)sulfonyloxy]methyl]phosphinat,
O-Isopropyl-O-ethyl-[[(2-ethylthiophenyl)sulfonyloxy]methyl]phosphonat,
O,O-Diisopropyl-[[(2-ethylthiophenyl)sulfonyloxy]methyl]phosphonat,
O,O-Diethyl-[[(2-ethylthiophenyl)sulfonyloxy]-methyl]phosphonat,
O-Isopropyl-O-methyl-[[(2-ethylthiophenyl)sulfonyloxy]methyl]phosphonat,
O-Isopropyl-P-methyl-[[(2-trifluormethylthiophenyl)sulfonyloxy]-methyl]phosphinat,
O-Isopropyl-P-ethyl-[[(2-trifluormethylthiophenyl)sulfonyloxy]methyl]phosphinat,
O-Isopropyl-O-ethyl-[[(2-trifluormethylthiophenyl)sulfonyloxy]methyl]phosphonat,
O,O-Diisopropyl-[[(2-trifluormethylthiophenyl)sulfonyloxy]methyl]phosphonat,
O,O-Diethyl-[[(2-trifluormethylthiophenyl)sulfonyloxy]methyl]phosphonat,
O-Isopropyl-O-methyl-[[(2-trifluormethylthiophenyl)sulfonyloxy]-methyl]phosphonat,
O-Isopropyl-P-methyl-[[(2,5-difluorphenyl)sulfonyloxy]methyl]phosphinat,
O-Isopropyl-P-ethyl-[[(2,5-difluorphenyl)sulfonyloxy]methyl]phosphinat,
O-Isopropyl-O-ethyl-[[(2,5-difluorphenyl)sulfonyloxy]methyl]phosphonat,
O,O-Diisopropyl-[[(2,5-difluorphenyl)sulfonyloxy]methyl]phosphonat,
O,O-Diethyl-[[(2,5-difluorphenyl)sulfonyloxy]methyl]phosphonat,
O-Isopropyl-O-methyl-[[(2,5-difluorphenyl)sulfonyloxy]methyl]phosphonat,
O-Isopropyl-P-methyl-[[(2-(trifluormethoxy)-6-fluorphenyl)sulfonyloxy]methyl]phosphinat,
O-Isopropyl-P-ethyl-[[(2-(trifluormethoxy)-6-fluorphenyl)sulfonyloxy]methyl]phosphinat,
O-Isopropyl-O-ethyl-[[(2-(trifluormethoxy)-6-fluorphenyl)sulfonyloxy]methyl]phosphonat,
O,O-Diisopropyl-[[(2-(trifluormethoxy)-6-fluorphenyl)sulfonyloxy]-methyl]phosphonat,
O,O-Diethyl-[[(2-(trifluormethoxy)-6-fluorphenyl)sulfonyloxy]-methyl]phosphonat,
O-Isopropyl-O-methyl-[[(2-(trifluormethoxy)-6-fluorphenyl)sulfonyloxy]methyl]phosphonat,
O-Isopropyl-P-methyl-[[(2-(trifluormethoxy)-6-ethylphenyl)sulfonyloxy]methyl]phosphinat,
O-Isopropyl-P-ethyl-[[(2-(trifluormethoxy)-6-ethylphenyl)sulfonyloxy]methyl]phosphinat,
O-Isopropyl-O-ethyl-[[(2-(trifluormethoxy)-6-ethylphenyl)sulfonyloxy]methyl]phosphonat,
O,O-Diisopropyl-[[(2-(trifluormethoxy)-6-ethylphenyl)sulfonyloxy]-methyl]phosphonat,
O,O-Diethyl-[[(2-(trifluormethoxy)-6-ethylphenyl)sulfonyloxy]-methyl]phosphonat,
O-Isopropyl-O-methyl-[[(2-(trifluormethoxy)-6-ethylphenyl)sulfonyloxy]methyl]phosphonat,
O-Isopropyl-P-methyl-[[(2-(trifluormethyl)-6-methylthiophenyl)sulfonyloxy]methyl]phosphinat,
O-Isopropyl-P-ethyl-[[(2-(trifluormethyl)-6-methylthiophenyl)sulfonyloxy]methyl]phosphinat,
O-Isopropyl-O-ethyl-[[(2-(trifluormethyl)-6-methylthiophenyl)sulfonyloxy]methyl]phosphonat,
O,O-Diisopropyl-[[(2-(trifluormethyl)-6-methylthiophenyl)sulfonyloxy]methyl]phosphonat,
O,O-Diethyl-[[(2-(trifluormethyl)-6-methylthiophenyl)sulfonyloxy]methyl]phosphonat,
O-Isopropyl-O-methyl-[[(2-(trifluormethyl)-6-methylthiophenyl)sulfonyloxy]methyl]phosphonat,
O-Isopropyl-P-methyl-[[(2-(trifluormethyl)-6-ethylthiophenyl)sulfonyloxy]methyl]phosphinat,
O-Isopropyl-P-ethyl-[[(2-(trifluormethyl)-6-ethylthiophenyl)sulfonyloxy]methyl]phosphinat,
O-Isopropyl-O-ethyl-[[(2-(trifluormethyl)-6-ethylthiophenyl)sulfonyloxy]methyl]phosphonat,
O,O-Diisopropyl-[[(2-(trifluormethyl)-6-ethylthiophenyl)sulfonyloxy]-methyl] phosphonat,
O,O-Diethyl-[[(2-(trifluormethyl)-6-ethylthiophenyl)sulfonyloxy]-methyl]phosphonat,
O-Isopropyl-O-methyl-[[(2-(trifluormethyl)-6-ethylthiophenyl)sulfonyloxy]methyl]phosphonat,
O-Isopropyl-P-methyl-[[(2-(trifluormethylthio)-4-fluorphenyl)sulfonyloxy]methyl]phosphinat,
O-Isopropyl-P-ethyl-[[(2-(trifluormethylthio)-4-fluorphenyl)sulfonyloxy]methyl]phosphinat,
O-Isopropyl-O-ethyl-[[(2-(trifluormethylthio)-4-fluorphenyl)sulfonyloxy]methyl]phosphonat,
O,O-Diisopropyl-[[(2-(trifluormethylthio)-4-fluorphenyl)sulfonyloxy]-methyl]phosphonat,
O,O-Diethyl-[[(2-(trifluormethylthio)-4-fluorphenyl)sulfonyloxy]-methyl]phosphonat,
O-Isopropyl-O-methyl-[[(2-(trifluormethylthio)-4-fluorphenyl)sulfonyloxy]methyl]phosphonat,
O-Isopropyl-P-methyl-[[(2-(trifluormethylthio)-6-ethylphenyl)sulfonyloxy]methyl]phosphinat,
O-Isopropyl-P-ethyl-[[(2-(trifluormethylthio)-6-ethylphenyl)sulfonyloxy]methyl]phosphinat,
O-Isopropyl-O-ethyl-[[(2-(trifluormethylthio)-6-ethylphenyl)sulfonyloxy]methyl]phosphonat,
O,O-Diisopropyl-[[(2-(trifluormethylthio)-6-ethylphenyl)sulfonyloxy]methyl]phosphonat,
O,O-Diethyl-[[(2-(trifluormethylthio)-6-ethylphenyl)sulfonyloxy]-methyl]phosphonat,
O-Isopropyl-O-methyl-[[(2-(trifluormethylthio)-6-ethylphenyl)sulfonyloxy]methyl]phosphonat,
O-Isopropyl-P-methyl-[[(2-(trifluormethylthio)-6-methylphenyl)sulfonyloxy]methyl]phosphinat,
O-Isopropyl-P-ethyl-[[(2-(trifluormethylthio)-6-methylphenyl)sulfonyloxy]methyl]phosphinat,
O-Isopropyl-O-ethyl-[[(2-(trifluormethylthio)-6-methylphenyl)sulfonyloxy]methyl]phosphonat,
O,O-Diisopropyl-[[(2-(trifluormethylthio)-6-methylphenyl)sulfonyloxy]methyl]phosphonat,
O,O-Diethyl-[[(2-(trifluormethylthio)-6-methylphenyl)sulfonyloxy]-methyl]phosphonat,
O-Isopropyl-O-methyl-[[(2-(trifluormethylthio)-6-methylphenyl)sulfonyloxy]methyl]phosphonat,
O-Isopropyl-P-methyl-[[(2-(trifluormethylthio)-6-chlorphenyl)sulfonyloxy]methyl]phosphinat,
O-Isopropyl-P-ethyl-[[(2-(trifluormethylthio)-6-chlorphenyl)sulfonyloxy]methyl]phosphinat,
O-Isopropyl-O-ethyl-[[(2-(trifluormethylthio)-6-chlorphenyl)sulfonyloxy]methyl]phosphonat,
O,O-Diisopropyl-[[(2-(trifluormethylthio)-6-chlorphenyl)sulfonyloxy]methyl]phosphonat,
O,O-Diethyl-[[(2-(trifluormethylthio)-6-chlorphenyl)sulfonyloxy]-methyl] phosphonat,
O-Isopropyl-O-methyl-[[(2-(trifluormethylthio)-6-chlorphenyl)sulfonyloxy]methyl]phosphonat,
O-Isopropyl-P-methyl-[[(2-(trifluormethyl)-4-fluorphenyl)sulfonyloxy]methyl]phosphinat,
O-Isopropyl-P-ethyl-[[(2-(trifluormethyl)-4-fluorphenyl)sulfonyloxy]-methyl] phosphinat,
O-Isopropyl-O-ethyl-[[(2-(trifluormethyl)-4-fluorphenyl)sulfonyloxy]-methyl] phosphonat,
O,O-Diisopropyl-[[(2-(trifluormethyl)-4-fluorphenyl)sulfonyloxy]-methyl]phosphonat,
O,O-Diethyl-[[(2-(trifluormethyl)-4-fluorphenyl)-sulfonyloxy]methyl]phosphonat,
O-Isopropyl-O-methyl-[[(2-(trifluormethyl)-4-fluorphenyl)sulfonyloxy]methyl]phosphonat,
O-Isopropyl-P-methyl-[[(2-(trifluormethylthio)-6-fluorphenyl)sulfonyloxy]methyl]phosphinat,
O-Isopropyl-P-ethyl-[[(2-(trifluormethylthio)-6-fluorphenyl)sulfonyloxy]methyl]phosphinat,
O-Isopropyl-O-ethyl-[[(2-(trifluormethylthio)-6-fluorphenyl)sulfonyloxy]methyl]phosphonat,
O,O-Diisopropyl-[[(2-(trifluormethylthio)-6-fluorphenyl)sulfonyloxy]-methyl] phosphonat,
O,O-Diethyl-[[(2-(trifluormethylthio)-6-fluorphenyl)sulfonyloxy]-methyl]phosphonat,
O-Isopropyl-O-methyl-[[(2-(trifluormethylthio)-6-fluorphenyl)sulfonyloxy]methyl]phosphonat,
O-Isopropyl-P-methyl-[[(2-methyl-6-methylthiophenyl)sulfonyloxy]methyl]phosphinat,
O-Isopropyl-P-ethyl-[[(2-methyl-6-methylthiophenyl)sulfonyloxy]-methyl]phosphinat,
O-Isopropyl-O-ethyl-[[(2-methyl-6-methylthiophenyl)sulfonyloxy]-methyl]phosphonat,
O,O-Diisopropyl-[[(2-methyl-6-methylthiophenyl)sulfonyloxy]methyl]phosphonat,
O,O-Diethyl-[[(2-methyl-6-methylthiophenyl)sulfonyloxy]methyl]phosphonat,
O-Isopropyl-O-methyl-[[(2-methyl-6-methylthiophenyl)sulfonyloxy]methyl]phosphonat,
O-Isopropyl-P-methyl-[[(2-ethyl-6-methylthiophenyl)sulfonyloxy]methyl]phosphinat,
O-Isopropyl-P-ethyl-[[(2-ethyl-6-methylthiophenyl)sulfonyloxy]methyl]phosphinat,
O-Isopropyl-O-ethyl-[[(2-ethyl-6-methylthiophenyl)sulfonyloxy]methyl]phosphonat,
O,O-Diisopropyl-[[(2-ethyl-6-methylthiophenyl)sulfonyloxy]methyl]phosphonat,
O,O-Diethyl-[[(2-ethyl-6-methylthiophenyl)sulfonyloxy]methyl]phosphonat,
O-Isopropyl-O-methyl-[[(2-ethyl-6-methylthiophenyl)sulfonyloxy]methyl]phosphonat,
O-Isopropyl-P-methyl-[[(2-fluor-6-methylthiophenyl)sulfonyloxy]-methyl]phosphinat,
O-Isopropyl-P-ethyl-[[(2-fluor-6-methylthiophenyl)sulfonyloxy]-methyl]phosphinat,
O-Isopropyl-O-ethyl-[[(2-fluor-6-methylthiophenyl)sulfonyloxy]-methyl]phosphonat,
O,O-Diisopropyl-[[(2-fluor-6-methylthiophenyl)-sulfonyloxy]methyl]phosphonat,
O,O-Diethyl-[[(2-fluor-6-methylthiophenyl)sulfonyloxy]methyl]phosphonat,
O-Isopropyl-O-methyl-[[(2-fluor-6-methylthiophenyl)sulfonyloxy]-methyl]phosphonat,
O-Isopropyl-P-methyl-[[(2-methyl-6-ethylthiophenyl)sulfonyloxy]-methyl]phosphinat,
O-Isopropyl-P-ethyl-[[(2-methyl-6-ethylthiophenyl)sulfonyloxy]-methyl]phosphinat,
O-Isopropyl-O-ethyl-[[(2-methyl-6-ethylthiophenyl)sulfonyloxy]-methyl]phosphonat,
O,O-Diisopropyl-[[(2-methyl-6-ethylthiophenyl)sulfonyloxy]-methyl]phosphonat,
O,O-Diethyl-[[(2-methyl-6-ethylthiophenyl)sulfonyloxy]methyl]phosphonat,
O-Isopropyl-O-methyl-[[(2-methyl-6-ethylthiophenyl)sulfonyloxy]methyl]phosphonat,
O-Isopropyl-P-methyl-[[(2-ethyl-6-ethylthiophenyl)sulfonyloxy]-methyl]phosphinat,
O-Isopropyl-P-ethyl-[[(2-ethyl-6-ethylthiophenyl)-sulfonyloxy]-methyl]phosphinat,
O-Isopropyl-O-ethyl-[[(2-ethyl-6-ethylthiophenyl)sulfonyloxy]-methyl]phosphonat,
O,O-Diisopropyl-[[(2-ethyl-6-ethylthiophenyl)sulfonyloxy]-methyl]phosphonat,
O,O-Diethyl-[[(2-ethyl-6-ethylthiophenyl)sulfonyloxy]methyl]phosphonat,
O-Isopropyl-O-methyl-[[(2-ethyl-6-ethylthiophenyl)sulfonyloxy]-methyl]phosphonat,
O-Isopropyl-P-methyl-[[(2-chlor-6-ethylthiophenyl)sulfonyloxy]methyl]phosphinat,
O-Isopropyl-P-ethyl-[[(2-chlor-6-ethylthiophenyl)sulfonyloxy]methyl]phosphinat,
O-Isopropyl-O-ethyl-[[(2-chlor-6-ethylthiophenyl)sulfonyloxy]methyl]phosphonat,
O,O-Diisopropyl-[[(2-chlor-6-ethylthiophenyl)sulfonyloxy]-methyl]phosphonat,
O,O-Diethyl-[[(2-chlor-6-ethylthiophenyl)sulfonyloxy]methyl]phosphonat,
O-Isopropyl-O-methyl-[[(2-chlor-6-ethylthiophenyl)-sulfonyloxy]methyl]phosphonat,
O-Isopropyl-P-methyl-[[(2-fluor-6-ethylthiophenyl)-sulfonyloxy]methyl]phosphinat,
O-Isopropyl-P-ethyl-[[(2-fluor-6-ethylthiophenyl)-sulfonyloxy]methyl]phosphinat,
O-Isopropyl-O-ethyl-[[(2-fluor-6-ethylthiophenyl)-sulfonyloxy]methyl]phosphonat,
O,O-Diisopropyl-[[(2-fluor-6-ethylthiophenyl)sulfonyloxy]methyl]phosphonat,
O,O-Diethyl-[[(2-fluor-6-ethylthiophenyl)sulfonyloxy]methyl]phosphonat,
O-Isopropyl-O-methyl-[[(2-fluor-6-ethylthiophenyl)-sulfonyloxy]methyl]phosphonat,
O-Isopropyl-P-methyl-[[(2-fluor-6-ethylphenyl)sulfonyloxy]methyl]phosphinat,
O-Isopropyl-P-ethyl-[[(2-fluor-6-ethylphenyl)sulfonyloxy]methyl]phosphinat,
O-Isopropyl-O-ethyl-[[(2-fluor-6-ethylphenyl)sulfonyloxy]methyl]phosphonat,
O,O-Diisopropyl-[[(2-fluor-6-ethylphenyl)sulfonyloxy]methyl]phosphonat,
O,O-Diethyl-[[(2-fluor-6-ethylphenyl)sulfonyloxy]-methyl]phosphonat,
O-Isopropyl-O-methyl-[[(2-fluor-6-ethylphenyl)sulfonyloxy]methyl]phosphonat,
O-Isopropyl-P-methyl-[[(2-methyl-3,6-difluorphenyl)sulfonyloxy]-methyl]phosphinat,
O-Isopropyl-P-ethyl-[[(2-methyl-3,6-difluorphenyl)sulfonyloxy]methyl]phosphinat,
O-Isopropyl-O-ethyl-[[(2-methyl-3,6-difluorphenyl)sulfonyloxy]methyl]phosphonat,
O,O-Diisopropyl-[[(2-methyl-3,6-difluorphenyl)sulfonyloxy]methyl]phosphonat,
O,O-Diethyl-[[(2-methyl-3,6-difluorphenyl)sulfonyloxy]methyl]phosphonat,
O-Isopropyl-O-methyl-[[(2-methyl-3,6-difluorphenyl)sulfonyloxy]methyl]phosphonat,
O-Isopropyl-P-methyl-[[(2-ethyl-3,6-difluorphenyl)-sulfonyloxy]methyl]phosphinat,
O-Isopropyl-P-ethyl-[[(2-ethyl-3,6-difluorphenyl)-sulfonyloxy]methyl]phosphinat,
O-Isopropyl-O-ethyl-[[(2-ethyl-3,6-difluorphenyl)-sulfonyloxy]methyl]phosphonat,
O,O-Diisopropyl-[[(2-ethyl-3,6-difluorphenyl)sulfonyloxy]methyl]phosphonat,
O,O-Diethyl-[[(2-ethyl-3,6-difluorphenyl)sulfonyloxy]methyl]phosphonat,
O-Isopropyl-O-ethyl-[[(2-methyl-3,6-difluorphenyl)-sulfonyloxy]methyl]phosphonat,
O-Isopropyl-P-methyl-[[(2,4,6-trifluorphenyl)sulfonyloxy]methyl]phosphinat,
O-Isopropyl-P-ethyl-[[(2,4,6-trifluorphenyl)sulfonyloxy]methyl]phosphinat,
O-Isopropyl-O-ethyl-[[(2,4,6-trifluorphenyl)sulfonyloxy]methyl]phosphonat,
O,O-Diisopropyl-[[(2,4,6-trifluorphenyl)sulfonyloxy]methyl]phosphonat,
O,O-Diethyl-[[(2,4,6-trifluorphenyl)sulfonyloxy]methyl]phosphonat und
O-Isopropyl-O-methyl-[[(2,4,6-trifluorphenyl)sulfonyloxy]methyl]phosphonat, und einen Safener, ausgewählt aus N,N-Diallydichloracetamid,
N,N-Bis(3,3-dichlorallyl)dichloracetamid und Furilazol, umfaßt.

9. Zusammensetzung nach Anspruch 2, wobei der Rest Y ein 5-gliedriger unsubstituierter oder substituierter heterocyclischer Substituent, ausgewählt aus Thienyl, Pyrazolyl, Isoxazolyl, Triazolyl, Tetrazolyl, Thiazolyl, Isothiazolyl, Pyrrolyl, Thiadiazolyl, Pyrimidinyl und Imidazolyl, ist und
R^{a} und R^{b} jeweils unabhängig voneinander aus Ethyl, n-Propyl, Allyl oder mit Chlor substituiertem Ethyl, n-Propyl oder Allyl ausgewählt sind oder R^{a} und
R^{b} zusammen mit dem Stickstoffatom, an welches sie gebunden sind, den 5-gliedrigen, heterocyclischen Teil 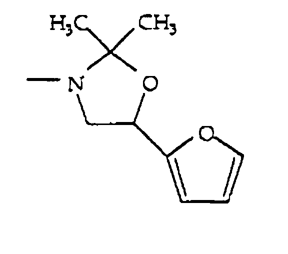 bilden.

10. Zusammensetzung nach Anspruch 9, wobei der Rest Y aus Pyrimidin-2-yl, Pyrimidin-4-yl und Pyrimidin-5-yl ausgewählt ist und R^{a} und R^{b} jeweils unabhängig voneinander aus Allyl oder 3,3-Dichlorallyl ausgewählt sind oder R^{a} und R^{b} zusammen mit dem Stickstoffatom, an welches sie gebunden sind, den 5-gliedrigen, heterocyclischen Teil 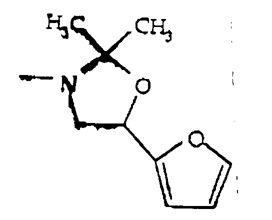 bilden.

11. Zusammmensetzung nach Anspruch 2, wobei der Rest Y ein kondensierter 5,6-gliedriger heteroaromatischer Substituent, ausgewählt aus Indolyl, Imidazolpyridinyl, Benzoimidazolyl, Benzothienyl, Benzothiazolyl, Benzothiadiazolyl, Benzotriazolyl, Benzoxazolyl und Pyrazolopyrimidinyl, ist und R^{a} und R^{b} jeweils unabhängig voneinander aus Ethyl, n-Propyl, Allyl oder mit Chlor substituiertem Ethyl, n-Propyl oder Allyl ausgewählt sind oder R^{a} und R^{b} zusammen mit dem Stickstoffatom, an welches sie gebunden sind, den 5-gliedrigen, heterocyclischen Teil 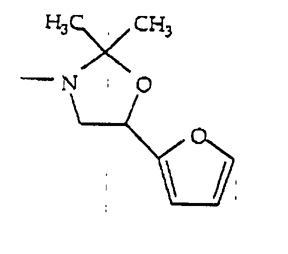 bilden.

12. Zusammensetzung nach Anspruch 9, wobei der Rest Y 5-Chlor-1-methyl-3-(C₁-C₃)alkyl-4-pyrazolyl ist, R¹ Isopropoxy ist, R² Methyl, Ethyl, Methoxy oder Ethoxy ist und R² vorzugsweise Methyl oder Ethyl ist und R^{a} und R^{b} jeweils unabhängig voneinander aus Allyl oder 3,3-Dichlorallyl ausgewählt sind oder R^{a} und R^{b} zusammen mit dem Stickstoffatom, an welches sie gebunden sind, den 5-gliedrigen, heterocyclischen Teil 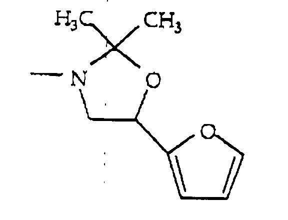 bilden.

13. Zusammensetzung nach Anspruch 1, wobei der Rest Y aus Phenyl, Naphthyl, Benzyl, (C₅-C₈)-Cycloalkyl, einem 5-gliedrigen heteroaromatischen Ring mit 1, 2, 3 oder 4 Heteroatomen, die unabhängig aus der Gruppe Stickstoff-, Sauerstoff- und Schwefelatomen ausgewählt sind, mit der Maßgabe, daß nicht mehr als ein Heteroatom Sauerstoff oder Schwefel ist, einem 6-gliedrigen heteroaromatischen Ring mit 1, 2 oder 3 Stickstoffatomen, einem kondensierten 5,6-gliedrigen heteroaromatischen Ring mit 1 bis 4 Heteroatomen, die unabhängig aus Stickstoff-, Sauerstoff- und Schwefelatomen ausgewählt sind, mit der Maßgabe, daß nicht mehr als ein Heteroatom Sauerstoff oder Schwefel ist, oder einem kondensierten 6,6-gliedrigen heteroaromatischen Ring mit 1 bis 4 Heteroatomen, die unabhängig voneinander aus der Gruppe Stickstoff-, Sauerstoff- und Schwefelatome ausgewählt sind, mit der Maßgabe, daß nicht mehr als ein Heteroatom Sauerstoff oder Schwefel ist, ausgewählt ist,
wobei jedes Y mit bis zu 3 Substituenten, die unabhängig voneinander aus Halogen, Cyan, Nitro, Alkoxy, Halogenalkoxy, Alkyl, Halogenalkyl, Phenyl, Alkylcarbonyloxy, Dialkylcarbamoyl und Alkoxycarbonyl ausgewählt sind, substituiert sein kann, mit der Maßgabe, daß
(a) der Rest Y höchstens einen dieser Substituenten aufweist, wenn Y ein Thiadiazolylring oder ein Tetrazolylring ist, und
(b) der Rest Y höchstens zwei dieser Substituenten aufweist, wenn Y ein Triazolylring, ein Thiazolylring oder ein Isothiazolylring ist, und,
(c) wenn der Rest Y Phenyl, Naphthyl oder Benzyl ist, vier oder fünf der Substituenten, ausgewählt aus Halogen, Acetoxy, Methyl, Methoxy und Halogenmethoxy, aber nicht mehr als zwei Substituenten ausgewählt aus Acetoxy, Methyl, Methoxy und Halogenmethoxy, vorliegen können.

14. Verfahren zum Kontrollieren von ungewollten Pflanzen, welches das Aufbringen einer Zusammensetzung nach einem Ansprüche 1 bis 12 auf Samen, Pflanzen oder ein Wachstumsmedium dafür umfaßt.

15. Verfahren zum Kontrollieren von ungewollten Pflanzen, welches das Aufbringen einer Zusammensetzung nach Anspruch 13 auf Samen, Pflanzen oder ein Wachstumsmedium dafür umfaßt.

16. Verfahren zum Kontrollieren von ungewollten Pflanzen, welches das Aufbringen eines Safener, wie in einem der Ansprüche 1 bis 7 oder 9 bis 13 definiert, und eines landwirtschaftlich annehmbaren Trägers auf Samen, und das Aufbringen einer Zusammensetzung, die ein oder mehrere Herbizide, wie in einem der Ansprüche 1 bis 13 definiert, und einen landwirtschaftlich annehmbaren Träger umfaßt, vor dem Aufgehen auf das Wachstumsmedium für die Pflanzen.

## Revendications

1. Composition herbicide qui comprend :
(i) un ou plusieurs herbicides à base de phosphosulfonate de formule générale 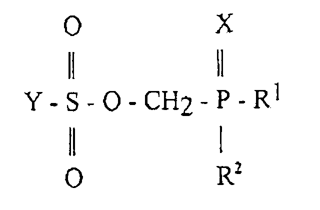 dans laquelle
(1) Y est choisi parmi phényle ; naphtyle ; benzyle ; cyclo-alkyle en C₅ à C₈ ; un noyau hétéro-aromatique à 5 chaînons ayant 1, 2, 3 ou 4 hétéro-atomes indépendamment choisis dans le groupe constitué par les atomes d'azote, d'oxygène, de soufre à condition que pas plus d'un hétéro-atome représente l'oxygène ou le soufre ; un noyau hétéro-aromatique à 6 chaînons ayant 1, 2 ou 3 atomes d'azote ; un noyau hétéro-aromatique à 5 ou 6 chaînons condensés ayant de 1 à 4 hétéro-atomes indépendamment choisis dans le groupe constitué par les atomes d'azote, d'oxygène et de soufre à condition que pas plus d'un hétéro-atome représente l'oxygène ou le soufre ; ou un noyau hétéromatique à 6,6 chaînons condensés ayant de 1 à 4 hétéro-atomes choisis dans le groupe constitué par les atomes d'azote, d'oxygène et de soufre, à condition que pas plus d'un hétéro-atome représente l'oxygène ou le soufre ;
où chacun desdits Y peut être substitué par jusqu'à 3 substituants choisis chacun indépendamment parmi les halo, cyano, nitro, alcoxy, haloalcoxy, alkyle, haloalkyle, phényle, alkylcarbonyloxy, dialkylcarbamoyle, alkylthio, haloalkylthio, arylthio, aryloxy, formyle, alkylcarbonyle, arylcarbonyle, dialkylamino, méthoxyméthyle, méthylthiométhyle, et alcoxycarbonyle à condition que
(a) il y ait au plus un desdits substituants sur ledit Y lorsque Y est un noyau thiadiazolyle ou un noyau tétrazolyle,
(b) il y ait au plus deux desdits substituants lorsque Y est un noyau triazolyle, un noyau thiazolyle, ou un noyau isothiazolyle, et
(c) lorsque Y est un phényle, naphtyle ou benzyle, il peut y avoir 1 à 5 desdits substituants décrits ci-dessus,
(2) X représente un atome d'oxygène ou de soufre et
(3) R¹ et R² sont chacun indépendamment choisis parmi les alkyle, alcoxy, alkylthio, alcényloxy, alcynyloxy, haloalcoxy, cyanoalcoxy, alcoxyalcoxy, cycloalcoxy, cycloalkylalcoxy, alkylidèneiminooxy, chloro et amino avec un ou deux substituants choisis dans le groupe constitué par les alkyle, alcényle et phényle, à condition qu'il n'y ait pas plus d'un groupe phényle sur le groupe amino, et à conditions que R¹ puisse être choisi additionnellement parmi les phényle et phénoxy ; et à condition que lorsque R¹ et R² représentent tous deux un alcoxy, R¹ et R² peuvent ensemble avec l'atome de phosphore former un noyau à 6 chaînons contenant un oxygène ; et à condition que lorsque R¹ et R² représentent tous deux un alcoxy, Y n'est pas un phényle, 4-méthylphényle, 4-chlorophényle, 4-bromophényle ou 3-nitrophényle ;
(ii) un désinfectant ("safener") dichloroacétamide de formule générale 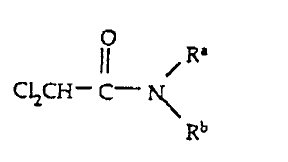 dans laquelle
R^{a} et R^{b} sont l'un et l'autre indépendamment choisis parmi les alkyle, alcényle ou alkyle ou alcényle substitué par halo, ou R^{a} et R^{b} ensemble avec l'atome d'azote avec lequel ils sont attachés forment un noyau hétérocyclique à 5 ou 6 chaînons substitué choisi dans le groupe constitué par 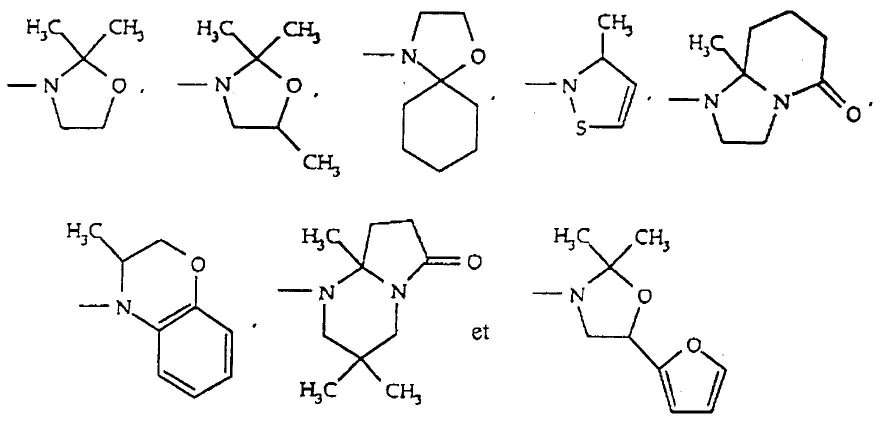 et (iii) un support agronomiquement acceptable.

2. Composition selon la revendication 1, dans laquelle : chaque Y peut être substitué par jusqu'à 3 substituants choisis chacun indépendamment parmi les halo, cyano, nitro, alcoxy en C₁ à C₆, halo-alcoxy en C₁ à C₄, alkyle en C₁ à C₆, halo-alkyle en C₁ à C₄, phényle, alkyle en C₁ à C₄-carbonyloxy, di-alkyle en C₁ à C₄-carbamoyle, alkylthio en C₁ à C₆, halo-alkylthio en C₁ à C₄, arylthio, aryloxy, formyle, alkyle en C₁ à C₄-carbonyle, arylcarbonyle, di(alkyle en C₁ à C₄)amino, méthoxyméthyle, méthylthiométhyle et alcoxy en C₁ à C₄-carbonyle.
R¹ et R² sont l'un et l'autre indépendamment choisis parmi les alkyle en C₁ à C₆, alcoxy en C₁ à C₆, halo-alcoxy en C₂ à C₄, alkylthio en C₁ à C₄ alcényloxy en C₃ à C₄, alcynyloxy en C₃ à C₄, alcoxy en C₁ à C₄-alcoxy en C₁ à C₄, cycloalcoxyloxy en C₄ à C₈, cycloalkyle en C₃ à C₅-alcoxy en C₁ à C₃, cyano-alcoxy en C₁ à C₄, alkylidène en C₂ à C₄-iminooxy, chloro- et aminosubstitué par un ou deux substituants choisis parmi les alkyle en C₁ à C₄, alcényle en C₂ à C₄ et phényle ; à condition qu'il n'y ait pas plus d'un groupe phényle sur le groupe amino ; et à condition que R¹ puisse en outre être choisi parmi les phényle ou phénoxy ; et à condition que lorsque R¹ et R² représentent tous deux un alcoxy, R¹ et R² puissent ensemble avec l'atome de phosphore former un noyau à 6 chaînons contenant de l'oxygène ; et
R^{a} et R^{b} sont l'un et l'autre choisis indépendamment parmi les alkyle en C₂ à C₄, alcényle en C₃ à C₄, alkyle en C₂ à C₄ ou alcényle en C₂ à C₄ substitués par un halogène, ou R^{a} et R^{b} avec l'atome d'azote auquel ils sont attachés forment la partie hétérocyclique à 5 chaînons

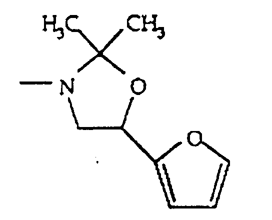

3. Composition selon la revendication 2, dans laquelle :
Y est un phényle ayant jusqu'à 3 substituants, dont l'un est en position ortho, indépendamment choisi parmi les halo, cyano, nitro, alcoxy en C₁ à C₆, halo-alcoxy en C₁ à C₄, alkyle en C₁ à C₆, halo-alcoxy en C₁ à C₄, phényle, alkyle en C₁ à C₄-carbonyloxy, di-alkyle en C₁ à C₄-carbamoyle, alkylthio en C₁ à C₅, halo-alkylthio en C₁ à C₄, arylthio, aryloxy, formyle, alkyle en C₁ à C₄-carbonyle, arylcarbonyle, dialkylamino en C₁ à C₄ et alcoxy en C₁ à C₄-carbonyle ;
X est un atome d'oxygène ;
R¹ et R² sont l'un et l'autre indépendamment choisis parmi les alkyle en C₁ à C₂ et alcoxy en C₁ à C₄ ; à condition que R¹ et R² ne représentent pas tous deux un alkyle ; et
R^{a} et R^{b} sont l'un et l'autre choisis indépendamment parmi les éthyle, n-propyle, allyle, ou éthyle, n-propyle ou allyle substitués par un chloro, ou R^{a} et R^{b} ensemble avec l'atome d'azote auquel ils sont attachés forment la partie hétérocyclique à 5 chaînons

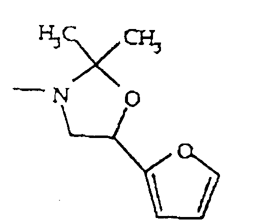

4. Composition selon la revendication 3, dans laquelle
Y est un phényle, monosubstitué dans sa position ortho, ledit substituant étant indépendamment choisi parmi les chloro, bromo, éthyle, éthoxy, n-propoxy, trifluorométhyle, pentafluoroéthyle, méthylthio, éthylthio et trifluorométhylthio ;
R¹ est choisi parmi les méthoxy, éthoxy, isopropyloxy, méthyle et éthyle ;
R² est choisi parmi les éthoxy et isopropyloxy ; et
R^{a} et R^{b} représentent chacun indépendamment un allyle, 3,3-dichloroallyle, ou R^{a} et R^{b} ensemble avec l'atome d'azote auquel ils sont attachés forment la partie hétérocyclique à 5 chaînons

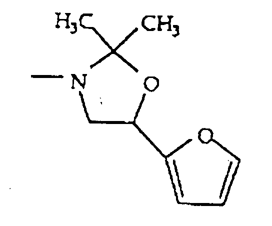

5. Composition selon la revendication 3 dans laquelle,
Y est un phényle substitué dans sa position ortho, le substituant étant indépendantment choisi parmi les chloro, bromo, trifluorométhoxy, trifluorométhylthio, méthylthio, éthylthio et trifluorométhyle ; et a un second substituant dans sa seconde position ortho choisi parmi les chloro, bromo, méthyle, éthyle, isopropyle, méthoxy, éthoxy, trifluorométhyle, difluorométhyle, difluorométhoxy, trifluorométhylthio, méthylthio, éthylthio, pentafluoroéthyle, fluoro et trifluorométhoxy ;
R¹ est choisi parmi les méthoxy, éthoxy, isopropyloxy, méthyle et éthyle ;
R² est choisi parmi les éthoxy et isopropyloxy ; et
R^{a} et R^{b} représentent chacun indépendamment un allyle, 3,3-dichloroallyle, ou R^{a} et R^{b} ensemble avec l'atome d'azote auquel ils sont attachés forment la partie hétérocyclique à 5 chaînons

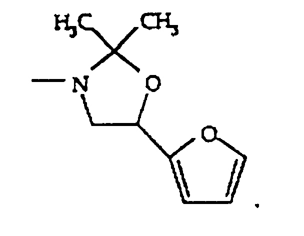

6. Composition selon la revendication 3 dans laquelle :
Y est un phényle substitué par un fluoro, chloro ou bromo dans les deux positions ortho et par un méthyle ou un éthyle dans en position méta ;
R¹ est choisi parmi méthoxy, éthoxy, isopropyloxy, méthyle et éthyle ;
R² est choisi parmi éthoxy et isopropyloxy ; et
R^{a} et R^{b} représentent chacun indépendamment un allyle, 3,3-dichloroallyle, ou R^{a} et R^{b} ensemble avec l'atome d'azote auquel ils sont attachés forment la partie hétérocyclique à 5 chaînons

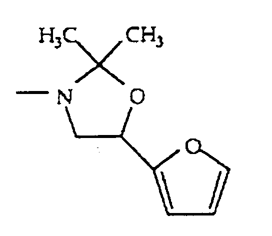

7. Composition selon la revendication 3, dans laquelle :
Y représente un 2-chlorophényle, 2-bromophényle, 2,5-dichlorophényle, 2,6-dichlorophényle, 2-trifluorométhylphényle, 2-chloro-6-isopropylphényle, 2-chloro-6-méthylphényle, 2-méthyl-6-trifluorométhylphényle, 2-méthoxy-6-trifluorométhylphényle, 2-trifluorométhoxyphényle, 2-méthylthiophényle, 2-éthylthiophényle, 2-trifluorométhylthiophényle, 2-trifluorométhyl-6-fluorophényle, 2-trifluorométhyl-6-éthylphényle, 2-trifluorométhyl-4-fluorophényle, 2-trifluorométhyl-6-éthoxyphényle, 2,5-difluorophényle, 2-trifluorométhoxy-6-fluorophényle, 2-trifluorométhyl-6-méthylthiophényle, 2-trifluorométhyl-6-éthylthiophényle, 2-trifluorométhylthio-4-fluorophényle, 2-trifluorométhylthio-6-méthylphényle, 2-trifluorométhylthio-6-chlorophényle, 2-trifluorométhylthio-6-éthylphényle, 2-trifluorométhylthio-6-fluorophényle, 2-méthyl-6-méthylthiophényle, 2-éthyl-6-méthylthiophényle, 2-fluoro-6-méthylthiophényle, 2-méthyl-6-éthylthiophényle, 2-éthyl-6-éthylthiophényle, 2-chloro-6-méthylthiophényle, 2-fluor-6-éthylthiophényle, 2-méthyl-3,6-difluorophényle, 2,4,6-trifluorophényle, 2,6-dichloro-3-méthylphényle, 2-pentafluoroéthylphényle, 2-trifluorométhoxy-6-éthylphényle, 2-fluoro-6-méthylthiophényle, 2-chloro-6-éthylthiophényle, 2-fluoro-6-éthylthiophényle, 2-fluoro-6-éthylphényle, ou 2-éthyl-3,6-difluorophényle.
R¹ est choisi parmi les méthoxy, éthoxy, isopropyloxy, méthyle et éthyle ;
R² est choisi parmi les éthoxy et isopropyloxy ; et
R^{a} et R^{b} représentent chacun indépendamment un allyle, 3,3-dichloroallyle, ou R^{a} et R^{b} ensemble avec l'atome d'azote auquel ils sont attachés forment la partie hétérocyclique à 5 chaînons

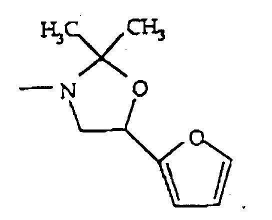

8. Composition selon la revendication 7, qui comprend un ou plusieurs des composés herbicides choisis parmi les suivants :
O-isopropyl P-éthyl[[(2-chloro-6-méthylphényl)sulfonyloxy]méthyl]phosphinate ;
O-isopropyl P-méthyl [[(2-chloro-6-méthylphényl)sulfonyloxy]méthyl]phosphinate ;
O,O-diisopropyl [[(2-chloro-6-méthylphényl)sulfonyloxy]méthyl]phosphonate ;
O-isopropyl O-éthyl [[(2-chloro-6-méthylphényl)sulfonyloxy]méthyl]phosphonate ;
O-isopropyl O-méthyl [[(2-chloro-6-méthylphényl)sulfonyloxy]méthyl]phosphonate ;
O-éthyl P-éthyl [[(2-chloro-6-méthylphényl)sulfonyloxy]méthyl]phosphinate ;
O-éthyl P-méthyl [[(2-chloro-6-méthylphényl)sulfonyloxy]méthyl]phosphinate ;
O-diéthyl [[(2-chloro-6-méthylphényl)sulfonyloxy]méthyl]phosphonate ;
O-éthyl O-méthyl [[(2-chloro-6-méthylphényl)sulfonyloxy]méthyl]phosphonate ;
O-isopropyl P-éthyl [[(2-chloro-6-isopropylphényl)sulfonyloxy]méthyl]phosphinate ;
O-isopropyl P-méthyl [[(2-chloro-6-isopropylphényl)sulfonyloxy]méthyl]phosphinate ;
O-isopropyl O-éthyl [[(2-chloro-6-isopropylphényl)sulfonyloxy]méthyl]phosphonate ;
O-isopropyl O-méthyl [[(2-chloro-6-isopropylphényl)sulfonyloxy]méthyl]phosphonate ;
O,O-diéthyl [[(2-chloro-6-isopropylphényl)sulfonyloxy]méthyl]phosphonate ;
O,O-diisopropyl [[(2-chloro-6-isopropylphényl)sulfonyloxy]méthyl]phosphonate ;
O-éthyl P-méthyl [[(2-chloro-6-isopropylphényl)sulfonyloxy]méthyl]phosphinate ;
O-isopropyl P-éthyl [[(2-chlorophényl)sulfonyloxy]méthyl]phosphinate ;
O-isopropyl P-méthyl [[(2-chlorophényl)sulfonyloxy]méthyl]phosphinate ;
O-isopropyl O-éthyl [[(2-chlorophényl)sulfonyloxy]méthyl]phosphonate ;
O-isopropyl O-méthyl [[(2-chlorophényl)sulfonyloxy]méthyl]phosphonate ;
O,O-diéthyl [[(2-chlorophényl)sulfonyloxy]méthyl]phosphonate ;
O,O-diisopropyl [[(2-chlorophényl)sulfonyloxy]méthyl]phosphonate ;
O-isopropyl P-éthyl [[(2-(trifluorométhyl)phényl)sulfonyloxy]méthyl]phosphinate ;
O-isopropyl P-méthyl [[(2-(trifluorométhyl)phényl)sulfonyloxy]méthyl]phosphinate ;
O-isopropyl O-éthyl [[(2-(trifluorométhyl)phényl)sulfonyloxy]méthyl]phosphonate ;
O-isopropyl O-méthyl [[(2-(trifluorométhyl)phényl)sulfonyloxy]méthyl]phosphonate ;
O,O-diéthyl [[(2-(trifluorométhyl)phényl)sulfonyloxy]méthyl]phosphonate ;
O,O-diisopropyl [[(2-(trifluorométhyl)phényl)sulfonyloxy]méthyl]phosphonate ;
O-isopropyl P-éthyl [[(2-(trifluorométhyl)-6-méthylphényl)sulfonyloxy]méthyl]phosphinate ;
O-isopropyl P-méthyl [[(2-(trifluorométhyl)-6-méthylphényl)sulfonyloxy]méthyl]phosphinate ;
O-isopropyl O-éthyl [[(2-(trifluorométhyl)-6-méthylphényl)sulfonyloxy]méthyl]phosphonate ;
O-isopropyl O-méthyl [[(2-(trifluorométhyl)-6-méthylphényl)sulfonyloxy]méthyl]phosphonate ;
O-isopropyl P-éthyl [[(2-méthoxy-6-(trifluorométhyl)phényl)sulfonyloxy]méthyl]phosphinate ;
O,O-diisopropyl [[(2-méthoxy-6-(trifluorométhyl)phényl)sulfonyloxy]méthyl]phosphonate ;
O-isopropyl O-méthyl [[(2-(trifluorométhyl)-6-éthylphényl)sulfonyloxy]méthyl]phosphonate ;
O-isopropyl P-méthyl [[(2-méthoxy-6-(trifluorométhyl)phényl)sulfonyloxy]méthyl]phosphinate ;
O-isopropyl O-éthyl [[(2-méthoxy-6-(trifluorométhyl)phénylsulfonyloxy]méthyl]phosphonate ;
O-isopropyl O-méthyl [[(2-méthoxy-6-(trifluorométhyl)phényl)sulfonyloxy]méthyl]phosphonate ;
O-isopropyl P-éthyl [[(2,6-dichlorophényl)sulfonyloxy]méthyl]phosphinate ;
O-isopropyl P-méthyl [[(2,6-dichlorophényl)sulfonyloxy]méthyl]phosphinate ;
O,O-diisopropyl [[(2,6-dichlorophényl)sulfonyloxy]méthyl]phosphonate ;
O-isopropyl O-éthyl [[(2,6-dichlorophényl)sulfonyloxy]méthyl]phosphonate ;
O-isopropyl O-méthyl [[(2,6-dichlorophényl)sulfonyloxy]méthyl]phosphonate ;
O,O-diéthyl [[(2,6-dichlorophényl)sulfonyloxy]méthyl]phosphonate ;
O,O-diéthyl [[(2,5-dichlorophényl)sulfonyloxy]méthyl]phosphonate ;
O,O-diisopropyl [[(2,5-dichlorophényl)sulfonyloxy]méthyl]phosphonate ;
O-isopropy P-éthyl [[(2,5-dichlorophényl)sulfonyloxy]méthyl]phosphinate ;
O-isopropyl P-méthyl [[(2,5-dichlorophényl)sulfonyloxy]méthyl]phosphinate ;
O-isopropyl O-éthyl [[(2,5-dichlorophényl)sulfonyloxy]méthyl]phosphonate ;
O-isopropyl O-méthyl [[(2,5-dichlorophényl)sulfonyloxy]méthyl]phosphonate ;
O,O-diéthyl[[(2-méthyl-6-(trifluorométhyl)phényl)sulfonyloxy]méthyl]phosphonate ;
O,O-diisopropyl[[(2-méthyl-6-(trifluorométhyl)phényl)sulfonyloxy]méthyl]phosphonate ;
O,O-diéthyl[[(2-(trifluorométhyl)-6-méthoxyphényl)sulfonyloxy]méthyl]phosphonate ;
O-isopropyl P-méthyl [[(2-(trifluorométhyl)-6-éthylphényl)sulfonyloxy]méthyl]phosphinate ;
O-isopropyl P-éthyl [[(2-(trifluorométhyl)-6-éthylphényl)sulfonyloxy]méthyl]phosphinate ;
O-isopropyl O-éthyl [[(2-(trifluorométhyl)-6-éthylphényl)sulfonyloxy]méthyl]phosphonate ;
O,O-diisopropyl [[(2-(trifluorométhyl)-6-éthylphényl)sulfonyloxy]méthyl]phosphonate ;
O,O-diéthyl[[(2-(trifluorométhyl)-6-éthylphényl)sulfonyloxy]méthyl]phosphonate ;
O-isopropyl P-méthyl [[(2-(trifluorométhyl)-6-éthoxyphényl)sulfonyloxy]méthyl]phosphinate ;
O-isopropyl P-éthyl [[(2-(trifluorométhyl)-6-éthoxyphényl)sulfonyloxy]méthyl]phosphinate ;
O-isopropyl O-éthyl [[(2-(trifluorométhyl)-6-éthoxyphényl)sulfonyloxy]méthyl]phosphonate ;
O,O-diisopropyl [[(2-(trifluorométhyl)-6-éthoxyphényl)sulfonyloxy]méthyl]phosphonate ;
O,O-diéthyl [[(2-(trifluorométhyl)-6-éthoxyphényl)sulfonyloxy]méthyl]phosphonate ;
O-isopropyl O-méthyl [[(2-(trifluorométhyl)-6-éthoxyphényl)sulfonyloxy]méthyl]phosphonate ;
O-isopropyl P-méthyl [[(2-(trifluorométhyl)-6-fluorophényl)sulfonyloxy]méthyl]phosphinate ;
O-isopropyl P-éthyl [[(2-(trifluorométhyl)-6-fluorophényl)sulfonyloxy]méthyl]phosphinate ;
O-isopropyl O-éthyl [[(2-(trifluorométhyl)-6-fluorophényl)sulfonyloxy]méthyl]phosphonate ;
O,O-diisopropyl [[(2-(trifluorométhyl)-6-fluorophényl)sulfonyloxy]méthyl]phosphonate ;
O,O-diéthyl [[(2-(trifluorométhyl)-6-fluorophényl)sulfonyloxy]méthyl]phosphonate ;
O-isopropyl O-méthyl [[(2-(trifluorométhyl)-6-fluorophényl)sulfonyloxy]méthyl]phosphonate ;
O-isopropyl P-méthyl [[(2-trifluorométhoxyphényl)sulfonyloxy]méthyl]phosphinate ;
O-isopropyl P-éthyl [[(2-trifluorométhoxyphényl)sulfonyloxy]méthyl]phosphinate ;
O-isopropyl O-éthyl [[(2-trifluorométhoxyphényl)sulfonyloxy]méthyl]phosphonate ;
O,O-diisopropyl [[(2-trifluorométhoxyphényl)sulfonyloxy]méthyl]phosphonate ;
O,O-diéthyl [[(2-trifluorométhoxyphényl)sulfonyloxy]méthyl]phosphonate ;
O-isopropyl O-méthyl [[(2-trifluorométhoxyphényl)sulfonyloxy]méthyl]phosphonate ;
O-isopropyl P-méthyl [[(2-(pentafluoroéthyl)phényl)sulfonyloxy]méthyl]phosphinate ;
O-isopropyl P-éthyl [[(2-(pentafluoroéthyl)phényl)sulfonyloxy]méthyl]phosphinate ;
O-isopropyl O-éthyl [[(2-(pentafluoroéthyl)phényl)sulfonyloxy]méthyl]phosphonate ;
O,O-diisopropyl [[(2-(pentafluoroéthyl)phényl)sulfonyloxy]méthyl]phosphonate ;
O,O-diéthyl [[(2-(pentafluoroéthyl)phényl)sulfonyloxy]méthyl]phosphonate ;
O-isopropylO-méthyl [[(2-(pentafluoroéthyl)phényl)sulfonyloxy]méthyl] phosphonate ;
O-isopropyl P-méthyl [[(2-méthylthiophényl)sulfonyloxy]méthyl]phosphinate ;
O-isopropyl P-éthyl [[(2-méthylthiophényl)sulfonyloxy]méthyl]phosphinate ;
O-isopropyl O-éthyl [[(2-méthylthiophényl)sulfonyloxy]méthyl]phosphonate ;
O,O-diisopropyl [[(2-méthylthiophényl)sulfonyloxy]méthyl]phosphonate ;
O,O-diéthyl [[(2-méthylthiophényl)sulfonyloxy]méthyl]phosphonate ;
O-isopropyl O-méthyl [[(2-(méthylthiophényl)sulfonyloxy]méthyl]phosphonate ;
O-isopropyl P-méthyl [[(2-éthylthiophényl)sulfonyloxy]méthyl]phosphinate ;
O-isopropyl P-éthyl [[(2-éthylthiophényl)sulfonyloxy]méthyl]phosphinate ;
O-isopropyl O-éthyl [[(2-éthylthiophényl)sulfonyloxy]méthyl]phosphonate ;
O,O-diisopropyl [[(2-éthylthiophényl)sulfonyloxy]méthyl]phosphonate ;
O,O-diéthyl [[(2-éthylthiophényl)sulfonyloxy]méthyl]phosphonate ;
O-isopropyl O-méthyl [[(2-(éthylthiophényl)sulfonyloxy]méthyl]phosphonate ;
O-isopropyl P-méthyl [[(2-trifluorométhylthiophényl)sulfonyloxy]méthyl]phosphinate ;
O-isopropyl P-éthyl [[(2-trifluorométhylthiophényl)sulfonyloxy]méthyl]phosphinate ;
O-isopropyl O-éthyl [[(2-trifluorométhylthiophényl)sulfonyloxy]méthyl]phosphonate ;
O,O-diisopropyl [[(2-trifluorométhylthiophényl)sulfonyloxy]méthyl]phosphonate ;
O,O-diéthyl [[(2-trifluorométhylthiophényl)sulfonyloxy]méthyl]phosphonate ;
O-isopropyl O-méthyl [[(2-(trifluorométhylthiophényl)sulfonyloxy]méthyl]phosphonate ;
O-isopropyl P-méthyl [[(2,5-difluorophényl)sulfonyloxy]méthyl]phosphinate ;
O-isopropyl P-éthyl [[(2,5-difluorophényl)sulfonyloxy]méthyl]phosphinate ;
O-isopropyl O-éthyl [[(2,5-difluorophényl)sulfonyloxy]méthyl]phosphonate ;
O,O-diisopropyl [[(2,5-difluorophényl)sulfonyloxy]méthyl]phosphonate ;
O,O-diéthyl [[(2,5-difluorophényl)sulfonyloxy]méthyl]phosphonate ;
O-isopropyl O-méthyl [[(2,5-difluorophényl)sulfonyloxy]méthyl]phosphonate ;
O-isopropyl P-méthyl [[(2-(trifluorométhoxy)-6-fluorophényl)sulfonyloxy]méthyl]phosphinate ;
O-isopropyl P-éthyl [[(2-(trifluorométhoxy)-6-fluorophényl)sulfonyloxy]méthyl]phosphinate ;
O-isopropyl O-éthyl [[(2-(trifluorométhoxy)-6-fluorophényl)sulfonyloxy]méthyl]phosphonate ;
O,O-diisopropyl [[(2-(trifluorométhoxy)-6-fluorophényl)sulfonyloxy]méthyl]phosphonate ;
O,O-diéthyl [[(2-(trifluorométhoxy)-6-fluorophényl)sulfonyloxy]méthyl]phosphonate ;
O-isopropyl O-méthyl [[(2-(trifluorométhoxy)-6-fluorophényl)sulfonyloxy]méthyl]phosphonate ;
O-isopropyl P-méthyl [[(2-(trifluorométhoxy)-6-éthylphényl)sulfonyloxy]méthyl]phosphinate ;
O-isopropyl P-éthyl [[(2-(trifluorométhoxy)-6-éthylphényl)sulfonyloxy]méthyl]phosphinate ;
O-isopropyl O-éthyl [[(2-(trifluorométhoxy)-6-éthylphényl)sulfonyloxy]méthyl]phosphonate ;
O,O-diisopropyl [[(2-(trifluorométhoxy)-6-éthylphényl)sulfonyloxy]méthyl]phosphonate ;
O,O-diéthyl [[(2-(trifluorométhoxy)-6-éthylphényl)sulfonyloxy]méthyl]phosphonate ;
O-isopropyl O-méthyl [[(2-(trifluorométhoxy)-6-éthylphényl)sulfonyloxy]méthyl]phosphonate ;
O-isopropyl P-méthyl [[(2-(trifluorométhyl)-6-méthylthiophényl)sulfonyloxy]méthyl]phosphinate ;
O-isopropyl P-éthyl [[(2-(trifluorométhyl)-6-méthylthiophényl)sulfonyloxy]méthyl]phosphinate ;
O-isopropyl O-éthyl [[(2-(trifluorométhyl)-6-méthylthiophényl)sulfonyloxy]méthyl]phosphonate ;
O,O-diisopropyl [[(2-(trifluorométhyl)-6-méthylthiophényl)sulfonyloxy]méthyl]phosphonate ;
O,O-diéthyl [[(2-(trifluorométhyl)-6-méthylthiophényl)sulfonyloxy]méthyl]phosphonate ;
O-isopropyl O-méthyl [[(2-(trifluorométhyl)-6-méthylthiophényl)sulfonyloxy]méthyl]phosphonate ;
O-isopropyl P-méthyl [[(2-(trifluorométhyl)-6-méthylthiophényl)sulfonyloxy]méthyl]phosphinate ;
O-isopropyl P-éthyl [[(2-(trifluorométhyl)-6-éthylthiophényl)sulfonyloxy]méthyl]phosphinate ;
O-isopropyl O-éthyl [[(2-(trifluorométhyl)-6-éthylthiophényl)sulfonyloxy]méthyl]phosphinate ;
O,O-diisopropyl [[(2-(trifluorométhyl)-6-éthylthiophényl)sulfonyloxy]méthyl]phosphonate ;
O,O-diéthyl [[(2-(trifluorométhyl)-6-éthylthiophényl)sulfonyloxy]méthyl]phosphonate ;
O-isopropyl O-méthyl [[(2-(trifluorométhyl)-6-éthylthiophényl)sulfonyloxy]méthyl]phosphonate ;
O-isopropyl P-méthyl [[(2-(trifluorométhylthio)-4-fluorophényl)sulfonyloxy]méthyl]phosphinate ;
O-isopropyl P-éthyl [[(2-(trifluorométhylthio)-4-fluorophényl)sulfonyloxy]méthyl]phosphinate ;
O-isopropyl O-éthyl [[(2-(trifluorométhylthio)-4-fluorophényl)sulfonyloxy]méthyl]phosphonate ;
O,O-diisopropyl [[(2-(trifluorométhylthio)-4-fluorophényl)sulfonyloxy]méthyl]phosphonate ;
O,O-diéthyl [[(2-(trifluorométhylthio)-4-fluorophényl)sulfonyloxy]méthyl]phosphonate ;
O-isopropyl O-méthyl [[(2-(trifluorométhylthio)-4-fluorophényl)sulfonyloxy]méthyl]phosphonate ;
O-isopropyl P-méthyl [[(2-(trifluorométhylthio)-6-éthylphényl)sulfonyloxy]méthyl]phosphinate ;
O-isopropyl P-éthyl [[(2-(trifluorométhylthio)-6-éthylphényl)sulfonyloxy]méthyl]phosphinate ;
O-isopropyl O-éthyl [[(2-(trifluorométhylthio)-6-éthylphényl)sulfonyloxy]méthyl]phosphonate ;
O,O-diisopropyl [[(2-(trifluorométhylthio)-6-éthylphényl)sulfonyloxy]méthyl]phosphonate ;
O,O-diéthyl [[(2-(trifluorométhylthio)-6-éthylphényl)sulfonyloxy]méthyl]phosphonate ;
O-isopropyl O-méthyl [[(2-(trifluorométhylthio)-6-éthylphényl)sulfonyloxy]méthyl]phosphonate ;
O-isopropyl P-méthyl [[(2-(trifluorométhylthio)-6-méthylphényl)sulfonyloxy]méthyl]phosphinate ;
O-isopropyl P-éthyl [[(2-(trifluorométhylthio)-6-méthylphényl)sulfonyloxy]méthyl]phosphinate ;
O-isopropyl O-éthyl [[(2-(trifluorométhylthio)-6-méthylphényl)sulfonyloxy]méthyl]phosphonate ;
O,O-diisopropyl [[(2-(trifluorométhylthio)-6-méthylphényl)sulfonyloxy]méthyl]phosphonate ;
O,O-diéthyl [[(2-(trifluorométhylthio)-6-méthylphényl)sulfonyloxy]méthyl]phosphonate ;
O-isopropyl O-méthyl [[(2-(trifluorométhylthio)-6-méthylphényl)sulfonyloxy]méthyl]phosphonate ;
O-isopropyl P-méthyl [[(2-(trifluorométhylthio)-6-chlororophényl)sulfonyloxy]méthyl]phosphinate ;
O-isopropyl P-éthyl [[(2-(trifluorométhylthio)-6-chlororophényl)sulfonyloxy]méthyl]phosphinate ;
O-isopropyl O-éthyl [[(2-(trifluorométhylthio)-6-chlorophényl)sulfonyloxy]méthyl]phosphonate ;
O,O-diisopropyl [[(2-(trifluorométhylthio)-6-chlorophényl)sulfonyloxy]méthyl] phosphonate ;
O,O-diéthyl [[(2-(trifluorométhylthio)-6-chlorophényl)sulfonyloxy]méthyl]phosphonate ;
O-isopropyl O-méthyl [[(2-(trifluorométhylthio)-6-chlorophényl)sulfonyloxy]méthyl]phosphonate ;
O-isopropyl P-méthyl [[(2-(trifluorométhyl)-4-fluorophényl)sulfonyloxy]méthyl]phosphinate ;
O-isopropyl P-éthyl [[(2-(trifluorométhyl)-4-fluorophényl)sulfonyloxy]méthyl]phosphinate ;
O-isopropyl O-éthyl [[(2-(trifluorométhyl)-4-fluorophényl)sulfonyloxy]méthyl]phosphonate ;
O,O-diisopropyl [[(2-(trifluorométhyl)-4-fluorophényl)sulfonyloxy]méthyl]phosphonate ;
O,O-diéthyl [[(2-(trifluorométhyl)-4-fluorophényl)sulfonyloxy]méthyl]phosphonate ;
O-isopropyl O-méthyl [[(2-(trifluorométhyl)-4-fluorophényl)sulfonyloxy]méthyl]phosphonate ;
O-isopropyl P-méthyl [[(2-(trifluorométhylthio)-6-fluorophényl)sulfonyloxy]méthyl]phosphinate ;
O-isopropyl P-éthyl [[(2-(trifluorométhylthio)-6-fluorophényl)sulfonyloxy]méthyl]phosphinate ;
O-isopropyl O-éthyl [[(2-(trifluorométhylthio)-6-fluorophényl)sulfonyloxy]méthyl]phosphonate ;
O,O-diisopropyl [[(2-(trifluorométhylthio)-6-fluorophényl)sulfonyloxy]méthyl]phosphonate ;
O,O-diéthyl [[(2-(trifluorométhylthio)-6-fluorophényl)sulfonyloxy]méthyl]phosphonate ;
O-isopropyl O-méthyl [[(2-(trifluorométhylthio)-6-fluorophényl)sulfonyloxy]méthyl]phosphonate ;
O-isopropyl P-méthyl [[(2-méthyl-6-méthylthiophényl)sulfonyloxy]méthyl]phosphinate ;
O-isopropyl P-éthyl [[(2-méthyl-6-méthylthiothiophényl)sulfonyloxy]méthyl]phosphinate ;
O-isopropyl O-éthyl [[(2-méthyl-6-méthylthiophényl)sulfonyloxy]méthyl]phosphonate ;
O,O-diisopropyl [[(2-méthyl-6-méthylthiophényl)sulfonyloxy]méthyl]phosphonate ;
O,O-diéthyl [[(2-méthyl-6-méthylthiophényl)sulfonyloxy]méthyl]phosphonate ;
O-isopropyl O-méthyl [[(2-méthyl-6-méthylthiophényl)sulfonyloxy]méthyl]phosphonate ;
O-isopropyl P-méthyl [[(2-éthyl-6-méthylthiophényl)sulfonyloxy]méthyl]phosphinate ;
O-isopropyl P-éthyl [[(2-éthyl-6-méthylthiothiophényl)sulfonyloxy]méthyl]phosphinate ;
O-isopropyl O-éthyl [[(2-éthyl-6-méthylthiophényl)sulfonyloxy]méthyl]phosphonate ;
O,O-diisopropyl [[(2-éthyl-6-méthylthiophényl)sulfonyloxy]méthyl]phosphonate ;
O,O-diéthyl [[(2-éthyl-6-méthylthiophényl)sulfonyloxy]méthyl]phosphonate ;
O-isopropyl O-méthyl [[(2-éthyl-6-méthylthiophényl)sulfonyloxy]méthyl]phosphonate ;
O-isopropyl P-méthyl [[(2-fluoro-6-méthylthiophényl)sulfonyloxy]méthyl]phosphinate ;
O-isopropyl P-éthyl [[(2-fluoro-6-méthylthiothiophényl)sulfonyloxy]méthyl]phosphinate ;
O-isopropyl O-éthyl [[(2-fluoro-6-méthylthiophényl)sulfonyloxy]méthyl]phosphonate ;
O,O-diisopropyl [[(2-fluoro-6-méthylthiophényl)sulfonyloxy]méthyl]phosphonate ;
O,O-diéthyl [[(2-fluoro-6-méthylthiophényl)sulfonyloxy]méthyl]phosphonate ;
O-isopropyl O-méthyl [[(2-fluoro-6-méthylthiophényl)sulfonyloxy]méthyl]phosphonate ;
O-isopropyl P-méthyl [[(2-méthyl-6-éthylthiophényl)sulfonyloxy]méthyl]phosphinate ;
O-isopropyl P-éthyl [[(2-méthyl-6-éthylthiothiophényl)sulfonyloxy]méthyl]phosphinate ;
O-isopropyl O-éthyl [[(2-méthyl-6-éthylthiophényl)sulfonyloxy]méthyl]phosphonate ;
O,O-diisopropyl [[(2-méthyl-6-éthylthiophényl)sulfonyloxy]méthyl]phosphonate ;
O,O-diéthyl [[(2-méthyl-6-éthylthiophényl)sulfonyloxy]méthyl]phosphonate ;
O-isopropyl O-méthyl [[(2-méthyl-6-éthylthiophényl)sulfonyloxy]méthyl]phosphonate ;
O-isopropyl P-méthyl [[(2-éthyl-6-éthylthiophényl)sulfonyloxy]méthyl]phosphinate ;
O-isopropyl P-éthyl [[(2-éthyl-6-éthylthiothiophényl)sulfonyloxy]méthyl]phosphinate ;
O-isopropyl O-éthyl [[(2-éthyl-6-éthylthiophényl)sulfonyloxy]méthyl]phosphonate ;
O,O-diisopropyl [[(2-éthyl-6-éthylthiophényl)sulfonyloxy]méthyl]phosphonate ;
O,O-diéthyl [[(2-éthyl-6-éthylthiophényl)sulfonyloxy]méthyl]phosphonate ;
O-isopropyl O-méthyl [[(2-éthyl-6-éthylthiophényl)sulfonyloxy]méthyl]phosphonate ;
O-isopropyl P-méthyl [[(2-chloro-6-éthylthiophényl)sulfonyloxy]méthyl]phosphinate ;
O-isopropyl P-éthyl [[(2-chloro-6-éthylthiothiophényl)sulfonyloxy]méthyl]phosphinate ;
O-isopropyl O-éthyl [[(2-chloro-6-éthylthiophényl)sulfonyloxy]méthyl]phosphonate ;
O,O-diisopropyl [[(2-chloro-6-éthylthiophényl)sulfonyloxy]méthyl]phosphonate ;
O,O-diéthyl [[(2-chloro-6-éthylthiophényl)sulfonyloxy]méthyl]phosphonate ;
O-isopropyl O-méthyl [[(2-chloro-6-éthylthiophényl)sulfonyloxy]méthyl]phosphonate ;
O-isopropyl P-méthyl [[(2-fluoro-6-éthylthiophényl)sulfonyloxy]méthyl]phosphinate ;
O-isopropyl P-éthyl [[(2-fluoro-6-éthylthiothiophényl)sulfonyloxy]méthyl]phosphinate ;
O-isopropyl O-éthyl [[(2-fluoro-6-éthylthiophényl)sulfonyloxy]méthyl]phosphonate ;
O,O-diisopropyl [[(2-fluoro-6-éthylthiophényl)sulfonyloxy]méthyl]phosphonate ;
O,O-diéthyl [[(2-fluoro-6-éthylthiophényl)sulfonyloxy]méthyl]phosphonate ;
O-isopropyl O-méthyl [[(2-fluoro-6-éthylthiophényl)sulfonyloxy]méthyl]phosphonate ;
O-isopropyl P-méthyl [[(2-fluoro-6-éthylphényl)sulfonyloxy]méthyl]phosphinate ;
O-isopropyl P-éthyl [[(2-fluoro-6-éthylphényl)sulfonyloxy]méthyl]phosphinate ;
O-isopropyl O-éthyl [[(2-fluoro-6-éthylphényl)sulfonyloxy]méthyl]phosphonate ;
O,O-diisopropyl [[(2-fluoro-6-éthylphényl)sulfonyloxy]méthyl]phosphonate ;
O,O-diéthyl [[(2-fluoro-6-éthylphényl)sulfonyloxy]méthyl]phosphonate ;
O-isopropyl O-méthyl [[(2-fluoro-6-éthylphényl)sulfonyloxy]méthyl]phosphonate ;
O-isopropyl P-méthyl [[(2-méthyl-3,6-difluorophényl)sulfonyloxy]méthyl]phosphinate ;
O-isopropyl P-éthyl [[(2-méthyl-3,6-difluorophényl)sulfonyloxy]méthyl]phosphinate ;
O-isopropyl O-éthyl [[(2-méthyl-3,6-difluorophényl)sulfonyloxy]méthyl]phosphonate ;
O,O-diisopropyl [[(2-méthyl-3,6-difluorophényl)sulfonyloxy]méthyl]phosphonate ;
O,O-diéthyl [[(2-méthyl-3,6-difluorophényl)sulfonyloxy]méthyl]phosphonate ;
O-isopropyl O-méthyl [[(2-méthyl-3,6-difluorophényl)sulfonyloxy]méthyl]phosphonate ;
O-isopropyl P-méthyl [[(2-éthyl-3,6-difluorophényl)sulfonyloxy]méthyl]phosphinate ;
O-isopropyl P-éthyl [[(2-éthyl-3,6-difluorophényl)sulfonyloxy]méthyl]phosphinate ;
O-isopropyl O-éthyl [[(2-éthyl-3,6-difluorophényl)sulfonyloxy]méthyl]phosphonate ;
O,O-diisopropyl [[(2-éthyl-3,6-difluorophényl)sulfonyloxy]méthyl]phosphonate ;
O,O-diéthyl [[(2-éthyl-3,6-difluorophényl)sulfonyloxy]méthyl]phosphonate ;
O-isopropyl O-méthyl [[(2-éthyl-3,6-difluorophényl)sulfonyloxy]méthyl]phosphonate ;
O-isopropyl P-méthyl [[(2,4,6-trifluorophényl)sulfonyloxy]méthyl]phosphinate ;
O-isopropyl P-éthyl [[(2,4,6-trifluorophényl)sulfonyloxy]méthyl]phosphinate ;
O-isopropyl O-éthyl [[(2,4,6-trifluorophényl)sulfonyloxy]méthyl]phosphonate ;
O,O-diisopropyl [[(2,4,6-trifluorophényl)sulfonyloxy]méthyl]phosphonate ;
O,O-diéthyl [[(2,4,6-trifluorophényl)sulfonyloxy]méthyl]phosphonate ;
O-isopropyl O-méthyl [[(2,4,6-trifluorophényl)sulfonyloxy]méthyl]phosphonate ; et
un désinfectant ("safener") choisi parmi le N,N-diallyldichloroacétamide, le N,N-bis(3,3-dichloroallyl)dichloroacétamide et le furilazole.

9. Composition selon la revendication 2, dans laquelle :
Y est un substituant hétérocyclique à 5 chaînons non substitué ou substitué choisi parmi les thiényle, pyrazolyle, isoxazolyle, triazolyle, tétraazolyle, thiazolyle, isothiazolyle, pyrrolyle, thiadiazolyle, pyrimidinyle et imidazolyle ; et
R^{a} et R^{b} sont l'un et l'autre indépendamment choisis parmi les éthyle, n-propyle, allyle ou éthyle, n-propyle ou allyle substitués par chloro, ou R^{a} et
R^{b} ensemble avec l'atome d'azote avec lequel ils sont attachés forment la partie hétérocyclique à 5 chaînons

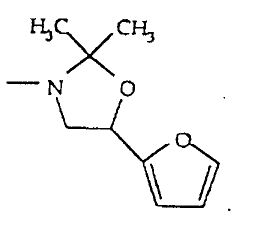

10. Composition selon la revendication 9 dans laquelle Y est choisi parmi pyrimidin-2-yle, pyrimidin-4-yle et pyrimidin-5-yle et R^{a} et R^{b} sont l'un et l'autre indépendamment choisis parmi les allyle, 3,3-dichloroallyle, ou R^{a} et R^{b} ensemble avec l'atome d'azote avec lequel ils sont attachés forment la partie hétérocyclique à 5 chaînons

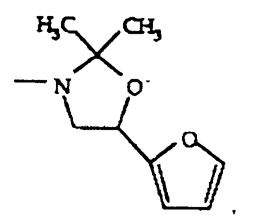

11. Composition selon la revendication 2, dans laquelle Y est un substituant hétéro-aromatique condensé à 5 ou 6 chaînons choisi parmi les indolyle, imidazol-pyridinyle, benzoimidazolyle, benzothiényle, benzothiazolyle, benzothiadiazolyle, benzotriazolyle, benzoxazolyle, et pyrazolopyrimidinyle ; et
R^{a} et R^{b} sont l'un et l'autre indépendamment choisis parmi les éthyle, n-propyle, allyle ou éthyle, n-propyle ou allyle substitués par un chloro, ou R^{a} et R^{b} ensemble avec l'atome d'azote avec lequel ils sont attachés forment la partie hétérocyclique à 5 chaînons

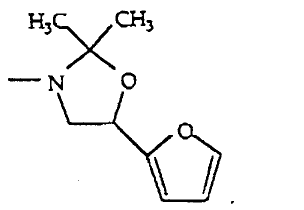

12. Composition selon la revendication 9, dans laquelle Y est un 5-chloro-1-méthyl-3-alkyle en C₁ à C₃-4-pyrazolyle ; R¹ est un isopropoxy ; R² est un méthyle, éthyle, méthoxy, ou éthoxy et de préférence R² est un méthyle ou un éthyle ; et et R^{a} et R^{b} sont l'un et l'autre indépendamment choisis parmi les allyle, 3,3-dichloroallyle ou R^{a} et R^{b} ensemble avec l'atome d'azote avec lequel ils sont attachés forment la partie hétérocyclique à 5 chaînons

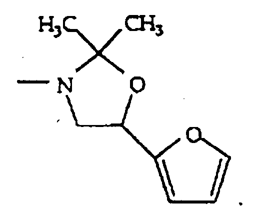

13. Composition selon la revendication 1, dans laquelle
Y est choisi parmi les phényle, naphtyle, benzyle, cycloalkyle en C₅ à C₈ ; un noyau hétéro-aromatique à 5 chaînons ayant 1, 2, 3 ou 4 hétéro-atomes indépendamment choisis dans le groupe constitué par les atomes d'azote, d'oxygène et de soufre à condition que pas plus d'un hétéréo-atome soit un oxygène ou un soufre ; un noyau hétéro-aromatique à 6 chaînons ayant 1, 2, ou 3 atomes d'azote ; un noyau hétéro-aromatique condensé à 5,6 chaînons ayant de 1 à 4 hétéro-atomes indépendamment choisis dans le groupe constitué par les atomes d'azote, d'oxygène ou de soufre, à condition que pas plus d'un hétéro-atome représente l'oxygène ou le soufre ; ou un noyau hétéro-aromatique condensé à 6,6 chaînons ayant de 1 à 4 hétéro-atomes indépendamment choisis dans le groupe constitué par les atomes d'azote, d'oxygène et de soufre à condition qu'au plus un hétéro-atome représente l'oxygène ou le soufre ;
où chacun desdits Y peut être substitué par jusqu'à 3 substituants choisis chacun indépendamment parmi les halo, cyano, nitro, alcoxy, halo-alcoxy, alkyle, haloalkyle, phényle, alkylcarbonyloxy, dialkylcarbamoyle, et alcoxycarbonyle, à condition que
(a) il y ait au plus l'un desdits substituants sur ledit Y lorsque Y est un noyau thiadiazolyle ou un noyau tétrazolyle,
(b) il y ait au plus deux desdits substitutants lorsque Y est un noyau triazaolyle, un noyau thiazolyle ou un noyau isothiazolyle, et
(c) lorsque Y est un phényle, naphtyle ou benzyle, il peut y avoir quatre ou cinq desdits substituants choisis parmi les halo, acétoxy, méthyle, méthoxy, et halométhoxy, mais pas plus de deux substituants sont choisis parmi les acétoxy, méthyle, méthoxy et halométhoxy.

14. Procédé de lutte contre les plantes indésirables dans lequel on applique aux semences, aux plantes ou aux milieux de croissance de ces plantes une composition selon l'une quelconque des revendications 1 à 12.

15. Procédé de lutte contre les plantes indésirables dans lequel on applique aux semences, aux plantes, ou au milieu de croissance des plantes une composition selon la revendication 13.

16. Procédé de lutte contre les plantes indésirables, dans lequel on applique aux semences une composition comprenant un désinfectant ("safener") telle que définie dans l'une quelconque des revendications 1 à 7 ou 9 à 13 et un support agronomiquement acceptable ; et une application de préémergence au milieu de croissance des plantes d'une composition comprenant un ou plusieurs herbicides selon l'une quelconque des revendications 1 à 13 et un support agronomiquement acceptable.
